(19) Europäisches Patentamt / European Patent Office / Office européen des brevets

(11) **EP 3 090 000 B1**

(12) **EUROPÄISCHE PATENTSCHRIFT**

(45) Veröffentlichungstag und Bekanntmachung des Hinweises auf die Patenterteilung:
**02.10.2019 Patentblatt 2019/40**

(21) Anmeldenummer: **14821209.5**

(22) Anmeldetag: **29.12.2014**

(51) Int Cl.:
***C08C 2/04*** (2006.01) ***B01J 31/24*** (2006.01)
***C08C 19/02*** (2006.01)

(86) Internationale Anmeldenummer:
**PCT/EP2014/079369**

(87) Internationale Veröffentlichungsnummer:
**WO 2015/101598 (09.07.2015 Gazette 2015/27)**

(54) **HYDRIERTER NITRILKAUTSCHUK ENTHALTEND PHOSPHAN- ODER DIPHOSPHANOXID**

HYDROGENATED NITRILE RUBBER CONTAINING PHOSPHINE OR DIPHOSPHANE OXIDE

CAOUTCHOUC AU NITRILE HYDROGÉNÉ CONTENANT DE L'OXYDE DE PHOSPHANE OU DE DIPHOSPHANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.12.2013 EP 13199843**

(43) Veröffentlichungstag der Anmeldung:
**09.11.2016 Patentblatt 2016/45**

(73) Patentinhaber: **ARLANXEO Deutschland GmbH**
**41540 Dormagen (DE)**

(72) Erfinder: **OBRECHT, Werner**
**47447 Moers (DE)**

(74) Vertreter: **Wichmann, Birgid**
**LANXESS Deutschland GmbH**
**LEX-IPR**
**Kennedyplatz 1**
**50569 Köln (DE)**

(56) Entgegenhaltungen:
**EP-A1- 2 072 532 EP-A1- 2 072 533**
**US-A- 5 244 965**

- **DATABASE WPI Week 200676 Thomson Scientific, London, GB; AN 2006-729178 XP002724942, & CN 1 763 107 A (NANTEX IND CO LTD) 26. April 2006 (2006-04-26)**
- **DATABASE WPI Week 200457 Thomson Scientific, London, GB; AN 2004-581445 XP002724943, & CN 1 483 744 A (NANDI CHEM IND CO LTD) 24. März 2004 (2004-03-24)**
- **DATABASE WPI Week 200425 Thomson Scientific, London, GB; AN 2004-258068 XP002724944, & CN 1 443 784 A (CHINA NAT PETROLEUM CORP) 24. September 2003 (2003-09-24)**
- **HUI WANG ET AL: "Homogeneous hydrogenation oart of nitrile butadiene rubber: a review", JOURNAL OF MACROMOLECULAR SCIENCE: PART C - POLYMER REVIEWS, TAYLOR & FRANCIS INC., PHILADELPHIA, PA, US, Bd. 53, 1. Januar 2013 (2013-01-01), Seiten 192-239, XP009178114, ISSN: 1532-1797**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 090 000 B1

## Beschreibung

Die Erfindung betrifft hydrierte Nitrilkautschuke, die entweder keinen oder einen reduzierten Gehalt an Phosphanen bzw. Diphosphanen aufweisen und zusätzlich Phosphanoxid bzw. Diphosphanoxid enthalten sowie einen speziellen Halogengehalt aufweisen, ein Verfahren zu ihrer Herstellung, vulkanisierbare Mischungen auf Basis der hydrierten Nitrilkautschuke sowie hierbei erhaltene Vulkanisate.

Nitrilkautschuke sind Co- und Terpolymere aus mindestens einem ungesättigten Nitril-Monomeren, mindestens einem konjugierten Dien und gegebenenfalls einem oder mehreren copolymerisierbaren Monomeren. Verfahren zur Herstellung von Nitrilkautschuk sowie Verfahren zur Hydrierung von Nitrilkautschuk in geeigneten organischen Lösungsmitteln sind aus der Literatur bekannt **(z.B.** Ullmann's Encyclopedia of Industrial Chemistry, VCH Verlagsgesellschaft, Weinheim, 1993, S. 255-261 sowie S. 320 - 324**).**

Unter hydriertem Nitrilkautschuk, abgekürzt "HNBR", werden Kautschuke verstanden, die aus Nitrilkautschuken, abgekürzt "NBR", durch Hydrierung erhalten werden. Entsprechend sind in HNBR die C=C Doppelbindungen der einpolymerisierten Dien-Einheiten ganz oder teilweise hydriert. Der Hydriergrad der einpolymerisierten Dien-Einheiten liegt üblicherweise in einem Bereich von 50 bis 100%. Von sogenannten "vollhydrierten Typen" wird in der Fachwelt bereits gesprochen, wenn der Restdoppelbindungsgehalt ("RDB") maximal bei ca. 0,9 % liegt. Die am Markt kommerziell erhältlichen HNBR Typen weisen üblicherweise eine Mooney-Viskosität (ML 1+4 bei 100°C) im Bereich von 10 bis 120 Mooney-Einheiten auf.

Hydrierter Nitrilkautschuk ist ein Spezialkautschuk, der über eine sehr gute Hitzebeständigkeit, eine hervorragende Beständigkeit gegen Ozon und Chemikalien sowie eine ausgezeichnete Ölbeständigkeit verfügt. Die vorgenannten physikalischen und chemischen Eigenschaften des HNBR gehen einher mit sehr guten mechanischen Eigenschaften, insbesondere einer hohen Abriebfestigkeit.

Aufgrund dieses Eigenschaftsprofils hat HNBR breite Verwendung in den verschiedensten Anwendungsgebieten gefunden. HNBR wird z.B. eingesetzt für Dichtungen, Schläuche, Riemen, Kabelmäntel, Walzenbeläge und Dämpfungselemente im Automobilsektor, ferner für Statoren, Bohrlochdichtungen und Ventildichtungen im Bereich der Ölförderung sowie für zahlreiche Teile der Luftfahrtindustrie, der Elektroindustrie, des Maschinen- und des Schiffsbaus.

Eine besondere Rolle spielen Vulkanisate des hydrierten Nitrilkautschuks mit hohem Modulniveau (gemessen als Spannungswert bei verschiedenen Dehnungen) sowie niedrigem Compression Set, insbesondere nach langen Lagerzeiten bei hohen Temperaturen. Diese Eigenschaftskombination ist wichtig in Einsatzgebieten, in denen für die Gewährleistung der Funktionsfähigkeit der Gummiartikel sowohl bei statischer als auch bei dynamischer Belastung auch nach langen Zeiten und gegebenenfalls hohen Temperaturen hohe Rückstellkräfte gefordert werden. Dies trifft insbesondere auf unterschiedliche Dichtungen wie O-Ringe, Flanschdichtungen, Wellendichtringe, Statoren in Rotor/ Statorpumpen, Ventilschaftdichtungen, Dichtungsmanschetten wie Achsmanschetten, Schlauchdichtungen, Motorlager, Brückenlager und Bohrlochdichtungen (blow-out-preventer) zu. Des Weiteren sind Vulkanisate mit hohem Modul wichtig z.B. für dynamisch belastete Artikel insbesondere für Riemen wie Antriebs- und Steuerriemen, wie z.B. Zahnriemen, und auch für Walzenbeläge.

Das bisher erreichte Niveau der mechanischen Eigenschaften von HNBR basierten Vulkanisaten, insbesondere in Bezug auf das Modulniveau und den Compression Set ist noch nicht zufriedenstellend.

Für die Hydrierung von Nitrilkautschuk mit homogen löslichen rhodium- und/oder rutheniumhaltigen Hydrierkatalysatoren hat sich der Zusatz von Phosphanen oder Diphosphanen als Co-Katalysator bewährt. Bevorzugt ist der Einsatz von Triphenylphosphan ("TPP"). Dieser Einsatz eines Cokatalysators hat eine Reihe positiver Auswirkungen: Möglich wird eine Reduktion des zur Hydrierung notwendigen Drucks, ferner kann eine Erhöhung der Hydriergeschwindigkeit (Raum/Zeit Ausbeute) und eine Reduktion der für die Hydrierung notwendigen Menge an Hydrierkatalysator erreicht werden. Andererseits haben Restmengen des im hydrierten Nitrilkautschuk verbleibenden Phosphans oder Diphosphans negative Auswirkungen auf die Vulkanisateigenschaften, insbesondere das Modulniveau und den Compression Set.

In DE 25 39 132 A wird ein Verfahren zur Hydrierung statistischer Acrylnitril/Butadien-Copolymerisate beschrieben. Für die Hydrierung wird die Komplexverbindung eines 1- oder 3-wertigen Rhodium-(I)-halogenids in Kombination mit 5 bis 25 Gew.% Triphenylphosphan verwendet, wobei in den Beispielen jeweils 10 phr Triphenylphosphan eingesetzt werden. In DE 25 39 132 A wird die Menge an Triphenylphosphan nicht variiert. Auch werden auf Basis der hydrierten Nitrilkautschuke keine Vulkanisate hergestellt und bzgl. der Eigenschaften charakterisiert. DE 25 39 132 A liefert keine Angaben über die Gehalte an Triphenylphosphan, die nach der Hydrierung im aufgearbeiteten hydrierten Nitrilkautschuk verbleiben. Nicht untersucht wird ferner, ob und wenn ja welchen Einfluss TPP auf die Eigenschaften, insbesondere das Modulniveau und den Compression Set hieraus hergestellter Vulkanisate hat. Es findet sich darüber hinaus keinerlei Anhaltspunkt zur Entfernung des bei der Hydrierung eingesetzten TPP.

In US-A-4,965,323 wird der Compression Set von HNBR basierten Vulkanisaten, die durch peroxidische Vulkanisation oder durch Schwefelvulkanisation erhalten werden, dadurch verbessert, dass der Nitrilkautschuk nach der Polymerisation oder nach der Hydrierung mit einer wässriger Alkalilösung oder der wässrigen Lösung eines Amins in

Kontakt gebracht wird. In Beispiel 1 werden Kautschukkrümel, die nach Entfernung des Lösungsmittels erhalten werden, in einem separaten Verfahrensschritt mit wässrigen Sodalösungen unterschiedlicher Konzentration gewaschen. Als Maß für den Alkaligehalt wird der pH-Wert einer wässrigen THF-Lösung herangezogen, die man erhält, indem man 3 g des Kautschuks in 100 ml THF löst und unter Rühren 1 ml Wasser zugibt. Der pH-Wert wird mittels einer Glaselektrode bei 20°C bestimmt. Für die Herstellung von Vulkanisaten des hydrierten Nitrilkautschuks mit niedrigem Compression Set soll der pH-Wert der wässrigen THF-Lösung > 5, bevorzugt > 5,5, besonders bevorzugt > 6 betragen. In US-A-4,965,323 gibt es keinen Hinweis zur Abhängigkeit des Compression Sets von der bei der Hydrierung eingesetzten TPP-Menge oder zur Verbesserung des Compression-Sets durch Entfernung von TPP nach der Hydrierung.

In US-A-4,503,196 wird ein Verfahren zur Hydrierung von Nitrilkautschuk unter Verwendung von Rhodium-Katalysatoren des Typs $(H)Rh(L)_3$ oder $(H)Rh(L)_4$ beschrieben. L stellt phosphan- oder arsanhaltige Liganden dar. Das Hydrierverfahren zeichnet sich dadurch aus, dass für die Hydrierung keine Zusätze der Liganden als Co-Katalysatoren erforderlich sind, wobei die Hydrierung bei relativ hohen Katalysatormengen (2,5 bis 40 Gew.%) erfolgt. Für die Isolierung des hydrierten Nitrilkautschuks aus der chlorbenzolischen Lösung wird die hydrierte Lösung abgekühlt und der Kautschuk durch Zugabe von Isopropanol koaguliert. In US-A-4,503,196 werden keine Angaben über die Vulkanisateigenschaften der bei diesem Verfahren resultierenden hydrierten Nitrilkautschuke gemacht. Aus diesem Grund liefert US-A-4,503,196 keine Lehre zur Herstellung von hydriertem Nitrilkautschuk, nach der Vulkanisate mit hohem Modulniveau und niedrigem Compression-Set erhalten werden.

In DE-OS-3 921 264 wird die Herstellung hydrierten Nitrilkautschuks beschrieben, der nach peroxidischer Vernetzung Vulkanisate mit niedrigem Compression Set liefert. Hierfür werden für die Hydrierung Rutheniumkatalysatoren unterschiedlichster chemischer Konstitution eingesetzt, wobei bei der Hydrierung ein Lösungsmittelgemisch aus einem $C_3$-$C_6$-Keton und einem sekundären oder tertiären $C_3$-$C_6$-Alkohol verwendet wird. Der Anteil des sekundären bzw. tertiären Alkohols im Lösungsmittelgemisch soll 2 bis 60 Gew.% betragen. Gemäß DE-OS-3 921 264 kann es während der Hydrierung oder bei der Abkühlung der hydrierten Lösung zur Bildung von zwei Phasen kommen. Als Folge werden die gewünschten Hydriergrade nicht erzielt und/oder der hydrierte Nitrilkautschuk vergelt während der Hydrierung. Das in DE-OS-3 921 264 beschriebene Verfahren ist nicht breit anwendbar, da die bei der Hydrierung stattfindende Phasentrennung und die Vergelung in unvorhersehbarer Weise von verschiedenen Parametern abhängt. Hierzu gehören der Acrylnitrilgehalt und die Molmasse des Nitrilkautschuk-Feedstocks, die Zusammensetzung des Lösungsmittelgemischs, der Feststoffgehalt der Polymerlösung bei der Hydrierung, der Hydriergrad sowie die Temperatur bei der Hydrierung. Auch bei der Abkühlung der Polymerlösung im Anschluss an die Hydrierung oder bei der Lagerung der Polymerlösung kann es zu einer unvorhergesehen Phasentrennung und zu einer Kontamination der entsprechenden Anlagenteile oder Behälter kommen.

In WO-A-2004/101671 wird gezeigt, dass hydrierter carboxylierter Nitril/Butadien-Kautschuk, der molekulardispers verteiltes TPP enthält, vorteilhaft als Vernetzer für Elastomere, Kunststoffe und als Klebstoffe eingesetzt werden kann. Auf der Basis von WO-A-2004/101671, in der explizit auf die Notwendigkeit der Anwesenheit von TPP hingewiesen wird, kann keine Lehre zur Verbesserung des Compression Sets sowie Moduli von Vulkanisaten abgeleitet werden.

In EP-A-1 894 946 wird ein Verfahren zum Metatheseabbau von NBR beschrieben, bei dem die Aktivität des Metathese-Katalysators durch TPP-Zusätze gesteigert wird. Bezogen auf den Metathese-Katalysator werden 0,01 bis 1 Äquivalente Phosphan wie z. B. TPP eingesetzt. Derart hergestellte Nitrilkautschuke mit verringertem Molekulargewicht können laut EP-A-1 894 946 unter Einsatz aus dem Stand der Technik bekannter Methoden hydriert werden. Als Katalysator kann dabei z.B. der Wilkinson Katalysator in Gegenwart von Co-Katalyatoren wie TPP eingesetzt werden. Angaben über die Vulkanisateigenschaften und deren Optimierung, insbesondere bezüglich des Niveaus von Modul und Compression-Set, der bei der Hydrierung erhaltenen hydrierten Nitrilkautschuke finden sich nicht.

Auch in EP-A-1 083 197 werden Maßnahmen zur Reduktion des Compression Sets von Vulkanisaten, die für die Herstellung von Walzenbelägen eingesetzt werden, beschrieben. Das Ziel wird erreicht, indem bei der Herstellung der Kautschukmischungen die Methacrylate mehrwertiger Alkohole z.B. Trimethylolpropantrimethacrylat eingesetzt werden. In EP-A-1 083 197 findet sich kein Hinweis zur Verbesserung des Compression Sets bzw. Moduli durch Eliminierung des durch Triphenylphosphan verursachten schädlichen Einflusses.

In EP-A-1 524 277 wird ein Ultrafiltrationsverfahren zur Entfernung niedermolekularer Bestandteile aus Kautschuken beschrieben. Hierzu werden die Kautschuke in einem organischen Lösungsmittel gelöst und einem Ultrafiltrationsverfahren ausgesetzt. Das Verfahren ist sowohl zur Entfernung von Emulgatorresten aus Nitrilkautschuk als auch zur Entfernung von Katalysatorresten aus hydriertem Nitrilkautschuk geeignet. Nach Beispiel 2 von EP-A-1 524 277 (Bayer) gelingt mit Hilfe dieser Methode eine Reduktion des Phosphorgehalts von hydriertem Nitrilkautschuk von 1300 mg/kg auf 120 mg/kg. In EP-A-1 524 277 werden keine Angaben darüber gemacht, ob durch dieses zudem wirtschaftlich aufwändige Verfahren eine Verbesserung des Modulniveaus und des Compression Sets von Vulkanisaten hydrierter Nitrilkautschuke möglich ist.

In EP-A-0 134 023 wird ein Verfahren zur Hydrierung von NBR mit 0,05 bis 0,6 Gew.%, bezogen auf den Festkautschuk, an Tris-(triphenylphosphan)-rhodium(I)halogenid als Katalysator beschrieben, bei dem höchstens 2 Gew.%, ebenfalls bezogen auf den Festkautschuk, Triphenylphosphan zugesetzt werden. In den Beispielen der Tabelle

3) wird gezeigt, dass eine Erhöhung der Triphenylphosphan Menge auf bis zu 5 Gew.% zu einer Verschlechterung wichtiger Eigenschaften peroxidisch vulkanisierter hydrierter Nitrilkautschuke führt. So nehmen die Modulwerte bei 100%, 200% und 300% Dehnung sowie die Härte bei 23°C ab. Die Bruchdehnung und die Compression-Set-Werte nach einer Lagerung für 70h bei 23°C, für 70h bei 125°C sowie für 70h bei 150°C nehmen zu. Um den schädlichen Einfluss von TPP zu begrenzen, wird nach der Lehre von EP-A-134 023 die bei der Hydrierung eingesetzten TPP-Menge begrenzt. Unvorteilhafterweise müssen dann bei dieser Hydrierung zwecks Erzielung gleicher Hydrierzeiten höhere Mengen an Katalysator und damit an teurem Rhodiummetall eingesetzt werden. EP-A-0 134 023 gibt keine Lehre zur Entfernung des TPP nach der Hydrierung.

In US-A-5,244,965 wird Nitrilkautschuk unter Verwendung von Rhodiumhydridotetrakis(triphenylphosphan) in Gegenwart erheblicher molarer Überschüsse an TPP hydriert. Aufgrund vermuteter negativer Einflüsse von Triphenylphosphin auf die Eigenschaften des vulkanisierten Kautschuks (Seite 1, Zeile 26-28: "Furthermore, there is some indication that phosphines cause problems with polymer vulcanization") wird TPP nach der Hydrierung von der Kautschuklösung abgetrennt. Hierzu wird TPP unter Zugabe äquimolarer Mengen organischer Halogenverbindungen, die zur Bildung von Triphenylphosphoniumsalzen geeignet sind, insbesondere Methylbromid, Ethylbromid, Benzylchlorid oder Benzylbromid, in einem Zeitraum von 4-8 h bei Temperaturen von 70°C-120°C zu den entsprechenden Phosphoniumsalzen umgesetzt. Bei Abkühlung der Polymerlösung auf 20°C bis 40°C fallen die Phosphoniumsalze aus und werden anschließend mechanisch durch Filtration oder durch Sedimentation von der Polymerlösung abgetrennt. Es wird gezeigt, dass sowohl im erfindungsgemäß hergestellten hydrierten Nitrilkautschuk als auch im entsprechenden Vergleichsversuch, der ohne Zusätze von organischen Halogeniden hergestellt wurde, Triphenylphosphanoxid enthalten ist. Das in US-A-5,244,965 beschriebene Verfahren ist aus wirtschaftlicher Sicht unvorteilhaft, da für die Umsetzung des TPP zum Triphenylphosphoniumsalz lange Kesselbelegzeiten erforderlich sind. Ferner ist die Abtrennung des Phosphoniumsalzes aus der hochviskosen Polymerlösung durch Sedimentation bzw. Filtration verfahrenstechnisch aufwändig. Zum anderen ist es nicht vorteilhaft, dass der Ansatz abgekühlt und ferner verdünnt werden muss, um das gebildete Triphenylphosphoniumsalz abzuscheiden. Triphenylphosphoniumhalogenid kristallisiert zudem in unreproduzierbarer Weise. Oft fällt es in sehr feinteiliger Form an, was die Abtrennung aus der Lösung erschwert und eine unvollständige Abtrennung aus der Polymerlösung nach sich zieht, so dass zwangsläufig größere Restmengen der Triphenylphosphoniumhalogenide im hydrierten Nitrilkautschuk verbleiben. Dies wird in Beispiel 2, Experiment 1) und 2) (Tabelle 1) der US-A-5,344,965 deutlich. Nach Beispiel 2 werden für die Experimente 1) und 2) jeweils 5,5 g (20,87 mmol) TPP auf 100 g Kautschuk eingesetzt, wobei der in Beispiel 2 ebenfalls beschriebene TPP-Nachsatz nicht quantitativ nachvollziehbar ist und bei einer quantitativen Betrachtung nicht berücksichtigt werden kann. Nach Beispiel 2, Experiment 1) werden 20,87 mmol Triphenylphosphan mit 4 ml Methylbromid umgesetzt. Bei einer Dichte von 3,97 g/cm3 entspricht dies 15,88 g bzw. 167,3 mmol Methylbromid (Molmasse von Methylbromid: 94,94 g/mol); d. h. in Experiment 1 wird ein gut 8-facher molarer Überschuss von Methylbromid bezogen auf TPP eingesetzt. Bei quantitativer Umsetzung von TPP zu Triphenylmethylphosphoniumbromid (Molmasse: 356,8 g/mol) resultiert eine theoretische Ausbeute von 7,5 g Triphenylmethylphosphoniumbromid. Da nach Experiment 1) nur 3,2 g Triphenylmethylphosphoniumbromid isoliert werden, entspricht dies einer Ausbeute von 43%. Bei Berücksichtigung des TPP-Nachsatzes, der mit dem Überschuss an Methylbromid reagiert, liegt die Gesamtausbeute an isoliertem Triphenylphosphoniumbromid nach Beispiel 2, Experiment 1) erheblich unter 40%. Nach Beispiel 2, Experiment 2 werden bezogen auf 5,5 g (20,87 mmol) TPP 3 ml Ethylbromid (Dichte: 1,46 g/cm3) entsprechend 4,38 g (40,2 mmol) eingesetzt. Ebenfalls ohne Berücksichtigung eines nicht quantifizierbaren TPP-Nachsatzes werden aus 5,5 g TPP theoretisch 7,8 g Triphenylethylphosphoniumbromid (Molmasse: 371,3 g/mol) erhalten. Die in Beispiel 2, Experiment 2) beschriebene Ausbeute von 3,7 g entspricht somit höchstens 47,4 % der theoretischen Ausbeute. Aufgrund der schlechten Abtrennungseffizienz des Triphenylphosphoniumbromids in den beiden Experimenten des Beispiels 2) verbleiben bei der in US-A-5,244,965 beschriebenen Methode zur Abtrennung an TPP erhebliche Mengen an Triphenylphosphoniumhalogeniden im hydrierten Nitrilkautschuk, die zu einer Verschlechterung der Vulkanisateigenschaften, insbesondere der Korrosivität von hieraus hergestellten Dichtungen führen. In US-A5,244,965 wird ein positiver Einfluss der TPP-Abtrennung auf die Vulkanisateigenschaften nicht nachgewiesen.

In US-A-5,244,965**,** Beispiel 3, Tabelle 2 werden außerdem Angaben über Gehalte an Triphenylphosphan und Triphenylphosphanoxid ("TPP=O") im hydrierten Nitrilkautschuk gemacht, die in nachfolgender Tabelle zusammengefasst sind:

| Experiment | TPP-Einsatz bei Hydrierung [Gew.%] | Reagent | TPP im isolierten HNBR [Gew.%] | TPP=O im isolierten HNBR [Gew.%] |
|---|---|---|---|---|
| 3-1 | 5,5 | $C_2H_5Br$ | 0,75 | 1,41 |
| 3-2 | 5,5 | Benzylbromid | Nicht nachweisbar | 0,94 |
| 3-3 | 5,5 | - | 1,33 | 2,17 |

In US-A-5,244,965 bleibt unklar, ob die Abtrennung bzw. Abtrennbarkeit der Triphenylphosphoniumsalze in einem Zusammenhang mit der Bildung von Triphenylphosphanoxid steht, bzw. wie es zur Bildung von Triphenylphosphanoxid kommt und wie diese beeinflusst werden kann. Des Weiteren bleibt ungeklärt, welchen Einfluss TPP, Triphenylphosphanoxid, Phosphoniumhalogenide sowie Restmengen der für die Abtrennung eingesetzten organischen Halogenide auf die Vulkanisateigenschaften hydrierter Nitrilkautschuke haben. Insgesamt ist der Lehre von US-A-5,244,965 nicht zu entnehmen wie Vulkanisate des hydrierten Nitrilkautschuks mit hohen Modulwerten und mit niedrigem Compression Set herzustellen sind.

CN 1 763 107 A betrifft ein Verfahren zur Entfernung von Rhodium und/oder Ruthenium enthaltenden Katalysatoren und deren Liganden aus einer Lösung von ungesättigtem hydrierten Copolymer durch eine Oxidations-Extraktionsmethode. Die Methode ist dadurch gekennzeichnet, dass in der Lösung, die das ungesättigte hydrierte Copolymer enthält, ein Oxidationsmittel und ein Extraktionsmittel gleichzeitig vorliegen, und eine Eliminierungsreaktion der Katalysatoren und der Liganden durchgeführt wird. Das Oxidationsmittel ist ein gasförmiges Oxidationsmittel und das Extraktionsmittel ist eine wasserlösliche organische Säure oder eine organische Base.

CN 1 483 744 A betrifft ein Verfahren zur Entfernung von Katalysatorresten und deren Liganden aus einer Lösung, die Rhodium- und/oder Rutheniumorganische Koordinationsverbindungen und Organophosphane sowie ein ungesättigtes hydriertes Copolymer enthält, offenbart. Darin wird die Lösung enthaltend das ungesättigte hydrierte Copolymer mit einem Peroxid und einem wasserlöslichen Extraktionsagens versetzt. Als Extraktionsagens wird eine wasserlösliche organische Säure oder eine organische Base eingesetzt.

Trotz umfangreicher Literatur zur Herstellung hydrierter Nitrilkautschuke sind bis heute keine hydrierten Nitrilkautschuke verfügbar, die zum einen Vulkanisate mit einem guten Modulniveau und guten Compression Set Werten liefern und trotzdem gleichzeitig über Hydrierverfahren mit kurzen Reaktionszeiten unter Einsatz von Cokatalysatoren auf Phosphan- oder Diphosphanbasis mit niedrigen Katalysatormengen hergestellt werden können. Bisher sind keine Nitrilkautschuke bekannt, bei denen die negativen Auswirkungen der in der Hydrierung eingesetzten Phosphan- bzw. Diphosphan-Co-Katalysatoren auf die jeweiligen Vulkanisateigenschaften insbesondere auf das Modulniveau und die Compression-Set-Werte nach Lagerung bei hohen Temperaturen vermieden werden können.

**Aufgabe der vorliegenden Erfindung:**

Die **Aufgabe der vorliegenden Erfindung** bestand somit darin, hydrierte Nitrilkautschuke bereitzustellen, deren Vulkanisate sehr gute Moduli und gute Compression-Set-Werte, letztere insbesondere nach Lagerung bei hohen Temperaturen aufweisen. Die **Aufgabe der vorliegenden Erfindung** bestand darüber hinaus darin, derartige hydrierte Nitrilkautschuke bereitzustellen, die sich gleichzeitig durch niedrige Halogengehalte auszeichnen. Die **Aufgabe der vorliegenden Erfindung** bestand ferner darin, ein ökonomisches Verfahren zur Herstellung derartiger hydrierter Nitrilkautschuke bereitzustellen, bei dem das bei der Hydrierung als Cokatalysator anwesende Phosphan bzw. Diphosphan im Anschluss an die Hydrierung in geeigneter Weise unschädlich gemacht wird, ohne dass größere Mengen an Halogeniden abgetrennt werden müssen bzw. in den hydrierten Nitrilkautschuk eingeschleppt werden.

**Lösung:**

**Überraschenderweise wurde gefunden**, dass die verbesserten Eigenschaften von Vulkanisaten auf Basis hydrierter Nitrilkautschuke in Form sehr guter Modul-Werte und verbesserter Compression Set-Werte, insbesondere nach Lagerung bei höherer Temperatur, erreicht werden können, wenn der hydrierte Nitrilkautschuk keinen oder einen reduzierten Phosphan- oder Diphosphangehalt, einen bestimmten Phosphanoxid- oder Diphosphanoxidgehalt sowie einen sehr niedrigen Gesamthalogengehalt besitzt. Diese hydrierten Nitrilkautschuke können auf ökonomische Weise erhalten werden, indem man das bei der Hydrierung eingesetzte Phosphan bzw. Diphosphan nach der Hydrierung mit speziellen Schwefelverbindungen versetzt. Unerwarteterweise kommt es nicht zur Bildung von Phosphan- bzw. Diphosphansulfiden, sondern von Phosphan- bzw. Diphosphanoxiden.

Überraschend ist es zudem, dass der Phosphanoxid-Gehalt keinen negativen Einfluss auf die Vulkanisateigenschaften hat, sondern gerade Vulkanisate mit sehr guten Modul- und Compression Set-Werten liefert.

**Gegenstand der vorliegenden Erfindung** sind **hydrierte Nitrilkautschuke** enthaltend

i) einen Gehalt an **Phosphanen, Diphosphanen** oder Mischungen davon, bevorzugt Triphenylphosphan, im Bereich von 0 bis 1,0 Gew.%, bevorzugt von 0 bis 0,9 Gew.%, besonders bevorzugt von 0 bis 0,85 Gew.%, bezogen auf den hydrierten Nitrilkautschuk,

ii) einen Gehalt an **Phosphanoxiden, Diphosphanoxiden** oder Mischungen davon, bevorzugt Triphenylphosphanoxid, im Bereich von 0,25 bis 6 Gew.%, bevorzugt von 0,3 bis 5 Gew.%, besonders bevorzugt von 0,35 bis 4 Gew.%, bezogen auf den hydrierten Nitrilkautschuk, sowie

iii) einen **Gesamthalogengehalt** im Bereich von 25 bis 10.000 ppm, bevorzugt von 30 bis 8.000 ppm, besonders

bevorzugt 35 bis 1.000 ppm, ganz bevorzugt von 38 bis 900 ppm, insbesondere bevorzugt von 40 bis 850 ppm, aufweisen.

**Gegenstand der vorliegenden Erfindung** sind ferner **vulkanisierbare Mischungen** dieser hydrierten Nitrilkautschuke sowie **Verfahren zur Herstellung darauf basierender Vulkanisate** sowie die dabei erhältlichen **Vulkanisate,** insbesondere als Formkörper.

**Gegenstand der vorliegenden Erfindung** ist ferner ein **Verfahren zur Herstellung der erfindungsgemäßen hydrierten Nitrilkautschuke,** die

i) einen Gehalt an **Phosphanen, Diphosphanen** oder Mischungen davon, bevorzugt Triphenylphosphan, im Bereich von 0 bis 1,0 Gew.%, bevorzugt von 0 bis 0,9 Gew.%, besonders bevorzugt von 0 bis 0,85 Gew.%, bezogen auf den hydrierten Nitrilkautschuk,
ii) einen Gehalt an **Phosphanoxiden, Diphosphanoxiden** oder Mischungen davon, bevorzugt Triphenylphosphanoxid, im Bereich von 0,25 bis 6 Gew.%, bevorzugt von 0,3 bis 5 Gew.%, besonders bevorzugt von 0,35 bis 4 Gew.%, bezogen auf den hydrierten Nitrilkautschuk, sowie
iii) einen **Gesamthalogengehalt** im Bereich von 25 bis 10.000 ppm, bevorzugt von 30 bis 8.000 ppm, besonders bevorzugt 35 bis 1.000 ppm, ganz bevorzugt von 38 bis 900 ppm, insbesondere bevorzugt von 40 bis 850 ppm, aufweisen,

in dem man einen hydrierten Nitrilkautschuk, der einen Gehalt an Phosphanen, Diphosphanen oder Mischungen davon in einem Bereich von 0,25-5 Gew.%, bevorzugt im Bereich von 0,3-4,5 Gew.%, besonders bevorzugt im Bereich von 0,4-4,25 Gew.% und insbesondere im Bereich von 0,5-4 Gew.%, bezogen auf den hydrierten Nitrilkautschuk besitzt, mit mindestens einer Schwefelverbindung, die keine zwei miteinander direkt verbundene Schwefel-Atome aufweist, umsetzt.

Soweit im Rahmen dieser Anmeldung der Begriff "substituiert" verwendet wird, so bedeutet dies, dass ein Wasserstoff-Atom an einem angegebenen Rest oder Atom durch eine der jeweils angegebenen Gruppen ersetzt ist, mit der Maßgabe, dass die Wertigkeit des angegebenen Atoms nicht überschritten wird und die Substitution zu einer stabilen Verbindung führt.

Aufgrund der Vielzahl der verwendeten chemischen Formeln sind gleich benannte bzw. abgekürzte Reste in verschiedenen Formeln enthalten, besitzen jedoch für die jeweilige Formel nur die allgemeinen, bevorzugten, besonders bevorzugten bzw. insbesondere bevorzugten Bedeutungen, die im Zusammenhang mit dieser Formel jeweils genannt sind. Sofern vom vorgenannten Grundsatz Ausnahmen gelten sollen, ist dies explizit erwähnt. Abgesehen von dieser Thematik gleich abgekürzter Reste in verschiedenen Formeln können im Rahmen dieser Anmeldung und Erfindung alle genannten allgemeinen oder in Vorzugsbereichen genannten Definitionen von Parametern, Definitionen oder Erläuterungen untereinander, also auch zwischen den jeweiligen Bereichen und Vorzugsbereichen in beliebiger Weise kombiniert werden und gelten in diesem Umfang als offenbart.

## Erfindungsgemäßer hydrierter Nitrilkautschuk:

Der erfindungsgemäße hydrierte Nitrilkautschuk besitzt

i) einen Gehalt an **Phosphanen, Diphosphanen** oder Mischungen davon, bevorzugt Triphenylphosphan, im Bereich von 0 bis 1,0 Gew.%, vorzugsweise von 0 bis 0,9 Gew.%, besonders bevorzugt von 0 bis 0,85 Gew.%, bezogen auf den hydrierten Nitrilkautschuk,
ii) einen Gehalt an **Phosphanoxiden, Diphosphanoxiden** oder Mischungen davon, bevorzugt Triphenylphosphanoxid, im Bereich von 0,25 bis 6 Gew.%, bevorzugt von 0,3 bis 5 Gew.%, besonders bevorzugt von 0,35 bis 4 Gew.%, bezogen auf den hydrierten Nitrilkautschuk, sowie
iii) einen **Gesamthalogengehalt** im Bereich von 25 bis 10.000 ppm, bevorzugt von 30 bis 8.000 ppm, besonders bevorzugt 35 bis 1.000 ppm, ganz bevorzugt von 38 bis 900 ppm, insbesondere bevorzugt von 40 bis 850 ppm, aufweisen.

Der erfindungsgemäße hydrierte Nitrilkautschuk besitzt typischerweise einen hohen Hydriergrad, üblicherweise von 80 bis 100%, bevorzugt von 90 bis 100%, besonders bevorzugt von 92 bis 100%, und ganz besonders bevorzugt von 94 bis 100%. Alternativ bevorzugt handelt es sich um einen vollhydrierten Nitrilkautschuk, der sich durch einen Hydriergrad von mindestens 99,1% auszeichnet. Die Bestimmung des Gehalts der Phosphan/Diphosphan Komponente (i) bzw. der Phosphanoxid/Diphosphanoxid-Komponente (ii) erfolgt gaschromatographisch entsprechend der in den Beispielen beschriebenen Methode für die Bestimmung des Triphenylphosphan-("TPP") und Triphenylphosphanoxid-("TPP=O) Gehalts. Die Bestimmung des Gesamthalogengehalts erfolgt nach DIN 51408, Teil 2.

Die **Phosphan-Komponente (i)** besitzt üblicherweise die allgemeine Formel (1-a),

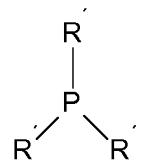

(1-a)

wobei

R' gleich oder verschieden sind und Alkyl, Alkenyl, Alkadienyl, Alkoxy, Aryl, Heteroaryl, Cycloalkyl, Cycloalkenyl, Cycloalkadienyl, Halogen oder Trimethylsilyl bedeuten,

und die **Diphosphan-Komponente (i)** besitzt üblicherweise die allgemeine Formel (1-b),

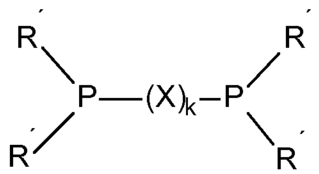

(1-b)

worin

R' gleich oder verschieden sind und die gleichen Bedeutungen besitzen wie in der allgemeinen Formel (1-a),
k 0 oder 1 ist und
X für eine geradkettige oder verzweigte Alkandiyl-, Alkendiyl- oder Alkindiylgruppe steht.

Die Reste R' können dabei sowohl in Formel (1-a) als auch (1-b) unsubstituiert, einfach oder mehrfach substituiert sein.

Derartige Phosphane oder Diphosphane der allgemeinen Formeln (1-a) und (1-b) sind nach dem Fachmann bekannten Methoden herstellbar oder aber käuflich erhältlich.

Unter **Alkyl-Resten** in den Resten R' der Phosphane bzw. Diphosphane der allgemeinen Formeln (1-a) und (1-b) versteht man üblicherweise geradkettige oder verzweigte $C_1$-$C_{30}$-Alkylreste, bevorzugt $C_1$-$C_{24}$-Alkylreste, besonders bevorzugt $C_1$-$C_{18}$-Alkylreste. $C_1$-$C_{18}$-Alkyl umfasst beispielsweise Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, 1,1-Dimethylpropyl, 1,2-Dimethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, n-Heptyl, n-Octyl, n-Nonyl, n-Decyl, n-Undexyl, n-Dodecyl, n-Tridecyl, n-Tetradecyl, n-Hexadecyl und n-Octadecyl.

Unter **Alkenyl-Resten** in den Resten R' der Phosphane bzw. Diphosphane der allgemeinen Formeln (1-a) und (1-b) versteht man üblicherweise $C_2$-$C_{30}$-Alkenyl-Reste, bevorzugt $C_2$-$C_{20}$-Alkenyl-Reste. Besonders bevorzugt handelt es sich bei einem Alkenylrest um einen Vinylrest oder einen Allylrest.

Unter **Alkadienyl-Resten** in den Resten R der Phosphane bzw. Diphosphane der allgemeinen Formeln (1-a) und (1-b) versteht man üblicherweise $C_4$-$C_{30}$-Alkadienyl-Reste, bevorzugt $C_4$-$C_{20}$-Alkadienyl-Reste. Besonders bevorzugt handelt es sich bei einem Alkadienylrest um Butadienyl oder Pentadienyl.

Unter **Alkoxy-Resten** in den Resten R' der Phosphane bzw. Diphosphane der allgemeinen Formeln (1-a) und (1-b) versteht man üblicherweise $C_1$-$C_{20}$-Alkoxy-Reste, bevorzugt $C_1$-$C_{10}$-Alkoxy-Reste, besonders bevorzugt Methoxy, Ethoxy, n-Propoxy, iso-Propoxy, n-Butoxy, sec.-Butoxy, tert.-Butoxy, n-Pentoxy und n-Hexoxy.

Unter **Aryl-Resten** in den Resten R' der Phosphane bzw. Diphosphane der allgemeinen Formeln (1-a) und (1-b) versteht man üblicherweis e $C_5$-$C_{24}$-Arylreste, bevorzugt $C_6$-$C_{14}$-Arylreste, besonders bevorzugt $C_6$-$C_{12}$-Arylreste. Beispiele für $C_5$-$C_{24}$-Aryl sind Phenyl, o-, p-, m-Tolyl, Naphthyl, Phenanthrenyl, Anthracenyl und Fluorenyl.

**Heteroaryl-Reste** in den Resten R" der Phosphane bzw. Diphosphane der allgemeinen Formeln (1-a) und (1-b) besitzen die gleiche Bedeutung wie zuvor für Aryl-Reste angegeben, wobei jedoch ein- oder mehrere der Gerüstkohlenstoff-Atome durch ein Heteroatom, ausgewählt aus der Gruppe Stickstoff, Schwefel und Sauerstoff, ersetzt sind. Beispiele für solche Heteroaryl-Reste sind Pyridinyl, Oxazolyl, Benzofuranyl, Dibenzofuranyl und Chinolinyl.

Alle vorgenannten **Alkyl, Alkenyl, Alkadienyl, und Alkoxy-Reste** können unsubstituiert, ein- oder mehrfach

substituiert sein, z.B. durch $C_5$-$C_{24}$-Aryl-Reste, bevorzugt Phenyl (bei Alkylresten resultiert hierbei z.B. Arylalkyl, bevorzugt ein Phenylalkyl-Rest), Halogen, bevorzugt Fluor, Chlor oder Brom, CN, OH, $NH_2$ oder NR"$_2$-Reste, wobei R" wiederum $C_1$-$C_{30}$-Alkyl oder $C_5$-$C_{24}$-Aryl bedeutet.

Sowohl die **Arylreste als auch die Heteroarylreste** sind entweder unsubstituiert, ein- oder mehrfach substituiert, z.B. durch geradkettiges oder verzweigtes $C_1$-$C_{30}$-Alkyl (es resultieren sogenannte Alkylaryl-Reste), Halogen, bevorzugt Fluor, Chlor oder Brom, Sulfonat ($SO_3Na$), geradkettiges oder verweigtes $C_1$-$C_{30}$-Alkoxy, bevorzugt Methoxy oder Ethoxy, Hydroxy, $NH_2$ oder N(R")$_2$-Reste, wobei R" wiederum geradkettiges oder verzweigtes $C_1$-$C_{30}$-Alkyl oder $C_5$-$C_{24}$-Aryl bedeutet, oder durch weitere $C_5$-$C_{24}$-Aryl- oder -Heteroarylreste, womit Bisarylreste, bevorzugt Biphenyl oder Binaphthyl, Heteroaryl-Aryl-Reste, Aryl-heteroaryl-Reste oder Bisheteroarylreste resultieren. Auch diese $C_5$-$C_{24}$-Aryl- oder -Heteroaryl-Substituenten sind erneut wiederum entweder unsubstituiert oder ein- oder mehrfach durch alle vorgenannten Substituenten substituiert.

Unter **Cycloalkyl-Resten** in den Resten R der Phosphane bzw. Diphosphane der allgemeinen Formeln (1-a) und (1-b) versteht man üblicherweise einen $C_3$-$C_{20}$-Cycloalkylrest, bevorzugt einen $C_3$-$C_8$-Cycloalkylrest, besonders bevorzugt Cyclopentyl und Cyclohexyl.

**Cycloalkenyl-Reste** in den Resten R' der Phosphane bzw. Diphosphane der allgemeinen Formeln (1-a) und (1-b) sind gleich oder verschieden, weisen im Ringgerüst eine C=C Doppelbindung auf und bedeuten üblicherweise $C_5$-$C_8$ Cycloalkenyl, bevorzugt Cyclopentenyl und Cyclohexenyl.

**Cycloalkadienyl-Reste** in den Resten R' der Phosphane bzw. Diphosphane der allgemeinen Formeln (1-a) und (1-b) sind gleich oder verschieden, weisen im Ringgerüst zwei C=C Doppelbindungen auf und stehen üblicherweise für $C_5$-$C_8$ Cycloalkadienyl, bevorzugt für Cyclopentadienyl oder Cyclohexadienyl.

Auch die vorgenannten **Cycloalkyl, Cycloalkenyl und Cycloalkadienyl-Reste** sind entweder unsubstituiert, ein- oder mehrfach substituiert, z.B. durch geradkettiges oder verzweigtes $C_1$-$C_{30}$-Alkyl (dann resultieren sogenannte Alkylaryl-Reste), Halogen, bevorzugt Fluor, Chlor oder Brom, Sulfonat ($SO_3Na$), geradkettiges oder verzweigtes $C_1$-$C_{30}$-Alkoxy, bevorzugt Methoxy oder Ethoxy, Hydroxy, $NH_2$ oder NR"$_2$-Reste, wobei R" wiederum geradkettiges oder verzweigtes $C_1$-$C_{30}$-Alkyl oder $C_5$-$C_{24}$-Aryl bedeutet, oder durch $C_5$-$C_{24}$-Aryl- oder Heteroarylreste, die wiederum entweder unsubstituiert oder ein.- oder mehrfach durch alle vorgenannten Substituenten substituiert sind.

Die **Halogen Reste** in den Resten R' der Phosphane bzw. Diphosphane der allgemeinen Formeln (1-a) und (1-b) sind gleich oder verschieden und bedeuten Fluor, Chlor oder Brom.

Besonders bevorzugt sind als Phosphane der allgemeinen Formel (1-a) Trialkyl-, Tricycloalkyl-, Triaryl-, Trialkaryl-, Triaralkyl-, Diaryl-monoalkyl-, Diaryl-monocycloalkyl-, Dialkyl-monoaryl-, Dialkyl-monocycloalkyl- oder Dicycloalkyl-monoaryl-Phosphane, wobei alle vorgenannten Reste wiederum entweder unsubstituiert, ein- oder mehrfach durch die zuvor genannten Substituenten substituiert sind.

Inbesondere bevorzugt sind Phosphane der allgemeinen Formel (1-a), bei denen die Reste R' gleich oder verschieden sind und für Phenyl, Cyclohexyl, Cyclohexenyl, Cyclopentyl, Cyclopentadienyl, Phenylsulfonat oder Cyclohexylsulfonat stehen.

Ganz besonders bevorzugt sind im erfindungsgemäßen hydrierten Nitrilkautschuk als Phosphane der allgemeinen Formel (1-a) $PPh_3$, P(p-Tol)$_3$, P(o-Tol)$_3$, $PPh(CH_3)_2$, $P(CF_3)_3$, P(p-$FC_6H_4$)$_3$, P(p-$CF_3C_6H_4$)$_3$, $P(C_6H_4\text{-}SO_3Na)_3$, $P(CH_2C_6H_4\text{-}SO_3Na)_3$, P(iso-Pr)$_3$, $P(CHCH_3(CH_2CH_3))_3$, P(cyclopentyl)$_3$, P(cyclohexyl)$_3$, P(neopentyl)$_3$, $P(C_6H_5CH_2)(C_6H_5)_2$, $P(NCCH_2CH_2)_2(C_6H_5)$, $P[(CH_3)_3C]_2Cl$, $P[(CH_3)_3C]_2(CH_3)$, P(tert.-Bu)$_2$(biph), $P(C_6H_{11})_2Cl$, $P(CH_3)(OCH_2CH_3)_2$, $P(CH_2{=}CHCH_2)_3$, $P(C_4H_3O)_3$, $P(CH_2OH)_3$, P(m-$CH_3OC_6H_4$)$_3$, $P(C_6F_5)_3$, $P[(CH_3)_3Si]_3$, $P[(CH_3O)_3C_6H_2]_3$ enthalten, wobei Ph für Phenyl, Tol für Tolyl, biph für Biphenyl, Bu für Butyl und Pr für Propyl stehen. Insbesondere bevorzugt ist Triphenylphosphan.

In den Diphosphanen der allgemeinen Formel (1-b) steht k für 0 oder 1, bevorzugt für 1.

X steht in der allgemeinen Formel (1-b) für eine geradkettige oder verzweigte Alkandiyl-, Alkendiyl- oder Alkindiylgruppe, bevorzugt für eine geradkettige oder verzweigte $C_1$-$C_{20}$-Alkandiyl-, $C_2$-$C_{20}$-Alkendiyl- oder $C_2$-$C_{20}$-Alkindiylgruppe, besonders bevorzugt für eine geradkettige oder verzweigte $C_1$-$C_8$-Alkandiyl-, $C_2$-$C_6$-Alkendiyl- oder $C_2$-$C_6$-Alkindiylgruppe.

**$C_1$-$C_8$-Alkandiyl** steht für einen geradkettigen oder verzweigten Alkandiylrest mit 1 bis 8 Kohlenstoffatomen. Besonders bevorzugt ist ein geradkettiger oder verzweigter Alkandiylrest mit 1 bis 6 Kohlenstoffatomen, insbesondere mit 2 bis 4 Kohlenstoffatomen. Bevorzugt sind Methylen, Ethylen, Propylen, Propan-1,2-diyl, Propan-2,2-diyl, Butan-1,3-diyl, Butan-2,4-diyl, Pentan-2,4-diyl und 2-Methyl-pentan-2,4-diyl.

**$C_2$-$C_6$-Alkendiyl** steht für einen geradkettigen oder verzweigten Alkendiylrest mit 2 bis 6 Kohlenstoffatomen. Bevorzugt ist ein geradkettiger oder verzweigter Alkendiylrest mit 2 bis 4, besonders bevorzugt 2 bis 3 Kohlenstoffatomen. Vorzugsweise seien genannt: Vinylen, Allylen, Prop-1-en-1,2-diyl und But-2-en-1,4-diyl.

**$C_2$-$C_6$-Alkindiyl** steht für einen geradkettigen oder verzweigten Alkindiylrest mit 2 bis 6 Kohlenstoffatomen. Bevorzugt ist ein geradkettiger oder verzweigter Alkindiylrest mit 2 bis 4, besonders bevorzugt mit 2 bis 3 Kohlenstoffatomen. Vorzugsweise seien genannt: Ethindiyl und Propindiyl.

Besonders bevorzugte Diphosphane der allgemeinen Formel (1-b) sind $Cl_2PCH_2CH_2PCl_2$,

$(C_6H_{11})_2PCH_2P(C_6H_{11})$, $(CH_3)_2PCH_2CH_2P(CH_3)_2$, $(C_6H_5)_2PCCP(C_6H_5)_2$, $(C_6H_5)_2PCH{=}CHP(C_6H_5)_2$, $(C_6F_5)_2P(CH_2)_2P(C_6F_5)_2$, $(C_6H_5)_2P(CH_2)_2P(C_6H_5)_2$, $(C_6H_5)_2P(CH_2)_3P(C_6H_5)_2$, $(C_6H_5)_2P(CH_2)_4P(C_6H_5)_2$, $(C_6H_5)_2P(CH_2)_5P(C_6H_5)_2$, $(C_6H_5)_2PCH(CH_3)CH(CH_3)P(C_6H_5)_2$ und $(C_6H_5)_2PCH(CH_3)CH_2P(C_6H_5)_2$.

Besondere, ebenfalls erfindungsgemäß einsetzbare Diphosphane sind ferner publiziert in Chem. Eur. J. 2008, 14, 9491-9494. Zu nennen sind beispielsweise:

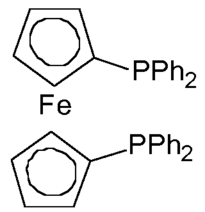

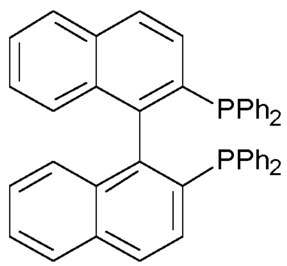

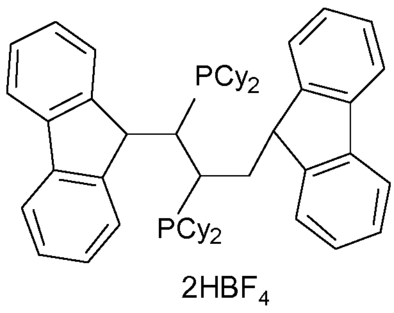

Bei der Phosphansulfid- bzw. Diphosphansulfid-Komponente (ii) im erfindungsgemäßen hydrierten Nitrilkautschuk handelt es sich typischerweise um Sulfide der vorstehend definierten Phosphane bzw. Diphosphane.

Insbesondere handelt es sich bei Komponente (i) um ein Phosphan, insbesondere bevorzugt um Triphenylphosphan und entsprechend bei Komponente (ii) gleichzeitig um ein Phosphanoxid, insbesondere bevorzugt um Triphenylphosphanoxid.

**Wiederholungseinheiten des hydrierten Nitrilkautschuks:**

Die erfindungsgemäßen hydrierten Nitrilkautschuke weisen Wiederholungseinheiten mindestens eines α,β-ungesättigten Nitril-Monomeren und mindestens eines konjugierten Dien-Monomeren auf. Sie können darüber hinaus noch Wiederholungseinheiten von einem oder mehreren weiteren copolymerisierbaren Monomeren aufweisen.

Der erfindungsgemäße hydrierte Nitrilkautschuk umfasst ganz oder teilweise hydrierte Nitrilkautschuke. Der Hydriergrad kann in einem Bereich von mindestens 50% und bis zu 100 % oder von 75 % bis 100 % liegen. Typischerweise besitzt der erfindungsgemäße hydrierte Nitrilkautschuk einen hohen Hydriergrad, üblicherweise von 80 bis 100%, bevorzugt von 90 bis 100%, besonders bevorzugt von 92 bis 100% und ganz besonders bevorzugt von 94 bis 100%. Von sogenannten "vollhydrierten Typen", die ebenfalls von der vorliegenden Erfindung als bevorzugte Ausführungsform erfasst sind, wird in der Fachwelt bereits gesprochen, wenn der C=C Restdoppelbindungsgehalt (auch als "RDB" abgekürzt) maximal bei ca. 0,9 % liegt, d.h. der Hydriergrad größer gleich 99.1% beträgt.

Die Wiederholungseinheiten des mindestens einen **konjugierten Diens** gehen bevorzugt auf ($C_4$-$C_6$) konjugierte Diene oder Mischungen davon zurück. Besonders bevorzugt sind 1,2-Butadien, 1,3-Butadien, Isopren, 2,3-Dimethylbutadien, Piperylen und Gemische daraus. Insbesondere bevorzugt sind 1,3-Butadien, Isopren und Gemische daraus. Ganz besonders bevorzugt ist 1,3-Butadien.

Als **α,β-ungesättigtes Nitril** kann jedes bekannte α,β-ungesättigte Nitril zur Herstellung der erfindungsgemäßen Nitrilkautschuke eingesetzt werden, bevorzugt sind ($C_3$-$C_5$)-α,β-ungesättigte Nitrile wie Acrylnitril, Methacrylnitril, Ethacrylnitril oder Mischungen davon. Besonders bevorzugt ist Acrylnitril.

Soweit ein oder mehrere weitere copolymerisierbare Monomere eingesetzt werden, können dies z.B. **aromatische Vinylmonomere,** bevorzugt Styrol, α-Methylstyrol und Vinylpyridin, **fluorhaltige Vinylmonomere,** bevorzugt Fluorethylvinylether, Fluorpropylvinylether, o-Fluormethylstyrol, Vinylpentafluorbenzoat, Difluoroethylen und Tetrafluoroethylen, oder auch **copolymerisierbare Antiageing Monomere**, bevorzugt N-(4-anilinophenyl) acrylamid, N-(4-anilinophenyl) methacrylamid, N-(4-anilinphenyl) cinnamid, N-(4-anilinophenyl) crotonamid, N-phenyl-4-(3-vinylbenzyloxy) anilin und N-phenyl-4-(4-vinylbenzyloxy) anilin sein sowie **nicht-konjugierte Diene**, wie 4-Cyanocyclohexen und 4-Vinylcyclohexen, oder auch **Alkine**, wie 1- oder 2-Butin. Weiterhin können als copolymerisierbare Termonomere Hydroxylgruppen-haltige Monomere eingesetzt werden, vorzugsweise Hydroxyalkyl(meth)acrylate. Es können aber auch entsprechend substituierte (Meth)acrylamide eingesetzt werden.

Beispiele geeigneter Hydroxyalkylacrylatmonomere sind 2-Hydroxyethyl(meth)acrylat, 2-Hydroxypropyl(meth)acrylat, 3-Hydroxypropyl(meth)acrylat, 3-Chlor-2-hydroxypropyl(meth)acrylat, 3-Phenoxy-2-hydroxypropyl(meth)acrylat, Glycerinmono(meth)acrylat, Hydroxybutyl(meth)acrylat, 3-Chlor-2-hydroxypropyl(meth)acrylat, Hydroxyhexyl(meth)acrylat, Hydroxyoctyl(meth)acrylat, Hydroxymethyl(meth)acrylamid, 2-Hydroxypropyl(meth)acrylat, 3-Hydroxypropyl(meth)acrylamid, Di-(Ethylenglykol)itaconat, Di-(Propylenglykol)itaconat, Bis(2-Hydroxypropyl)itaconat, Bis(2-Hydroxyethyl)itaconat, Bis(2-Hydroxyethyl)fumarat, Bis(2-Hydroxyethyl)maleat und Hydroxymethylvinylketon.

Weiterhin können als copolymerisierbare Termonomere Epoxygruppen-haltige Monomere eingesetzt werden,

vorzugsweise Glycidyl(meth)acrylate.

Beispiele Epoxygruppen-haltiger Monomere sind Diglycidylitaconat, Glycidyl-p-styrencaboxylat, 2-Ethylglycidylacrylat, 2-Ethylglycidylmethacrylat, 2-(n-Propyl)glycidylacrylat, 2-(n-Propyl) glycidylmethacrylat, 2-(n-Butyl)glycidylacrylat, 2-(n-Butyl)glycidylmethacrylat, Glycidylmethylacrylat, Glycidylmethylmethacrylat, Glycidylacrylat, (3',4'-Epoxyheptyl)-2-ethylacrylat, (3',4'-Epoxyheptyl)-2-ethyl-methacrylat, (6',7'-Epoxyheptyl)acrylat, (6',7'-Epoxyheptyl)methacrylat, Allylglycidylether, Allyl-3,4-epoxyheptylether, 6,7-Epoxyheptylallylether, Vinylglycidylether, Vinyl-3,4-epoxyheptylether, 3,4-Epoxyheptylvinylether, 6,7-Epoxyheptylvinylether, o-Vinylbenzyl glycidylether, m-Vinylbenzylglycidylether, p-Vinylbenzylglycidylether und 3-Vinylcyclohexenoxid.

Alternativ können als weitere copolymerisierbare Monomere carboxygruppenhaltige, copolymerisierbare Termonomere eingesetzt werden, beispielsweise $\alpha,\beta$-ungesättigte Monocarbonsäuren, deren Ester, $\alpha,\beta$-ungesättigte Dicarbonsäuren, deren Mono- oder -Diester oder deren entsprechenden Anhydride oder Amide.

Als **$\alpha,\beta$-ungesättigte Monocarbonsäuren** können bevorzugt Acrylsäure und Methacrylsäure eingesetzt werden.

Einsetzbar sind auch **Ester der $\alpha,\beta$-ungesättigten Monocarbonsäuren**, bevorzugt deren Alkylester und Alkoxyalkylester. Bevorzugt sind die Alkylester, insbesondere $C_1$-$C_{18}$ Alkylester der $\alpha,\beta$-ungesättigten Monocarbonsäuren, Besonders bevorzugt sind Alkylester, insbesondere $C_1$-$C_{18}$ Alkylester der Acrylsäure oder der Methacrylsäure, insbesondere Methylacrylat, Ethylacrylat, Propylacrylat, n-Butylacrylat, tert.-Butylacrylat, 2-Ethylhexylacrylat, n-Dodecylacrylat, Methylmethacrylat, Ethylmethacrylat, Butylmethacrylat und 2-Ethylhexyl-methacrylat. Bevorzugt sind auch Alkoxyalkylester der $\alpha,\beta$-ungesättigten Monocarbonsäuren, besonders bevorzugt Alkoxyalkylester der Acrylsäure oder der Methacrylsäure, insbesondere $C_2$-$C_{12}$-Alkoxyalkylester der Acrylsäure oder der Methacrylsäure, ganz besonders bevorzugt Methoxymethylacrylat, Ethoxyethyl(meth)acrylat und Methoxyethyl(meth)acrylat. Einsetzbar sind auch Mischungen von Alkylestern, wie z.B. den vorgenannten, mit Alkoxyalkylestern, z.B. in Form der vorgenannten. Einsetzbar sind auch Cyanoalkylacrylate and Cyanoalkylmethacrylate, in denen die C-Atom-Zahl der Cyanoalkylgruppe 2-12 beträgt, vorzugsweise $\alpha$-Cyanoethylacrylat, $\beta$-Cyanoethylacrylat und Cyanobutylmethacrylat. Einsetzbar sind auch Hydroxyalkylacrylate and Hydroxyalkylmethacrylate, in denen die C-Atom-Zahl der Hydroxyalkylgruppen 1-12 beträgt, vorzugsweise 2-Hydroxyethylacrylat, 2-Hydroxyethylmethacrylat und 3-Hydroxypropylacrylat; Einsetzbar sind auch Fluor-substituierte Benzylgruppenhaltige Acrylate oder Methacrylate, vorzugsweise Fluorobenzylacrylat, und Fluorobenzylmethacrylat. Einsetzbar sind auch Fluoroalkylgruppenhaltige Acrylate und Methacrylate, vorzugsweise Trifluoroethylacrylat und Tetrafluoropropylmethacrylat. Einsetzbar sind auch Aminogruppenhaltige $\alpha,\beta$-ungesättigte Carbonsäureester wie Dimethylaminomethyl-acrylat und Diethylaminoethylacrylat.

Als weitere Monomere können **$\alpha,\beta$-ungesättigte Dicarbonsäuren,** bevorzugt Maleinsäure, Fumarsäure, Crotonsäure, Itaconsäure, Citraconsäure und Mesaconsäure, eingesetzt werden.

Eingesetzt werden können ferner **$\alpha,\beta$-ungesättigte Dicarbonsäureanhydride,** bevorzugt Maleinsäureanhydrid, Itaconsäureanhydrid, Citraconsäureanhydrid und Mesaconsäureanhydrid.

Eingesetzt werden können ferner **Mono- oder Diester von $\alpha,\beta$-ungesättigten Dicarbonsäuren.** Bei diesen $\alpha,\beta$-ungesättigten Dicarbonsäuremono- oder diestern kann es sich z.B. handeln um **Alkyl-,** bevorzugt $C_1$-$C_{10}$-Alkyl, insbesondere Ethyl-, n-Propyl-, iso-Propyl, n-Butyl-, tert.-Butyl, n-Pentyl- oder n-Hexyl-, **Alkoxyalkyl-**, bevorzugt $C_2$-$C_{12}$ Alkoxyalkyl-, besonders bevorzugt $C_3$-$C_8$- Alkoxyalkyl, **Hydroxyalkyl,** bevorzugt $C_1$-$C_{12}$ Hydroxyalkyl-, besonders bevorzugt $C_2$-$C_8$- Hydroxyalkyl, **Cycloalkyl-**, bevorzugt $C_5$-$C_{12}$-Cycloalkyl-, besonders bevorzugt $C_6$-$C_{12}$-Cycloalkyl, **Alkylcycloalkyl-**, bevorzugt $C_6$-$C_{12}$-Alkylcycloalkyl-, besonders bevorzugt $C_7$-$C_{10}$-Alkylcycloalkyl, **Aryl-,** bevorzugt $C_6$-$C_{14}$-Aryl-Mono- oder -Diester, wobei es sich im Fall der Diester jeweils auch um gemischte Ester handeln kann.

Besonders bevorzugte **Alkylester von $\alpha,\beta$-ungesättigten Monocarbonsäuren** sind Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethlyhexyl(meth)acrylat, Octyl(meth)acrylat, 2-Propylheptylacrylat und Lauryl(meth)acrylat. Insbesondere wird n-Butylacrylat eingesetzt.

Besonders bevorzugte **Alkoxyalkylester der $\alpha,\beta$-ungesättigten Monocarbonsäuren** sind Methoxyethyl(meth)acrylat, Ethoxyethyl(meth)acrylat und Methoxyethyl(meth)acrylat. Insbesondere wird Methoxyethylacrylat eingesetzt.

Als sonstige Ester der $\alpha,\beta$-ungesättigten Monocarbonsäuren werden ferner beispielsweise Polyethylenglykol(meth)acrylat, Polypropylenglykol(meth)acrylat, N-(2-Hydroxyethyl)acrylamid, N-(2-Hydroxymethyl)acrylamid und Urethan(meth)acrylat eingesetzt.

Beispiele von **$\alpha,\beta$-ungesättigten Dicarbonsäuremonoestern** umfassen

- Maleinsäuremonoalkylester, bevorzugt Monomethylmaleat, Monoethylmaleat, Monopropyl maleat und Mono-n-butylmaleat;
- Maleinsäuremonocycloalkylester, bevorzugt Monocyclopentylmaleat, Monocyclohexyl maleat und Monocycloheptylmaleat;
- Maleinsäuremonoalkylcycloalkylester, bevorzugt Monomethylcyclopentylmaleat und Monoethylcyclohexylmaleat;

- Maleinsäuremonoarylester, bevorzugt Monophenylmaleat;
- Maleinsäuremonobenzylester, bevorzugt Monobenzylmaleat;
- Fumarsäuremonoalkylester, bevorzugt Monomethylfumarat, Monoethylfumarat, Monopropyl fumarat und Mono-n-butyl fumarat;
- Fumarsäuremonocycloalkylester, bevorzugt Monocyclopentylfumarat, Monocyclohexyl fumarat und Monocycloheptylfumarat;
- Fumarsäuremonoalkylcycloalkylester, bevorzugt Monomethylcyclopentylfumarat und Monoethylcyclohexylfumarat;
- Fumarsäuremonoarylester, bevorzugt Monophenylfumarat;
- Fumarsäuremonobenzylester, bevorzugt Monobenzylfumarat;
- Citraconsäuremonoalkylester, bevorzugt Monomethylcitraconat, Monoethylcitraconat, Monopropylcitraconat und Mono-n-butyl citraconat;
- Citraconsäuremonocycloalkylester, bevorzugt Monocyclopentylcitraconat, Monocyclohexyl citraconat und Monocycloheptylcitraconat;
- Citraconsäuremonoalkylcycloalkylester, bevorzugt Monomethylcyclopentylcitraconat und Monoethylcyclohexylcitraconat;
- Citraconsäuremonoarylester, bevorzugt Monophenylcitraconat;
- Citraconsäuremonobenzylester, bevorzgut Monobenzylcitraconat;
- Itaconsäuremonoalkylester, bevorzugt Monomethylitaconat, Monoethylitaconat, Monopropyl itaconat und Mono-n-butyl itaconat;
- Itaconsäuremonocycloalkylester, bevorzugt Monocyclopentylitaconat, Monocyclohexyl itaconat und Monocycloheptylitaconat;
- Itaconsäuremonoalkylcycloalkylester, bevorzugt Monomethylcyclopentylitaconat und Monoethylcyclohexylitaconat;
- Itaconsäuremonoarylester, bevorzugt Monophenylitaconat;
- Itaconsäuremonobenzylester, bevorzugt Monobenzylitaconat;
- Mesaconsäuremonoalkylester, bevorzugt Mesaconsäuremonoethylester.

Als **α,β-ungesättigte Dicarbonsäurediester** können die analogen Diester basierend auf den zuvor genannten Monoestergruppen eingesetzt werden, wobei es sich bei den Estergruppen auch um chemisch verschiedene handeln kann.

Als **weitere copolymerisierbare Monomere** kommen ferner radikalisch polymerisierbare Verbindungen in Betracht, die pro Molekül mindestens zwei olefinische Doppelbindungen enthalten. Beispiele mehrfach ungesättigter Verbindungen sind Acrylate, Methacrylate oder Itaconate von Polyolen wie z.B. Ethylenglykoldiacrylat, Diethylenglykoldimethacrylat, Triethylenglylkoldiacrylat, Butandiol-1,4-diacrylat, Propandiol-1,2-diacrylat, Butandiol-1,3-dimethacrylat, Neopentylglykoldiacrylat, Trimethylolpropandi(meth)acrylat, Trimethylolethan-di(meth)acrylat, Glycerindi- und -triacrylat, Pentaerythritdi-, -tri- und tetraacrylat oder -methacrylat, Dipentaerythrittetra, -penta- und hexaacrylat oder -methacrylat oder -itaconat, Sorbittetraacrylat, Sorbithexamethacrylat, Diacrylate oder Dimethacrylate von 1,4-Cyclohexandiol, 1,4-Dimethylolcyclohexan, 2,2-Bis(4-hydroxy-phenyl)-propan, von Polyethylenglykolen oder Oligoestern oder Oligourethanen mit endständigen Hydroxylgruppen. Als mehrfach ungesättigte Monomere können auch Acrylamide verwendet werden wie z.B. Methylen-bisacrylamid, Hexamethylen-1,6-bisacrylamid, Diethylentriamin-tris-methacrylamid, Bis(methacrylamido-propoxy)ethan oder 2-Acrylamido-ethylacrylat. Beispiele für mehrfach ungesättigte Vinyl- und Allylverbindungen sind Divinylbenzol, Ethylenglykoldivinylether, Diallylphthalat, Allylmethacrylat, Diallylmaleat, Triallylisocyanurat oder Triallylphosphat.

Die Anteile an konjugiertem Dien und α,β-ungesättigtem Nitril in den im erfindungsgemäßen Verfahren einzusetzenden hydrierten Nitrilkautschuken bzw. den erfindungsgemäßen hydrierten Nitrilkautschuken können in weiten Bereichen variieren. Der Anteil des oder der Summe der konjugierten Diene liegt üblicherweise im Bereich von 20 bis 95 Gew.%, bevorzugt im Bereich von 45 bis 90 Gew.%, besonders bevorzugt im Bereich von 50 bis 85 Gew.%, bezogen auf das Gesamtpolymer. Der Anteil des oder der Summe der α,β-ungesättigten Nitrile liegt üblicherweise bei 5 bis 80 Gew.%, bevorzugt bei 10 bis 55 Gew.%, besonders bevorzugt bei 15 bis 50 Gew.%, bezogen auf das Gesamtpolymer. Die Anteile der Wiederholungseinheiten an konjugiertem Dien und α,β-ungesättigtem Nitril in den erfindungsgemäß einzusetzenden hydrierten Nitrilkautschuken bzw. den erfindungsgemäßen hydrierten Nitrilkautschuken summieren sich jeweils zu 100 Gew.% auf.

Die zusätzlichen Monomere können in Mengen von 0 bis 40 Gew.%, bevorzugt 0 bis 30 Gew.%, besonders bevorzugt 0 bis 26 Gew.%, bezogen auf das Gesamtpolymer, vorliegen. In diesem Fall werden entsprechende Anteile der Wiederholungseinheiten des oder der konjugierten Diene und/oder der Wiederholungseinheiten des oder der α,β-ungesättigten Nitrile durch die Anteile dieser zusätzlichen Monomere ersetzt, wobei sich die Anteile aller Wiederholungseinheiten der Monomere weiterhin jeweils zu 100 Gew.% aufsummieren müssen.

Werden als zusätzliche Monomere Ester der (Meth)acrylsäure eingesetzt, so erfolgt dies üblicherweise in Mengen von 1 bis 25 Gew.%. Werden als zusätzliche Monomere α,β-ungesättigte Mono- oder Dicarbonsäuren eingesetzt, so erfolgt dies üblicherweise in Mengen von weniger als 10 Gew.%.

Bevorzugt sind erfindungsgemäße hydrierte Nitrilkautschuke, die Wiederholungseinheiten abgeleitet von Acrylnitril und 1,3-Butadien aufweisen. Bevorzugt sind ferner erfindungsgemäße hydrierte Nitrilkautschuke, die Wiederholungseinheiten von Acrylnitril, 1,3-Butadien und einem oder mehreren weiteren copolymerisierbaren Monomeren aufweisen. Ebenso bevorzugt sind hydrierte Nitrilkautschuke, die Wiederholungseinheiten von Acrylnitril, 1,3-Butadien und einer oder mehreren $\alpha,\beta$-ungesättigten Mono- oder Dicarbonsäure, deren Estern oder Amiden aufweisen, und insbesondere Wiederholungseinheiten eines Alkylesters einer $\alpha,\beta$-ungesättigten Carbonsäuren, ganz besonders bevorzugt von Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethylhexyl(meth)acrylat, Octyl(meth)acrylat oder Lauryl(meth)acrylat.

In einer bevorzugten Ausführungsform sind die erfindungsgemäßen hydrierten Nitrilkautschuke im Wesentlichen füllstoff-frei. "Im Wesentlichen füllstoff-frei" bedeutet im Rahmen dieser Anmeldung, dass die erfindungsgemäßen hydrierten Nitrilkautschuke weniger als 5 Gew.% Füllstoffe, bezogen auf 100 Gew.% hydrierten Nitrilkautschuk, enthalten.

In einer besonders bevorzugten Ausführungsform enthalten die erfindungsgemäßen hydrierten Nitrilkautschuke bezogen auf 100 Gew.% hydrierten Nitrilkautschuk, weniger als 5 Gew.% Füllstoffe ausgewählt aus der Gruppe bestehend aus Ruß, Kieselsäure, Bariumsulfat, Titandioxid, Zinkoxid, Calciumoxid, Calciumcarbonat, Magnesiumoxid, Aluminiumoxid, Eisenoxid, Aluminiumhydroxid, Magnesiumhydroxid, Aluminiumsilikate, Diatomeenerde, Talkum, Kaoline, Bentonite, Kohlenstoff Nanotubes, Teflon (letzteres bevorzugt in Pulverform), Silikaten und Mischungen der vorgenannten.

Der Stickstoffgehalt wird in den erfindungsgemäßen hydrierten Nitrilkautschuken gemäß DIN 53 625 nach Kjeldahl bestimmt. Aufgrund des Gehalts an polaren Comonomeren sind die Nitrilkautschuke üblicherweise in Methylethylketon bei 20°C $\geq$ 85 Gew.% löslich.

Die Glastemperaturen der erfindungsgemäßen hydrierten Nitrilkautschuken liegen im Bereich -70°C bis +10°C, vorzugsweise im Bereich -60°C bis 0°C.

Die hydrierten Nitrilkautschuke weisen Mooney-Viskositäten ML 1+4 bei 100°C von 10 bis 150 Mooney- Einheiten (MU), vorzugsweise von 20 bis 100 MU auf.

Die Mooney Viskosität der hydrierten Nitrilkautschuke wird in einem Scherscheibenviskosimeter nach DIN 53523/3 bzw. ASTM D 1646 bei 100°C bestimmt.

In einer alternativen Ausführungsform besitzt der erfindungsgemäße hydrierte Nitrilkautschuk

i) einen Gehalt an **Phosphanen, Diphosphanen** oder Mischungen davon, bevorzugt Triphenylphosphan, im Bereich von größer 0 bis 1 Gew.%, bevorzugt im Bereich von 0,1 Gew.% bis 0,9 Gew.%, besonders bevorzugt im Bereich von 0,15 Gew.% bis 0,85 Gew.%, bezogen auf den hydrierten Nitrilkautschuk,
ii) einen Gehalt an **Phosphanoxiden, Diphosphanoxiden** oder Mischungen davon, bevorzugt Triphenylphosphanoxid, im Bereich von 0,25 bis 6 Gew.%, bevorzugt von 0,3 bis 5 Gew.%, besonders bevorzugt von 0,35 bis 4 Gew.%, bezogen auf den hydrierten Nitrilkautschuk, sowie
iii) einen **Gesamthalogengehalt** im Bereich von 25 bis 10.000 ppm, bevorzugt von 30 bis 8.000 ppm, besonders bevorzugt von 45 bis 7.000 ppm, aufweisen,

Bei dieser alternativen Ausführungsform liegt der Hydriergrad des hydrierten Nitrilkautschuks im Bereich von 80 bis 100%, bevorzugt von 90 bis 100%, besonders bevorzugt von 92 bis 100% und ganz besonders bevorzugt von 94 bis 100%.

## Verfahren zur Herstellung der erfindungsgemäßen hydrierten Nitrilkautschuke:

Die erfindungsgemäßen hydrierten Nitrilkautschuke, die

i) einen Gehalt an **Phosphanen, Diphosphanen** oder Mischungen davon, bevorzugt Triphenylphosphan, im Bereich von 0 bis 1,0 Gew.%, bevorzugt von 0 bis 0,9 Gew.%, besonders bevorzugt von 0 bis 0,85 Gew.%, bezogen auf den hydrierten Nitrilkautschuk,
ii) einen Gehalt an **Phosphanoxiden, Diphosphanoxiden** oder Mischungen davon, bevorzugt Triphenylphosphanoxid, im Bereich von 0,25 bis 6 Gew.%, bevorzugt von 0,3 bis 5 Gew.%, besonders bevorzugt von 0,35 bis 4 Gew.%, bezogen auf den hydrierten Nitrilkautschuk, sowie
iii) einen **Gesamthalogengehalt** im Bereich von 25 bis 10.000 ppm, bevorzugt von 30 bis 8.000 ppm, besonders bevorzugt 35 bis 1.000 ppm, ganz bevorzugt von 38 bis 900 ppm, insbesondere bevorzugt von 40 bis 850 ppm, aufweisen.

können hergestellt werden, in dem man einen hydrierten Nitrilkautschuk, der einen Gehalt an Phosphanen, Diphosphanen oder Mischungen davon in einem Bereich von 0,25-5 Gew.%, bevorzugt im Bereich von 0,3-4,5 Gew.%, besonders

bevorzugt im Bereich von 0,4-4,25 Gew.% und insbesondere im Bereich von 0,5-4 Gew.%, bezogen auf den hydrierten Nitrilkautschuk aufweist, mit mindestens einer Schwefelverbindung, die keine zwei miteinander direkt verbundenen Schwefel-Atome aufweist, umsetzt.

Dies gilt gleichermaßen für die Herstellung der alternativen erfindungsgemäßen hydrierten Nitrilkautschuke, die sich von den im vorgenannten Absatz genannten nur dahingehend unterscheiden, dass (i) der Gehalt an Phosphanen, Diphosphanen oder Mischungen davon im Bereich von größer 0 bis 1 Gew.%, bevorzugt von 0,1 Gew.% bis 0,9 Gew.%, besonders bevorzugt im Bereich von 0,15 Gew.% bis 0,85 Gew.%, bezogen auf den hydrierten Nitrilkautschuk, liegt.

Die erfindungsgemäße Umsetzung des Phosphan- und/oder Diphosphanhaltigen hydrierten Nitrilkautschuks mit mindestens einer Schwefelverbindung, die keine zwei miteinander direkt verbundenen Schwefel-Atome aufweist, kann in verschiedenen Varianten durchgeführt werden.

Es hat sich bewährt,

(1) zunächst einen Nitrilkautschuk einer katalytischen Hydrierung in organischer Lösung und in Gegenwart eines Phosphans und/oder Diphosphans der vorgenannten Definitionen zu unterziehen, wobei das Phosphan bzw. Diphosphan entweder (a) als Ligand im Hydrierkatalysator vorliegt ohne weiteren Zusatz von Phosphan bzw. Diphosphan als Co-Katalysator, oder (b) als Ligand im Hydrierkatalysator vorliegt und zusätzlich noch als Co-Katalysator zugesetzt wird, oder (c) als Cokatalysator zugesetzt wird, der Hydrierkatalysator jedoch kein Phosphan oder Diphosphan als Ligand(en) aufweist, und

(2) anschließend den erhaltenen hydrierten Nitrilkautschuk entweder vor, während oder nach der Isolierung, bevorzugt vor oder während der Isolierung, insbesondere im Rahmen einer Wasserdampfdestillation, oder alternativ bevorzugt nach Isolierung in einem separaten Mischvorgang mit mindestens einer Schwefelverbindung, die keine zwei miteinander direkt verbundene Schwefel-Atome aufweist, in Kontakt zu bringen und umzusetzen.

## Schritt 1:

Es hat sich typischerweise bewährt, den hydrierten Nitrilkautschuk, der einen Gehalt an Phosphanen, Diphosphanen oder Mischungen davon im Bereich von 0,25-5 Gew.%, bevorzugt von 0,3-4,5 Gew.%, besonders bevorzugt von 0,4-4,25 Gew.% und insbesondere von 0,5-4 Gew.%, bezogen auf den hydrierten Nitrilkautschuk aufweist, **in einem ersten Schritt durch Hydrierung** herzustellen.

## Hydrierkatalysator:

Bei der katalytischen Hydrierreaktion des erfindungsgemäßen Verfahrens ist mindestens ein Phosphan oder Diphosphan anwesend:

In einer **ersten Ausführungsform** ist dieses Phosphan oder Diphosphan als Ligand im eingesetzten Hydrierkatalysator anwesend. Es ist kein separater Zusatz eines Phosphans oder Diphosphans erforderlich.

In einer **zweiten Ausführungsform** wird in der Hydrierreaktion neben dem Phosphan- oder Diphosphan Ligandenhaltigen Hydrierkatalysator ein Phosphan- oder Diphosphan als sogenannter Cokatalysator zugesetzt.

In einer **dritten Ausführungsform** kann ein beliebiger Hydrierkatalysator eingesetzt werden, der kein Phosphan oder Diphosphan enthält, und das Phosphan bzw. Diphosphan wird als Cokatalysator zugesetzt.

In einer bevorzugten Ausführungsform wird die Hydrierung unter Einsatz mindestens eines Katalysators durchgeführt, der mindestens einen Phosphan- bzw. Diphosphan-Liganden aufweist.

Bevorzugt ist weiterhin die Hydrierung unter Einsatz mindestens eines Katalysators, der mindestens einen Phosphan- bzw. Diphosphan-Liganden aufweist, und zusätzlich in Gegenwart mindestens eines Phosphans oder Diphosphans als Cokatalysator.

Bei allen Ausführungsformen basieren die Hydrierkatalysatoren typischerweise auf den Edelmetallen Rhodium, Ruthenium, Osmium, Palladium, Platin oder Iridium, wobei Rhodium, Ruthenium und Osmium bevorzugt sind. Die im Folgenden genannten Katalysatoren sind bei allen Ausführungsformen einsetzbar.

Einsetzbar sind **rhodiumhaltige Komplexkatalysatoren** der allgemeinen Formel (A),

$$Rh(X)_n(L)_m \qquad (A)$$

wobei

**X** gleich oder verschieden sind und Wasserstoff, Halogen, Pseudohalogen, $SnCl_3$ oder Carboxylat bedeutet,
**n** gleich 1, 2 oder 3 ist, bevorzugt 1 oder 3,
**L** gleich oder verschieden sind und für mono- oder bidentate Liganden auf der Basis von Phosphor, Arsen oder Antimon stehen,
**m** soweit L für monodentate Liganden steht, gleich 2, 3 oder 4 ist, oder soweit L für bidentate Liganden steht, gleich 1 oder 1,5 oder 2 oder 3 oder 4 ist

In der allgemeinen Formel (A) sind X gleich oder verschieden und bedeuten bevorzugt Wasserstoff oder Chlor. **L** steht in der allgemeinen Formel (A) bevorzugt für ein Phosphan oder Diphosphan entsprechend den weiter oben dargestellten allgemeinen Formeln (I-a) und (I-b) inklusive der dort genannten allgemeinen, bevorzugten und besonders bevorzugten Bedeutungen.

Besonders bevorzugte Katalysatoren der allgemeinen Formel (A) sind Tris(triphenylphosphan)rhodium-(I)-chlorid, Tris(tripenylphosphan)rhodium-(III)-chlorid, Tris(dimethylsulfoxid)rhodium-(III)-chlorid, Hydridorhodiumtetrakis(triphenylphosphan) und die entsprechenden Verbindungen, in denen Triphenylphosphin ganz oder teilweise durch Tricyclohexylphosphin ersetzt ist.

Einsetzbar sind ferner **rutheniumhaltige Komplexkatalysatoren.** Diese sind z.B. in DE-A 39 21 264 und EP-A-0 298 386 beschrieben. Sie weisen typischerweise die allgemeine Formel (B) auf,

$$RuX_n[(L^1)_m(L^2)_{5-z}] \qquad (B)$$

worin

**X** gleich oder verschieden sind und für Wasserstoff, Halogen, $SnCl_3$, CO, NO oder $R^6$-COO stehen,
**L¹** gleich oder verschieden sind und für Wasserstoff, Halogen, $R^6$-COO, NO, CO oder ein Cyclopentadienyl-Ligand der folgenden allgemeinen Formel (2)stehen,

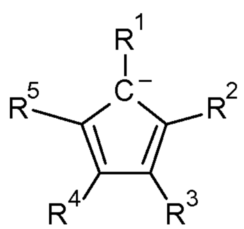
(2)

worin
**$R^1$ bis $R^5$** gleich oder verschieden sind und Wasserstoff, Methyl, Ethyl, Propyl, Butyl, Hexyl oder Phenyl bedeuten oder alternativ zwei benachbarte Reste aus $R^1$ bis $R^5$ auch verbrückt sein können, so dass ein Indenyl oder Fluorenylsystem resultiert,

**$L^2$** ein Phosphan, Diphosphan oder Arsan und
**n** 0, 1 oder 2 ist,
**m** 0, 1, 2 oder 3,
**z** 1, 2, 3 oder 4 ist, und
**$R^6$** einen Rest mit 1 bis 20 C-Atome darstellt, der verzweigt oder unverzweigt, verbrückt oder unverbrückt und/oder teilweise aromatisch sein kann, und bevorzugt $C_1$-$C_4$ Alkyl bedeutet.

Beispiele für **$L^1$ Liganden** in der allgemeinen Formel (B) vom Typ des Cyclopentadienyl Liganden der allgemeinen Formel (2) umfassen Cyclopentadienyl, Pentamethylcyclopentadienyl, Ethyltetramethylcyclopentadienyl, Pentaphenylcyclopentadienyl, Dimethyltriphenylcyclo-pentadienyl, Indenyl und Fluorenyl. Die Benzolringe in den $L^1$-Liganden vom Indenyl- und Fluorenyl-Typ können durch $C_1$-$C_6$-Alkylreste, insbesondere Methyl, Ethyl und Isopropyl, $C_1$-$C_4$-Alkoxyreste, insbesondere Methoxy und Ethoxy, Arylreste, insbesondere Phenyl, und Halogene, insbesondere Fluor und Chlor, substituiert sein. Bevorzugte $L^1$-Liganden vom Typ Cyclopentadienyl sind die jeweils unsubstituierten Reste Cyclopentadienyl, Indenyl und Fluorenyl.

Im **$L^1$-Liganden** in der allgemeinen Formel (B) vom Typ ($R^6$-COO) umfasst $R^6$ beispielsweise geradkettige oder verzweigte, gesättigte Kohlenwasserstoffreste mit 1 bis 20, bevorzugt 1 bis 12, insbesondere 1 bis 6 C-Atomen, cyclische, gesättigte Kohlenwasserstoffreste mit 5 bis 12, bevorzugt 5 bis 7 C-Atomen, ferner aromatische Kohlenwasserstoffreste mit 6 bis 18, bevorzugt 6 bis 10 C-Atomen, oder Aryl-substituierte Alkylreste, die bevorzugt einen geradkettigen oder verzweigten $C_1$-$C_6$ Alkylrest und einen $C_6$-$C_{18}$ Arylrest, vorzugsweise Phenyl, aufweisen.

Die vorstehend erläuterten **Reste $R^6$** in ($R^6$-COO) im Liganden $L^1$ der allgemeinen Formel (B) können gegebenenfalls durch Hydroxy, $C_1$-$C_6$-Alkoxy, $C_1$-$C_6$-Carbalkoxy, Fluor, Chlor oder Di- $C_1$-$C_4$-alkylamino, substituiert sein, die Cycloalkyl-, Aryl- und Aralkylreste darüber hinaus durch $C_1$-$C_6$-Alkyl, Alkyl-, Cycloalkyl- und Aralkylgruppen können Ketogruppen enthalten. Beispiele für den Rest $R^6$ sind Methyl, Ethyl, Propyl, iso-Propyl, tert.-Butyl, Cyclohexyl, Phenyl, Benzyl und Trifluormethyl. Bevorzugte Reste $R^6$ sind Methyl, Ethyl und tert.-Butyl.

Der **$L^2$ Ligand** steht in der allgemeinen Formel (B) bevorzugt für ein Phosphan oder Diphosphan entsprechend den oben dargestellten allgemeinen Formeln (1-a) und (1-b) inklusive der dort genannten allgemeinen, bevorzugten und besonders bevorzugten Bedeutungen oder für ein Arsan der allgemeinen Formel (3)

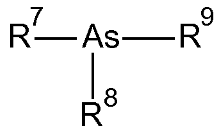

(3)

Bevorzugte **Liganden $L^2$** der allgemeinen Formel (3) sind Triphenylarsan, Ditolylphenylarsan, Tris-(4-ethoxyphenyl)-arsan, Diphenylcyclohexylarsan, Dibutylphenylarsan und Diethylphenylarsan.

Bevorzugte **rutheniumhaltige Katalysatoren der allgemeinen Formel (B)** sind aus der nachfolgenden Gruppe ausgewählt, wobei "Cp" für Cyclopentadienyl, d.h. $C_5H_5^-$, "Ph" für Phenyl, "Cy" für Cyclohexyl und "dppe" für 1,2-bis(diphenylphosphino)ethan steht: $RuCl_2(PPh_3)_3$; $RuHCl(PPh_3)_3$; $RuH_2(PPh_3)_3$; $RuH_2(PPh_3)_4$; $RuH_4(PPh_3)_3$; $RuH(CH_3COO)(PPh_3)_3$; $RuH(C_2H_5COO)(PPh_3)_3$; $RuH(CH_3COO)_2(PPh_3)_2$; $RuH(NO)_2(PPh_3)_2$; $Ru(NO)_2(PPh_3)_2$; $RuCl(Cp)(PPh_3)_2$; $RuH(Cp)(PPh_3)_2$; $Ru(SnCl_3)(Cp)(PPh_3)_2$; $RuCl(\mu^5\text{-}C_9H_7)(PPh_3)_2$; $RuH(\mu^5\text{-}C_9H_7)(PPh_3)_2$; $Ru(SnCl_3)(\mu^5\text{-}C_9H_7)(PPh_3)_2$; $RuCl(\mu^5\text{-}C_{13}H_9)(PPh_3)_2$; $RuH(\mu^5\text{-}C_{13}H_9)(PPh_3)_2$; $Ru(SnCl_3)(\mu^5\text{-}C_{13}H_9)(PPh_3)_2$; $RuCl(\mu^5\text{-}C_9H_7)(dppe)$; $RuHCl(CO)(PCy_3)$; $RuH(NO)(CO)(PCy_3)_3$; $RuHCl(CO)_2(PPh_3)_2$; $RuCl_2(CO)(dppe)$ $RuHCl(CO)(PCy_3)$, $RuHCl(CO)(dppe)_2$, $RuH(CH_3COO)(PPh_3)_3$; $RuH(CH_3COO)_2(PPh_3)_2$; und $RuH(CH_3COO)(PPh_3)_3$.

Als Katalysatoren sind ferner solche der **allgemeinen Formel (C)** geeignet,

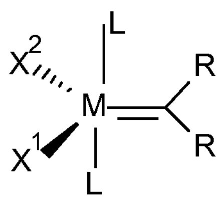

(C)

worin

| | |
|---|---|
| M | Osmium oder Ruthenium bedeutet, |
| $X^1$ und $X^2$ | gleich oder verschieden und zwei Liganden, bevorzugt anionische Liganden, sind, |
| L | gleiche oder verschiedene Liganden, bevorzugt neutrale Elektronen-Donoren sind, |
| R | gleich oder verschieden sind und Wasserstoff, Alkyl, bevorzugt $C_1$-$C_{30}$-Alkyl, Cycloalkyl, bevorzugt $C_3$-$C_{20}$-Cycloalkyl, Alkenyl, bevorzugt $C_2$-$C_{20}$-Alkenyl, Alkinyl, bevorzugt $C_2$-$C_{20}$-Alkinyl, Aryl, bevorzugt $C_6$-$C_{24}$-Aryl, Carboxylat, bevorzugt $C_1$-$C_{20}$-Carboxylat, Alkoxy, bevorzugt $C_1$-$C_{20}$-Alkoxy, Alkenyloxy, bevorzugt $C_2$-$C_{20}$-Alkenyloxy, Alkinyloxy, bevorzugt $C_2$-$C_{20}$-Alkinyloxy, Aryloxy, bevorzugt $C_6$-$C_{24}$-Aryloxy, Alkoxycarbonyl, bevorzugt $C_2$-$C_{20}$-Alkoxycarbonyl, Alkylamino, bevorzugt $C_1$-$C_{30}$-Alkylamino, Alkylthio, bevorzugt $C_1$-$C_{30}$-Alkylthio, Arylthio, bevorzugt $C_6$-$C_{24}$-Arylthio, Alkylsulfonyl, bevorzugt $C_1$-$C_{20}$-Alkylsulfonyl, oder Alkylsulfinyl, bevorzugt $C_1$-$C_{20}$-Alkylsulfinyl, darstellen, wobei diese Reste alle jeweils optional durch ein oder mehrere Alkyl-, Halogen-, Alkoxy-, Aryl- oder Heteroaryl-Reste substituiert sein können, oder alternativ beide Reste R unter Einbindung des gemeinsamen C-Atoms, an das sie gebunden sind, zu einer cyclischen Gruppe verbrückt sind, die aliphatischer oder aromatischer Natur sein kann, gegebenenfalls substituiert ist und ein oder mehrere Heteroatome enthalten kann. |

In einer Ausführungsform der Katalysatoren der allgemeinen Formel (C) ist der eine Rest R Wasserstoff und der andere Rest R bedeutet $C_1$-$C_{20}$-Alkyl, $C_3$-$C_{10}$-Cycloalkyl, $C_2$-$C_{20}$-Alkenyl, $C_2$-$C_{20}$-Alkinyl, $C_6$-$C_{24}$-Aryl, $C_1$-$C_{20}$-Carboxylat, $C_1$-$C_{20}$-Alkoxy, $C_2$-$C_{20}$-Alkenyloxy, $C_2$-$C_{20}$-Alkinyloxy, $C_6$-$C_{24}$-Aryloxy, $C_2$-$C_{20}$-Alkoxycarbonyl, $C_1$-$C_{30}$-Alkylamino, $C_1$-$C_{30}$-Alkylthio, $C_6$-$C_{24}$-Arylthio, $C_1$-$C_{20}$-Alkylsulfonyl oder $C_1$-$C_{20}$-Alkylsulfinyl, wobei diese Reste alle jeweils durch ein oder mehrere Alkyl-, Halogen-, Alkoxy-, Aryl- oder Heteroaryl-Reste substituiert sein können.

In den Katalysatoren der allgemeinen Formel (C) sind **$X^1$ und $X^2$** gleich oder verschieden und stellen zwei

Liganden, bevorzugt anionische Liganden, dar.

$X^1$ und $X^2$ können z.B. Wasserstoff, Halogen, Pseudohalogen, geradkettige oder verzweigte $C_1$-$C_{30}$-Alkyl, $C_6$-$C_{24}$-Aryl, $C_1$-$C_{20}$-Alkoxy, $C_6$-$C_{24}$-Aryloxy, $C_3$-$C_{20}$-Alkyldiketonat, $C_6$-$C_{24}$-Aryldiketonat, $C_1$-$C_{20}$-Carboxylat, $C_1$-$C_{20}$-Alkylsulfonat, $C_6$-$C_{24}$-Arylsulfonat, $C_1$-$C_{20}$-Alkylthiol, $C_6$-$C_{24}$-Arylthiol, $C_1$-$C_{20}$-Alkylsulfonyl, $C_1$-$C_{20}$-Alkylsulfinyl, Mono- oder Dialkylamid, Mono- oder Dialkylcarbamat, Mono- oder Dialkylthiocarbamat, Mono-oder Dialkyldithiocarbamat oder Mono- oder Dialkylsulfonamid Reste bedeuten.

Die vorgenannten Reste $X^1$ und $X^2$ können ferner durch ein oder mehrere weitere Reste substituiert sein, beispielsweise durch Halogen, bevorzugt Fluor, $C_1$-$C_{10}$-Alkyl, $C_1$-$C_{10}$-Alkoxy oder $C_6$-$C_{24}$-Aryl, wobei auch diese Reste gegebenenfalls wiederum durch ein oder mehrere Substituenten substituiert sein können, die aus der Gruppe umfassend Halogen, bevorzugt Fluor, $C_1$-$C_5$-Alkyl, $C_1$-$C_5$-Alkoxy und Phenyl ausgewählt sind.

In einer weiteren Ausführungsform sind $X^1$ und $X^2$ gleich oder verschieden und bedeuten Halogen, insbesondere Fluor, Chlor, Brom oder Jod, Benzoat, $C_1$-$C_5$-Carboxylat, $C_1$-$C_5$-Alkyl, Phenoxy, $C_1$-$C_5$-Alkoxy, $C_1$-$C_5$-Alkylthiol, $C_6$-$C_{24}$-Arylthiol, $C_6$-$C_{24}$-Aryl oder $C_1$-$C_5$-Alkylsulfonat.

In einer weiteren Ausführungsform sind $X^1$ und $X^2$ identisch und bedeuten Halogen, insbesondere Chlor, $CF_3COO$, $CH_3COO$, $CFH_2COO$, $(CH_3)_3CO$, $(CF_3)_2(CH_3)CO$, $(CF_3)(CH_3)_2CO$, PhO (Phenoxy), MeO (Methoxy), EtO (Ethoxy), Tosylat (p-$CH_3$-$C_6H_4$-$SO_3$), Mesylat ($CH_3SO_3$) oder $CF_3SO_3$ (Trifluormethansulfonat).

In der allgemeinen Formel (C) sind **L** gleiche oder verschiedene Liganden und sind bevorzugt neutrale Elektronen-Donoren.

Die beiden Liganden L können beispielsweise unabhängig voneinander einen Phosphan-, sulfonierten Phosphan-, Phosphat-, Phosphinit-, Phosphonit-, Arsan-, Stiban-, Ether-, Amin-, Amid-, Sulfoxid-, Carboxyl-, Nitrosyl-, Pyridin-, Thioether-, einen Imidazolin- oder einen Imidazolidin-Liganden darstellen.

Bevorzugt bedeuten die beiden Liganden L unabhängig voneinander einen $C_6$-$C_{24}$-Aryl-, $C_1$-$C_{10}$-Alkyl- oder $C_3$-$C_{20}$-Cycloalkyl-Phosphan-Liganden, einen sulfonierten $C_6$-$C_{24}$-Aryl- oder sulfonierten $C_1$-$C_{10}$-Alkyl-Phosphan-Liganden, einen $C_6$-$C_{24}$-Aryl- oder $C_1$-$C_{10}$-Alkyl-Phosphinit-Liganden, einen $C_6$-$C_{24}$-Aryl- oder $C_1$-$C_{10}$-Alkylphosphonit-Liganden, einen $C_6$-$C_{24}$-Aryl- oder $C_1$-$C_{10}$-Alkylphosphit-Liganden, einen $C_6$-$C_{24}$-Aryl- oder $C_1$-$C_{10}$-Alkylarsan-Liganden, einen $C_6$-$C_{24}$-Aryl- oder $C_1$-$C_{10}$-Alkylamin-Liganden, einen Pyridin-Liganden, einen $C_6$-$C_{24}$-Aryl- oder $C_1$-$C_{10}$-Alkyl-Sulfoxid-Liganden, einen $C_6$-$C_{24}$-Aryl- oder $C_1$-$C_{10}$-Alkyl-Ether-Liganden oder einen $C_6$-$C_{24}$-Aryl- oder $C_1$-$C_{10}$-Alkylamid-Liganden, die alle jeweils durch eine Phenylgruppe substituiert sein können, die wiederum entweder unsubstituiert oder durch einen oder mehrere Halogen-, $C_1$-$C_5$-Alkyl- oder $C_1$-$C_5$-AlkoxyRest(e) substituiert ist.

Die Bezeichnung "Phosphan" schließt beispielsweise $PPh_3$, $P(p\text{-}Tol)_3$, $P(o\text{-}Tol)_3$, $PPh(CH_3)_2$, $P(CF_3)_3$, $P(p\text{-}FC_6H_4)_3$, $P(p\text{-}CF_3C_6H_4)_3$, $P(C_6H_4\text{-}SO_3Na)_3$, $P(CH_2C_6H_4\text{-}SO_3Na)_3$, $P(iso\text{-}Propyl)_3$, $P(CHCH_3(CH_2CH_3))_3$, $P(Cyclopentyl)_3$, $P(Cyclohexyl)_3$, $P(Neopentyl)_3$ und $P(Neophenyl)_3$ ein, wobei "Ph" für Phenyl und "Tol" für Tolyl steht.

Die Bezeichnung "Phosphinit" schließt beispielsweise Triphenylphosphinit, Tricyclohexylphosphinit, Triisopropylphosphinit und Methyldiphenylphosphinit ein.

Die Bezeichnung "Phosphit" schließt beispielsweise Triphenylphosphit, Tricyclohexylphosphit, Tri-tert.-Butylphosphit, Triisopropylphosphit und Methyldiphenylphosphit ein.

Die Bezeichnung "Stiban" schließt Triphenylstiban, Tricyclohexylstiban und Trimethylstiban ein.

Die Bezeichnung "Sulfonat" schließt z.B. Trifluoromethansulfonat, Tosylat und Mesylat ein.

Die Bezeichnung "Sulfoxid" schließt beispielsweise $(CH_3)_2S(=O)$ und $(C_6H_5)_2S=O$ ein.

Die Bezeichnung "Thioether" schließt beispielsweise $CH_3SCH_3$, $C_6H_5SCH_3$, $CH_3OCH_2CH_2SCH_3$ und Tetrahydrothiophen ein.

Die Bezeichnung "Pyridin" soll im Rahmen dieser Anmeldung als Oberbegriff sämtliche Liganden auf Basis von Pyridin einschließen, wie sie z.B. von Grubbs in der WO-A-03/011455 genannt werden. Hierzu gehören, Pyridin sowie Pyridin, welches ein- oder mehrfach substituiert ist in Form der Picoline ($\alpha$-, $\beta$-, und $\gamma$-Picolin), Lutidine (2,3-, 2,4-, 2,5-, 2,6-, 3,4- und 3,5-Lutidin), Collidin (2,4,6-Trimethylpyridin), Trifluormethylpyridin, Phenylpyridin, 4-(Dimethylamino)pyridin, Chlorpyridine, Brompyridine, Nitropyridine, Chinolin, Pyrimidin, Pyrrol, Imidazol und Phenylimidazol.

Handelt es sich bei einem oder beiden der Liganden L in Formel (C) um einen Imidazolin- und/oder Imidazolidinrest (nachfolgend auch gemeinsam als "Im"-Ligand(en) bezeichnet), so weist dieser üblicherweise eine Struktur der allgemeinen Formeln (4a) oder (4b) auf,

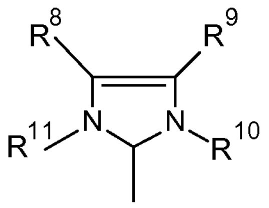

(4a)

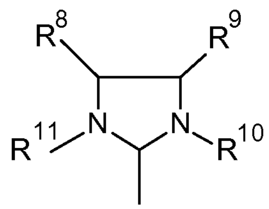

(4b)

worin

$R^8$, $R^9$, $R^{10}$, $R^{11}$ gleich oder verschieden sind und Wasserstoff, geradkettiges oder verzweigtes $C_1$-$C_{30}$-Alkyl, $C_3$-$C_{20}$-Cycloalkyl, $C_2$-$C_{20}$-Alkenyl, $C_2$-$C_{20}$-Alkinyl, $C_6$-$C_{24}$-Aryl, $C_1$-$C_{20}$-Carboxylat, $C_1$-$C_{20}$-Alkoxy, $C_2$-$C_{20}$-Alkenyloxy, $C_2$-$C_{20}$-Alkinyloxy, $C_6$-$C_{20}$-Aryloxy, $C_2$-$C_{20}$-Alkoxycarbonyl, $C_1$-$C_{20}$-Alkylthio, $C_6$-$C_{20}$-Arylthio, $C_1$-$C_{20}$-Alkylsulfonyl, $C_1$-$C_{20}$-Alkylsulfonat, $C_6$-$C_{20}$-Arylsulfonat oder $C_1$-$C_{20}$-Alkylsulfinyl bedeuten.

Gegebenenfalls kann/können einer oder mehrere der Reste $R^8$, $R^9$, $R^{10}$, $R^{11}$ unabhängig voneinander durch einen oder mehrere Substituenten, vorzugsweise geradkettiges oder verzweigtes $C_1$-$C_{10}$-Alkyl, $C_3$-$C_8$-Cycloalkyl, $C_1$-$C_{10}$-Alkoxy oder $C_6$-$C_{24}$-Aryl substituiert sein, wobei diese vorgenannten Substituenten wiederum durch ein oder mehrere Reste, vorzugsweise ausgewählt aus der Gruppe Halogen, insbesondere Fluor, Chlor oder Brom, $C_1$-$C_5$-Alkyl, $C_1$-$C_5$-Alkoxy und Phenyl substituiert sein können.

Nur zur Klarstellung sei hinzugefügt, dass die in den allgemeinen Formeln (4a) und (4b) im Rahmen dieser Anmeldung dargestellten Strukturen mit den in der Literatur für diesen Rest häufig auch zu findenden Strukturen (4a') und (4b'), die den Carben-Charakter des Rests hervorheben, gleichbedeutend sind. Dies gilt entsprechend auch für die zugehörigen bevorzugten, nachfolgend noch dargestellten Strukturen (5a)-(5f). Nachfolgend werden diese Reste zusammengefasst alle als "Im"-Rest bezeichnet.

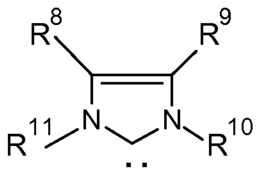

(4a´)

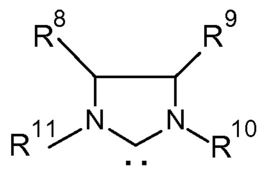

(4b´)

In einer bevorzugten Ausführungsform der Katalysatoren der allgemeinen Formel (C) bedeuten $R^8$ und $R^9$ unabhängig voneinander H, $C_6$-$C_{24}$-Aryl, besonders bevorzugt Phenyl, geradkettiges oder verzweigtes $C_1$-$C_{10}$-Alkyl, besonders bevorzugt Propyl oder Butyl, oder bilden zusammen unter Einschluss der Kohlenstoffatome, an die sie gebunden sind, einen Cycloalkyl- oder Aryl-Rest, wobei alle vorgenannten Reste gegebenenfalls wiederum durch ein oder mehrere weitere Reste substituiert sein können, ausgewählt aus der Gruppe umfassend geradkettiges oder verzweigtes $C_1$-$C_{10}$-Alkyl, $C_1$-$C_{10}$-Alkoxy, $C_6$-$C_{24}$-Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

In einer bevorzugten Ausführungsform der Katalysatoren der allgemeinen Formel (C) sind ferner die Reste $R^{10}$ und $R^{11}$ gleich oder verschieden und bedeuten geradkettiges oder verzweigtes $C_1$-$C_{10}$-Alkyl, besonders bevorzugt Methyl, i-Propyl oder Neopentyl, $C_3$-$C_{10}$-Cycloalkyl, bevorzugt Adamantyl, $C_6$-$C_{24}$-Aryl, besonders bevorzugt Phenyl, $C_1$-$C_{10}$-Alkylsulfonat, besonders bevorzugt Methansulfonat, $C_6$-$C_{10}$-Arylsulfonat, besonders bevorzugt p-Toluolsulfonat.

Gegebenenfalls sind die vorgenannten Reste als Bedeutungen von $R^{10}$ und $R^{11}$ substituiert durch einen oder mehrere weitere Reste ausgewählt aus der Gruppe umfassend geradkettiges oder verzweigtes $C_1$-$C_5$-Alkyl, insbesondere Methyl, $C_1$-$C_5$-Alkoxy, Aryl und eine funktionelle Gruppe ausgewählt aus Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen, insbesondere Fluor, Chlor und Brom.

Insbesondere können die Reste $R^{10}$ und $R^{11}$ gleich oder verschieden sein und bedeuten i-Propyl, Neopentyl, Adamantyl, Mesityl (2,4,6-Trimethylphenyl), 2,6-Difluorphenyl, 2,4,6-Trifluorphenyl oder 2,6-Diisopropylphenyl.

Besonders bevorzugte Im-Reste haben die nachfolgenden Strukturen (5a) bis (5f), wobei Ph jeweils für einen

Phenyl-Rest, Bu für einen Butyl-Rest und Mes jeweils für einen 2,4,6-Trimethylphenyl-Rest steht oder Mes alternativ in allen Fällen für 2,6-Diisopropylphenyl steht.

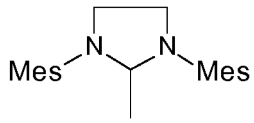

(5a)

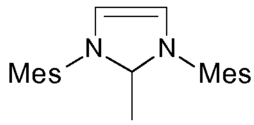

(5b)

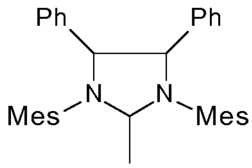

(5c)

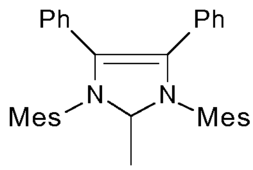

(5d)

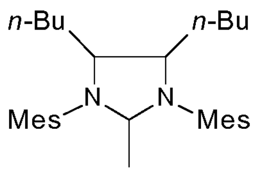

(5e)

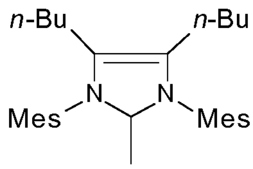

(5f)

Verschiedenste Vertreter der Katalysatoren der Formel (C) sind prinzipiell bekannt, so z.B. aus der WO-A-96/04289 **und der** WO-A-97/06185**.**

Alternativ zu den bevorzugten Im-Resten steht einer oder beide Liganden L in der allgemeinen Formel (C) bevorzugt auch für gleiche oder verschiedene Trialkylphosphin-Liganden, worin mindestens eine der Alkylgruppen eine sekundäre Alkylgruppe oder ein Cycloalkylgruppe darstellt, bevorzugt iso-Propyl, iso-Butyl, sec-Butyl, Neopentyl, Cyclopentyl oder Cyclohexyl.

Besonders bevorzugt stehen in der allgemeinen Formel (C) einer oder beide Liganden L für einen Trialkylphosphin-Liganden, worin mindestens eine der Alkylgruppen eine sekundäre Alkylgruppe oder ein Cycloalkylgruppe darstellt, bevorzugt iso-Propyl, iso-Butyl, sec-Butyl, Neopentyl, Cyclopentyl oder Cyclohexyl.

Besonders bevorzugt sind Katalysatoren, die unter die allgemeine Formel (C) fallen, und die Strukturen (6) (Grubbs (I)-Katalysator) und (7) (Grubbs (II)-Katalysator), wobei Cy für Cyclohexyl steht, besitzen.

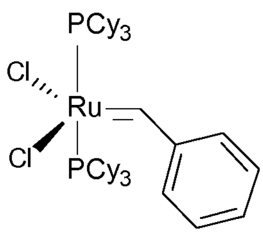

(6)

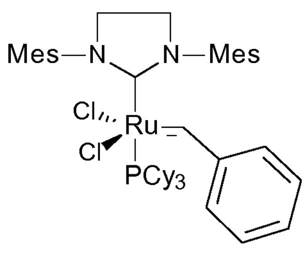

(7)

Als Katalysatoren sind ferner bevorzugt solche **der allgemeinen Formel (C1)** einsetzbar,

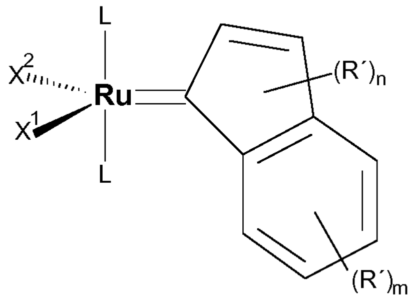

(C1)

worin

| | |
|---|---|
| $X^1$, $X^2$ und L | die gleichen allgemeinen, bevorzugten und besonders bevorzugten Bedeutungen haben können wie in der allgemeinen Formel (C), |
| n | gleich 0, 1 oder 2 ist, |
| m | gleich 0, 1, 2, 3 oder 4 ist und |
| R' | gleich oder verschieden sind und Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Reste bedeuten, die alle jeweils durch ein oder mehrere Alkyl-, Halogen-, Alkoxy-, Aryl- oder Heteroaryl-Reste substituiert sein können. |

Als bevorzugter Katalysator, der unter die Formel (C1) fällt, kann z.B. derjenige der Formeln (8a) und (8b) eingesetzt werden, wobei Mes für 2,4,6-Trimethylphenyl und Ph für Phenyl steht.

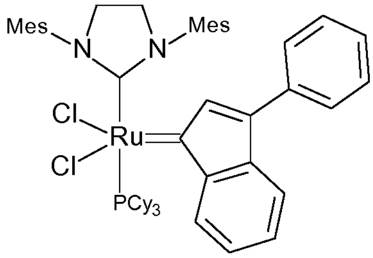

**(8a)**

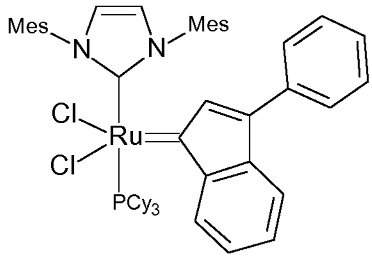

**(8b)**

Diese Katalysatoren sind z.B. aus W**O-A-2004/112951** bekannt. Katalysator (8a) wird auch als Nolan Katalysator bezeichnet.

Als Katalysatoren sind ferner bevorzugt solche **der allgemeinen Formel (D)** einsetzbar,

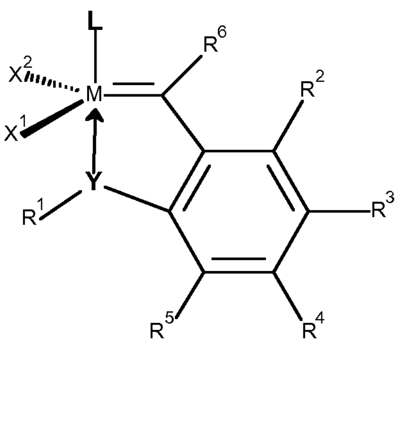

**(D)**

worin

| | |
|---|---|
| M | Ruthenium oder Osmium bedeutet, |
| $X^1$ und $X^2$ | gleiche oder verschiedene Liganden, bevorzugt anionische Liganden sind, |
| Y | Sauerstoff (O), Schwefel (S), einen Rest N-$R^1$ oder einen Rest P-$R^1$ bedeutet, wobei $R^1$ die nach- |

| | |
|---|---|
| | folgend genannten Bedeutungen besitzt, |
| $R^1$ | einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest darstellt, die alle jeweils optional durch ein oder mehrere Alkyl-, Halogen-, Alkoxy-, Aryl- oder Heteroaryl-Reste substituiert sein können, |
| $R^2$, $R^3$, $R^4$ und $R^5$ | gleich oder verschieden sind und Wasserstoff, organische oder anorganische Reste darstellen, |
| $R^6$ | Wasserstoff, einen Alkyl-, Alkenyl-, Alkinyl- oder einen Aryl-Rest bedeutet und |
| L | ein Ligand ist, der die gleichen Bedeutungen besitzt wie für die Formel (C) genannt. |

Die Katalysatoren der allgemeinen Formel (D) sind prinzipiell bekannt und z.B. von Hoveyda et al. in US 2002/0107138 A1 und Angew. Chem. Int. Ed. 2003, 42, 4592 beschrieben, bzw. von Grela in WO-A-2004/035596**,** Eur. J. Org. Chem 2003, 963-966 und Angew. Chem. Int. Ed. 2002, 41, 4038 sowie in J. Org. Chem. 2004, 69, 6894-96 und Chem. Eur. J 2004, 10, 777-784 sowie in US 2007/043180**.** Die Katalysatoren sind käuflich erhältlich bzw. gemäß den angegebenen Literaturstellen herstellbar.

In den Katalysatoren der allgemeinen Formel (D) steht L für einen Liganden, der üblicherweise eine Elektronen-Donor-Funktion besitzt und die gleichen allgemeinen, bevorzugten und besonders bevorzugten Bedeutungen annehmen kann wie L in der allgemeinen Formel (C). Darüber hinaus gilt, dass L in der allgemeinen Formel (D) bevorzugt einen $P(R^7)_3$ Rest, wobei $R^7$ unabhängig voneinander $C_1$-$C_6$ Alkyl, $C_3$-$C_8$-Cycloalkyl oder Aryl bedeuten, oder aber einen gegebenenfalls substituierten Imidazolin oder Imidazolidinrest ("Im") darstellt.

**$C_1$-$C_6$-Alkyl** steht z.B. für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl und n-Hexyl.

**$C_3$-$C_8$-Cycloalkyl** umfasst Cyclopropyl, Cyclobutyl, Cylopentyl, Cyclohexyl, Cycloheptyl und Cyclooctyl.

**Aryl** umfasst einen aromatischen Rest mit 6 bis 24 Gerüstkohlenstoffatomen, bevorzugte mono-, bi- oder tricyclische carbocyclische aromatische Reste mit 6 bis 10 Gerüstkohlenstoffatomen, insbesondere Phenyl, Biphenyl, Naphthyl, Phenanthrenyl oder Anthracenyl.

Der Imidazolin bzw. Imidazolidinrest **(Im)** weist die gleiche allgemeinen, bevorzugten und besonders bevorzugten Strukturen auf wie bei den Katalysatoren der allgemeinen Formel (C).

Besonders geeignet sind Katalysatoren der allgemeinen Formel (D), worin die Reste $R^{10}$ und $R^{11}$ gleich oder verschieden sind und geradkettiges oder verzweigtes $C_1$-$C_{10}$-Alkyl, besonders bevorzugt i-Propyl oder Neopentyl, $C_3$-$C_{10}$-Cycloalkyl, bevorzugt Adamantyl, $C_6$-$C_{24}$-Aryl, besonders bevorzugt Phenyl, $C_1$-$C_{10}$-Alkylsulfonat, besonders bevorzugt Methansulfonat, oder $C_6$-$C_{10}$-Arylsulfonat, besonders bevorzugt p-Toluolsulfonat bedeuten.

Gegebenenfalls sind die vorgenannten Reste als Bedeutungen von $R^{10}$ und $R^{11}$ substituiert durch einen oder mehrere weitere Reste ausgewählt aus der Gruppe umfassend geradkettiges oder verzweigtes $C_1$-$C_5$-Alkyl, insbesondere Methyl, $C_1$-$C_5$-Alkoxy, Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

Insbesondere können die Reste $R^{10}$ und $R^{11}$ gleich oder verschieden sein und bedeuten i-Propyl, Neopentyl, Adamantyl oder Mesityl.

Besonders bevorzugte Imidazolin- bzw. Imidazolidinreste (Im) haben die bereits zuvor genannten Strukturen (5a-5f), wobei Mes jeweils für 2,4,6-Trimethylphenyl steht.

In den Katalysatoren der allgemeinen Formel (D) besitzen **$X^1$ und $X^2$** die gleichen allgemeinen, bevorzugten und besonders bevorzugten Bedeutungen wie in den Katalysatoren der allgemeinen Formel (C).

In der allgemeinen Formel (D) bedeutet der **Rest $R^1$** einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest, die alle jeweils optional durch ein oder mehrere Alkyl-, Halogen-, Alkoxy-, Aryl- oder Heteroaryl-Reste substituiert sein können.

Üblicherweise bedeutet der Rest $R^1$ einen $C_1$-$C_{30}$-Alkyl, $C_3$-$C_{20}$-Cylcoalkyl, $C_2$-$C_{20}$-Alkenyl, $C_2$-$C_{20}$-Alkinyl, $C_6$-$C_{24}$-Aryl, $C_1$-$C_{20}$-Alkoxy, $C_2$-$C_{20}$-Alkenyloxy, $C_2$-$C_{20}$-Alkinyloxy, $C_6$-$C_{24}$-Aryloxy, $C_2$-$C_{20}$-Alkoxycarbonyl, $C_1$-$C_{20}$-Alkylamino-, $C_1$-$C_{20}$-Alkylthio, $C_6$-$C_{24}$-Arylthio, $C_1$-$C_{20}$-Alkylsulfonyl oder $C_1$-$C_{20}$-Alkylsulfinyl Rest, die alle jeweils optional durch ein oder mehrere Alkyl-, Halogen-, Alkoxy-, Aryl- oder Heteroaryl-Reste substituiert sein können.

Bevorzugt steht $R^1$ für einen $C_3$-$C_{20}$-Cylcoalkyl-Rest, einen $C_6$-$C_{24}$-Aryl-Rest oder einen geradkettigen oder verzweigten $C_1$-$C_{30}$-Alkyl-Rest, wobei letztere gegebenenfalls durch ein oder mehrere Doppel- oder Dreifachbindungen oder auch ein oder mehrere Heteroatome, bevorzugt Sauerstoff oder Stickstoff, unterbrochen sein kann. Besonders bevorzugt steht $R^1$ für einen geradkettigen oder verzweigten $C_1$-$C_{12}$-Alkyl-Rest.

Der $C_3$-$C_{20}$-Cycloalkyl-Rest umfasst beispielsweise Cyclopropyl, Cyclobutyl, Cylopentyl, Cyclohexyl, Cycloheptyl und Cyclooctyl.

Bei dem $C_1$-$C_{12}$-Alkyl-Rest kann es sich beispielsweise um Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, n-Hexyl, n-Heptyl, n-Octyl, n-Decyl oder n-Dodecyl handeln. Insbesondere steht $R^1$ für Methyl oder Isopropyl.

Der $C_6$-$C_{24}$-Aryl-Rest steht für einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

In der allgemeinen Formel (D) sind die **Reste $R^2$, $R^3$, $R^4$ und $R^5$** gleich oder verschieden und können Wasserstoff, organische oder anorganische Reste darstellen.

In einer geeigneten Ausführungsform sind $R^2$, $R^3$, $R^4$, $R^5$ gleich oder verschieden und bedeuten Wasserstoff, Halogen, Nitro, $CF_3$, Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio, Alkylsulfonyl- oder Alkylsulfinyl-Reste darstellen, die alle jeweils optional durch ein oder mehrere Alkyl-, Alkoxy-, Halogen-, Aryl- oder Heteroaryl-Reste substituiert sein können.

Üblicherweise sind $R^2$, $R^3$, $R^4$, $R^5$ gleich oder verschieden und bedeuten Wasserstoff, Halogen, bevorzugt Chlor oder Brom, Nitro, $CF_3$, $C_1$-$C_{30}$-Alkyl, $C_3$-$C_{20}$-Cylcoalkyl, $C_2$-$C_{20}$-Alkenyl, $C_2$-$C_{20}$-Alkinyl, $C_6$-$C_{24}$-Aryl, $C_1$-$C_{20}$-Alkoxy, $C_2$-$C_{20}$-Alkenyloxy, $C_2$-$C_{20}$-Alkinyloxy, $C_6$-$C_{24}$-Aryloxy, $C_2$-$C_{20}$-Alkoxycarbonyl, $C_1$-$C_{20}$-Alkylamino-, $C_1$-$C_{20}$-Alkylthio, $C_6$-$C_{24}$-Arylthio, $C_1$-$C_{20}$-Alkylsulfonyl oder $C_1$-$C_{20}$-Alkylsulfinyl Reste, die alle jeweils optional durch ein oder mehrere $C_1$-$C_{30}$-Alkyl-, $C_1$-$C_{20}$-Alkoxy-, Halogen-, $C_6$-$C_{24}$-Aryl- oder Heteroaryl-Reste substituiert sein können.

In einer besonders bewährten Ausführungsform sind $R^2$, $R^3$, $R^4$, $R^5$ sind gleich oder verschieden und stehen für Nitro, geradkettige oder verzweigte $C_1$-$C_{30}$-Alkyl-, $C_5$-$C_{20}$-Cylcoalkyl-, geradkettige oder verzweigte $C_1$-$C_{20}$-Alkoxy-Reste oder $C_6$-$C_{24}$-Aryl-Reste, bevorzugt Phenyl oder Naphthyl. Die $C_1$-$C_{30}$-Alkyl-Reste sowie $C_1$-$C_{20}$-Alkoxy-Reste können optional durch ein oder mehrere Doppel- oder Dreifachbindungen oder auch ein oder mehrere Heteroatome, bevorzugt Sauerstoff oder Stickstoff, unterbrochen sein.

Ferner können auch zwei oder mehr der Reste $R^2$, $R^3$, $R^4$ oder $R^5$ über aliphatische oder aromatische Strukturen verbrückt sein. $R^3$ und $R^4$ können beispielsweise unter Einbeziehung der KohlenstoffAtome, an die sie im Phenylring der Formel (D) gebunden sind, einen ankondensierten Phenylring bilden, so dass insgesamt eine Naphthylstruktur resultiert.

In der allgemeinen Formel (D) bedeutet der **Rest $R^6$** Wasserstoff, einen Alkyl-, Alkenyl-, Alkinyl- oder einen Aryl-Rest. Bevorzugt bedeutet $R^6$ Wasserstoff, einen $C_1$-$C_{30}$-Alkyl, einen $C_2$-$C_{20}$-Alkenyl-, einen $C_2$-$C_{20}$-Alkinyl oder einen $C_6$-$C_{24}$-Aryl-Rest. Besonders bevorzugt ist $R^6$ Wasserstoff.

Ferner geeignet sind **Katalysatoren der allgemeinen Formel (D1)**,

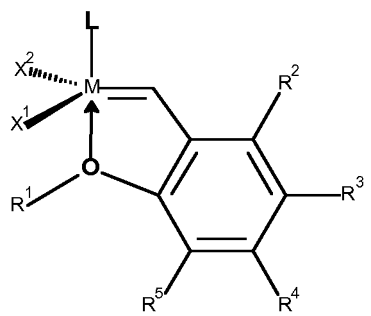

**(D1)**

worin M, L, $X^1$, $X^2$, $R^1$, $R^2$, $R^3$, $R^4$ und $R^5$ die für die allgemeine Formel (D) genannten allgemeinen, bevorzugten und besonders bevorzugten Bedeutungen besitzen können.

Die Katalysatoren der allgemeinen Formel (D1) sind z.B. aus US 2002/0107138 A1 (Hoveyda et al.) prinzipiell bekannt und können nach dort angegebenen Herstellverfahren erhalten werden.

Besonders geeignet sind Katalysatoren der allgemeinen Formel (D1), wobei

| | |
|---|---|
| M | Ruthenium darstellt, |
| $X^1$ und $X^2$ | gleichzeitig Halogen, insbesondere gleichzeitig Chlor bedeuten, |
| $R^1$ | für einen geradkettigen oder verzweigten $C_1$-$C_{12}$ Alkylrest steht, |
| $R^2$, $R^3$, $R^4$, $R^5$ | die für die allgemeine Formel (D) genannten allgemeinen und bevorzugten Bedeutungen besitzen und |
| L | die für die allgemeine Formel (D) genannten allgemeinen und bevorzugten Bedeutungen besitzt. |

Insbesondere geeignet sind Katalysatoren der allgemeinen Formel (D1), wobei

| | |
|---|---|
| M | Ruthenium darstellt, |
| $X^1$ und $X^2$ | gleichzeitig Chlor bedeuten, |
| $R^1$ | für einen Isopropyl-Rest steht, |
| $R^2$, $R^3$, $R^4$, $R^5$ | alle Wasserstoff bedeuten und |

L einen gegebenenfalls substituierten Imidazolidin-Rest der Formeln (4a) oder (4b) darstellt,

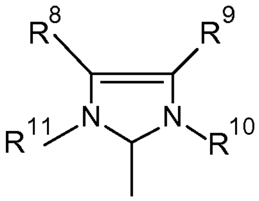

(4a)

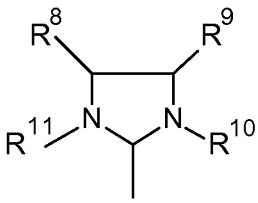

(4b)

worin

$R^8$, $R^9$, $R^{10}$, $R^{11}$ gleich oder verschieden sind und Wasserstoff, geradkettiges oder verzweigtes $C_1$-$C_{30}$-Alkyl, $C_3$-$C_{20}$-Cylcoalkyl, $C_2$-$C_{20}$-Alkenyl, $C_2$-$C_{20}$-Alkinyl, $C_6$-$C_{24}$-Aryl, $C_1$-$C_{20}$-Carboxylat, $C_1$-$C_{20}$-Alkoxy, $C_2$-$C_{20}$-Alkenyloxy, $C_2$-$C_{20}$-Alkinyloxy, $C_6$-$C_{24}$-Aryloxy, $C_2$-$C_{20}$-Alkoxycarbonyl, $C_1$-$C_{20}$-Alkylthio, $C_6$-$C_{24}$-Arylthio, $C_1$-$C_{20}$-Alkylsulfonyl, $C_1$-$C_{20}$-Alkylsulfonat, $C_6$-$C_{24}$-Arylsulfonat oder $C_1$-$C_{20}$-Alkylsulfinyl bedeuten, wobei die vorgenannten Reste jeweils durch einen oder mehrere Substituenten, vorzugsweise geradkettiges oder verzweigtes $C_1$-$C_{10}$-Alkyl, $C_3$-$C_8$-Cycloalkyl, $C_1$-$C_{10}$-Alkoxy oder $C_6$-$C_{24}$-Aryl substituiert sein können, wobei auch diese vorgenannten Substituenten wiederum durch ein oder mehrere Reste, vorzugsweise ausgewählt aus der Gruppe Halogen, insbesondere Chlor oder Brom, $C_1$-$C_5$-Alkyl, $C_1$-$C_5$-Alkoxy und Phenyl substituiert sein können.

Ganz besonders geeignet ist ein Katalysator, der unter die allgemeine Strukturformel (D1) fällt und die Formel (9) besitzt, wobei Mes jeweils für 2,4,6-Trimethylphenyl steht.

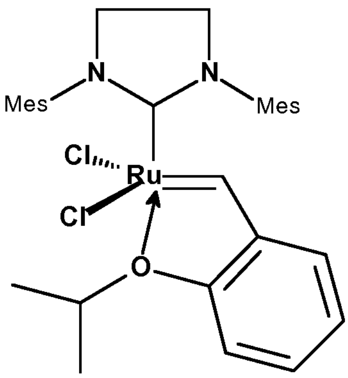

(9)

Dieser Katalysator (9) wird in der Literatur auch als "Hoveyda-Katalysator" bezeichnet.

Weiterhin geeignete Katalysatoren sind solche, die unter die allgemeine Strukturformel (D1) fallen und die Formeln (10), (11), (12), (13), (14), (15), (16) oder (17) besitzen, wobei Mes jeweils 2,4,6-Trimethylphenyl bedeutet.

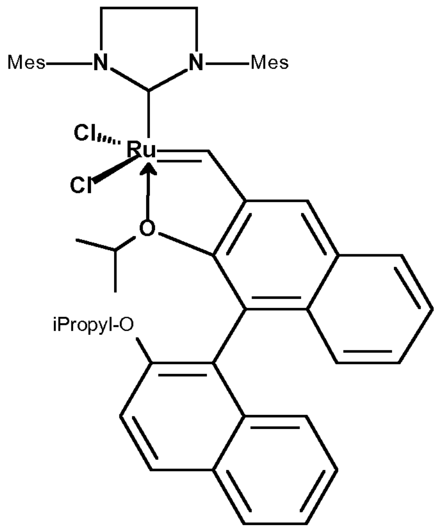

(10)

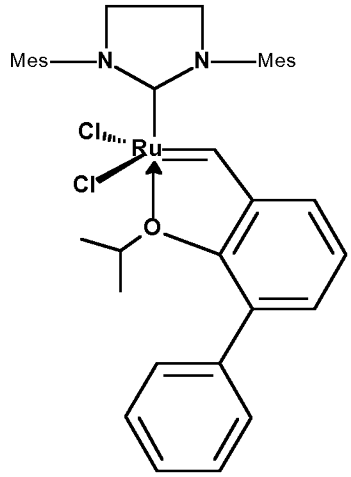

(11)

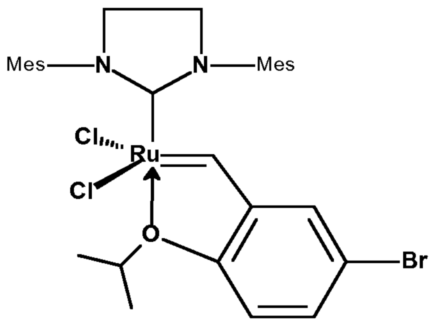

(12)

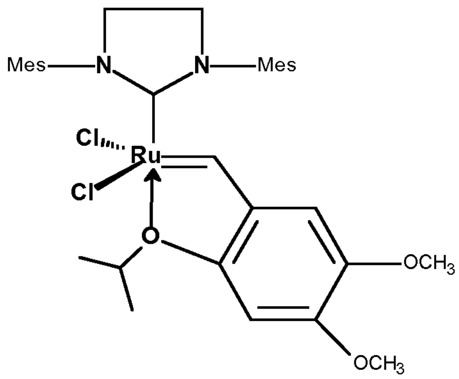

(13)

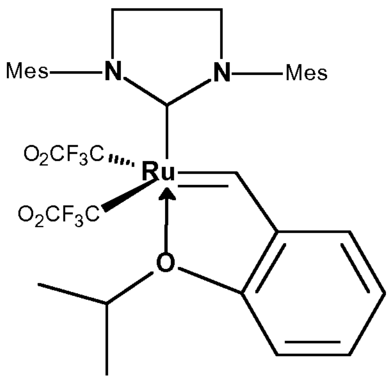

(14)

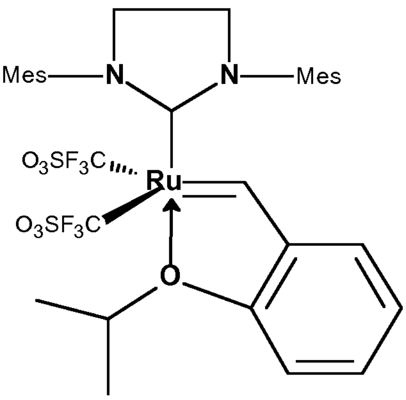

(15)

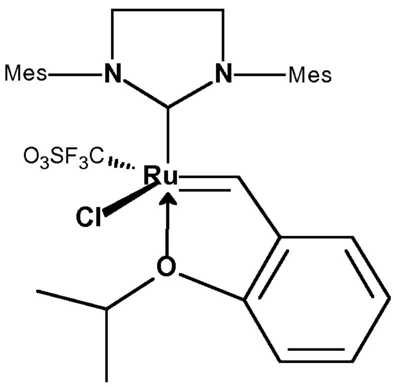

(16)

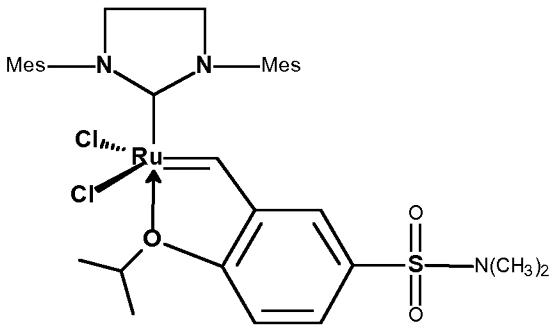

(17)

Geeignet ist weiterhin ein **Katalysator der allgemeinen Formel (D2),**

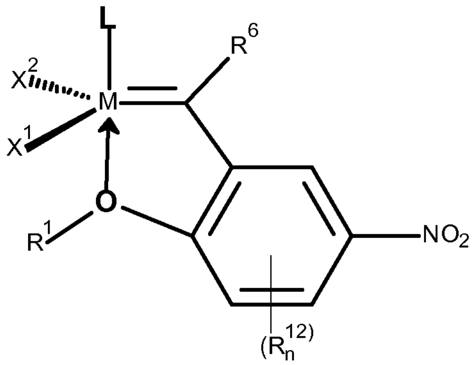

(D2)

worin

| | |
|---|---|
| M, L, $X^1$, $X^2$, $R^1$ und $R^6$ | die für die Formel (D) genannten allgemeinen und bevorzugten Bedeutungen haben, |
| $R^{12}$ | gleich oder verschieden sind und die für $R^2$, $R^3$, $R^4$ und $R^5$ in Formel (D) genannten allgemeinen und bevorzugten Bedeutungen, ausgenommen Wasserstoff, besitzen und |
| n | gleich 0, 1, 2 oder 3 ist. |

Die Katalysatoren der allgemeinen Formel (D2) sind beispielsweise aus WO-A-2004/035596 (Grela) prinzipiell bekannt und können nach dort angegebenen Herstellverfahren erhalten werden.

Besonders geeignet sind Katalysatoren der allgemeinen Formel (D2), worin

| | |
|---|---|
| M | Ruthenium darstellt, |
| $X^1$ und $X^2$ | gleichzeitig Halogen, insbesondere gleichzeitig Chlor bedeuten, |
| $R^1$ | für einen geradkettigen oder verzweigten $C_1$-$C_{12}$ Alkylrest steht, |
| $R^{12}$ | die für die allgemeine Formel (D2) genannten Bedeutungen besitzt, |
| n | gleich 0, 1, 2 oder 3 ist, |
| $R^6$ | Wasserstoff bedeutet und |
| L | die für die allgemeine Formel (D) genannten Bedeutungen besitzt. |

Insbesondere geeignet sind Katalysatoren der allgemeinen Formel (D2), worin

| | |
|---|---|
| M | Ruthenium darstellt, |
| $X^1$ und $X^2$ | gleichzeitig Chlor bedeuten, |
| $R^1$ | für einen Isopropyl-Rest steht, |
| n | gleich 0 ist und |
| L | einen gegebenenfalls substituierten Imidazolidin-Rest der Formeln (4a) oder (4b) darstellt, worin $R^8$, $R^9$, |

$R^{10}$, $R^{11}$ gleich oder verschieden sind und die für die insbesondere bevorzugten Katalysatoren der allgemeinen Formel (D1) genannten Bedeutungen besitzen.

Besonders geeignet sind Katalysatoren der nachfolgenden Strukturen (18) ("Grela-Katalysator") sowie (19), wobei Mes jeweils für 2,4,6-Trimethylphenyl steht.

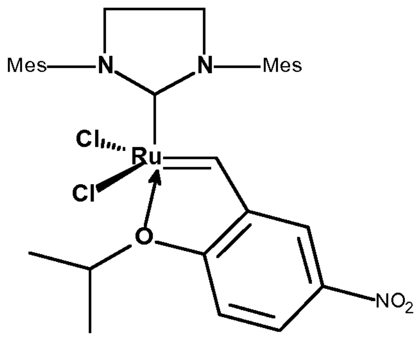

**(18)**

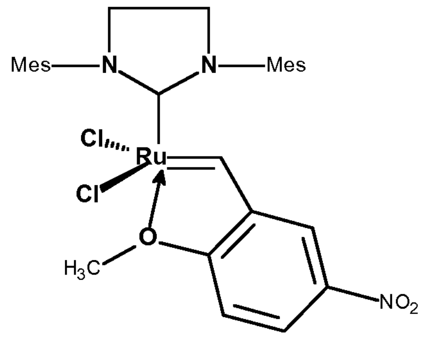

**(19)**

Geeignet ist auch ein dendritisch aufgebauter **Katalysator der allgemeinen Formel (D3),**

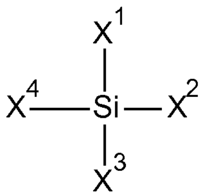

(D3)

worin $X^1$, $X^2$, $X^3$ und $X^4$ jeweils eine Struktur der allgemeinen Formel (20) aufweisen, die über die rechts dargestellte Methylengruppe an das Silicium der Formel (D3) angebunden ist und

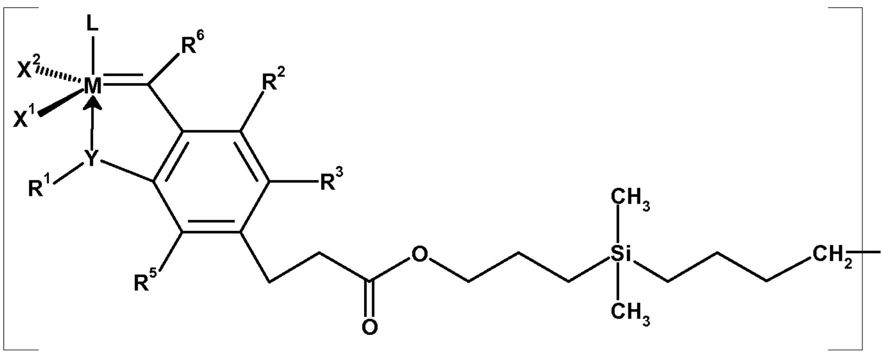

(20)

worin

| | |
|---|---|
| M, L, $X^1$, $X^2$, $R^1$, $R^2$, $R^3$, $R^5$ und $R^6$ | die für die allgemeine Formel (D) genannten allgemeinen und bevorzugten Bedeutungen besitzen können. |

Die Katalysatoren der allgemeinen Formel (D3) sind aus US 2002/0107138 A1 bekannt und gemäß den dort gemachten Angaben herstellbar.

Geeignet ist auch ein Katalysator der Formel (D4),

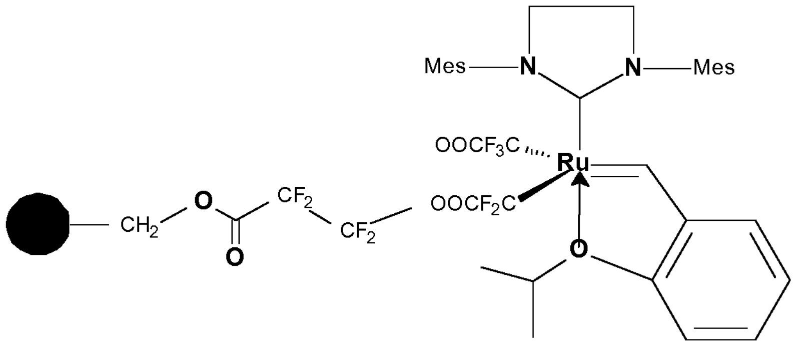

(D4)

worin das Symbol ● für einen Träger steht.

Bevorzugt handelt es sich bei dem Träger um ein Poly(styroldivinylbenzol)-Copolymer (PS-DVB). Die Katalysatoren gemäß Formel (D4) sind aus **Chem. Eur. J. 2004 10, 777-784** prinzipiell bekannt und nach dort beschriebenen Herstellmethoden erhältlich.

Alle vorgenannten Katalysatoren des Typs (D), (D1), (D2), (D3) und (D4) können entweder als solche in der Hydrierreaktion eingesetzt werden oder aber auch auf einem festen Träger aufgebracht und immobilisiert werden. Als feste Phasen bzw. Träger sind solche Materialien geeignet, die einerseits inert gegenüber dem Reaktionsgemisch der Metathese sind und zum anderen die Aktivität des Katalysators nicht beeinträchtigen. Einsetzbar sind zur Immobilisierung des Katalysators beispielsweise Metalle, Glas, Polymere, Keramik, organische Polymerkügelchen oder auch anorganische Sol-Gele, Ruß, Kieselsäure, Silikate, Calciumcarbonat und Bariumsulfat.

Geeignet sind auch **Katalysatoren der allgemeinen Formel (E),**

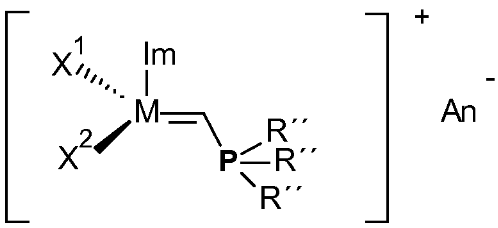

(E)

wobei

| | |
|---|---|
| M | Ruthenium oder Osmium bedeutet, |
| $X^1$ und $X^2$ | gleich oder verschieden sind und anionische Liganden darstellen, |
| R" | gleich oder verschieden sind und organische Reste darstellen, |
| Im | einen gegebenenfalls substituierten Imidazolin oder Imidazolidinrest darstellt und |
| An | ein Anion darstellt. |

Die Katalysatoren der allgemeinen Formel (E) sind prinzipiell bekannt (siehe z.B. Angew. Chem. Int. Ed. 2004,43, 6161-6165).

$X^1$ und $X^2$ können in der allgemeinen Formel (E) die gleichen allgemeinen, bevorzugten und besonders bevorzugten Bedeutungen besitzen wie in den Formeln (C) und (D).

Der Im-Rest weist üblicherweise eine Struktur der allgemeinen Formeln (4a) oder (4b) auf, die bereits für den Katalysator-Typ der Formeln (C) und (D) genannt wurden und kann auch alle dort als bevorzugt genannten Strukturen, insbesondere die der Formeln (5a)-(5f) aufweisen.

Die Reste R" sind in der allgemeinen Formel (E) gleich oder verschieden und bedeuten einen geradkettigen oder verzweigten $C_1$-$C_{30}$-Alkyl-, $C_5$-$C_{30}$-Cylcoalkyl- oder Aryl-Rest, wobei die $C_1$-$C_{30}$-Alkylreste gegebenenfalls durch ein oder mehrere Doppel- oder Dreifachbindungen oder auch ein oder mehrere Heteroatome, bevorzugt Sauerstoff oder Stickstoff, unterbrochen sein können.

**Aryl** umfasst einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

Bevorzugt sind die Reste R" in der allgemeinen Formel (E) gleich und bedeuten Phenyl, Cyclohexyl, Cyclopentyl, Isopropyl, o-Tolyl, o-Xylyl oder Mesityl.

Geeignet sind weiterhin **Katalysatoren der allgemeinen Formel (F),**

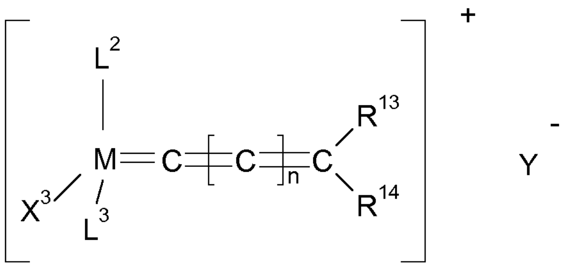

(F)

worin

| | |
|---|---|
| M | Ruthenium oder Osmium bedeutet, |
| $R^{13}$ und $R^{14}$ | unabhängig voneinander Wasserstoff, $C_1$-$C_{20}$-Alkyl, $C_2$-$C_{20}$-Alkenyl, $C_2$-$C_{20}$ Alkinyl, $C_6$-$C_{24}$-Aryl, $C_1$-$C_{20}$-Carboxylat, $C_1$-$C_{20}$-Alkoxy, $C_2$-$C_{20}$-Alkenyloxy, $C_2$-$C_{20}$-Alkinyloxy, $C_6$-$C_{24}$-Aryloxy, $C_2$-$C_{20}$-Alkoxycarbonyl, $C_1$-$C_{20}$-Alkylthio, $C_1$-$C_{20}$-Alkylsulfonyl oder $C_1$-$C_{20}$ Alkylsulfinyl bedeuten, |
| $X^3$ | ein anionischer Ligand ist, |
| $L^2$ | ein neutraler $\pi$-gebundener Ligand ist, unabhängig davon, ob mono- oder polycyclisch, |
| $L^3$ | einen Ligand aus der Gruppe der Phosphane, sulfonierten Phosphane, fluorierten Phosphane, funktionalisierten Phosphane mit bis zu drei Aminoalkyl-, Ammoniumalkyl-, Alkoxyalkyl-, Alkoxycarbonylalkyl-, Hydrocarbonylalkyl-, Hydroxyalkyl- oder Ketoalkyl-Gruppen, Phosphite, Phosphinite, Phosphonite, Phosphinamine, Arsane, Stibane, Ether, Amine, Amide, Imine, Sulfoxide, Thioether und Pyridine darstellt, |
| $Y^-$ | ein nicht-koordinierendes Anion ist und |
| n | 0, 1, 2, 3, 4 oder 5 ist. |

Geeignet sind weiterhin **Katalysatoren der allgemeinen Formel (G),**

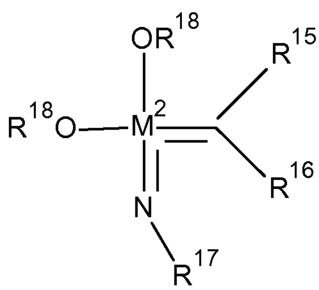

(G)

worin

| | |
|---|---|
| $M^2$ | Molybdän bedeutet, |
| $R^{15}$ und $R^{16}$ | gleich oder verschieden sind und Wasserstoff, $C_1$-$C_{20}$-Alkyl, $C_2$-$C_{20}$-Alkenyl, $C_2$-$C_{20}$-Alkinyl, $C_6$-$C_{24}$-Aryl, $C_1$-$C_{20}$-Carboxylat, $C_1$-$C_{20}$-Alkoxy, $C_2$-$C_{20}$-Alkenyloxy, $C_2$-$C_{20}$-Alkinyloxy, $C_6$-$C_{24}$-Aryloxy, $C_2$-$C_{20}$-Alkoxycarbonyl, $C_1$-$C_{20}$-Alkylthio, $C_1$-$C_{20}$-Alkylsulfonyl oder $C_1$-$C_{20}$ Alkylsulfinyl bedeuten, |
| $R^{17}$ and $R^{18}$ | gleich oder verschieden sind und einen substituierten oder einen halogensubstituierten $C_1$-$C_{20}$-Alkyl, $C_6$-$C_{24}$-Aryl, $C_6$-$C_{30}$-Aralkyl-Rest oder Silikonenthaltende Analoga davon darstellen. |

Geeignet sind weiterhin **Katalysatoren der allgemeinen Formel (H),**

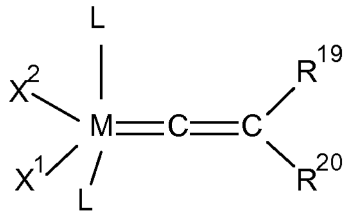

(H)

worin

M Ruthenium oder Osmium bedeutet,
$X^1$ und $X^2$ gleich oder verschieden sind und anionische Liganden darstellen, die alle in den allgemeinen Formeln (C) und (D) genannte für $X^1$ und $X^2$ genannte Bedeutungen annehmen können,
L gleiche oder verschiedene Liganden darstellt, die alle in den allgemeinen Formeln (C) und (D) genannten Bedeutungen von L annehmen können,
$R^{19}$ and $R^{20}$ gleich oder verschieden sind und Wasserstoff oder substituiertes oder unsubstituiertes Alkyl bedeuten.

Geeignet sind weiterhin **Katalysatoren der allgemeinen Formeln (K), (N) oder (Q),**

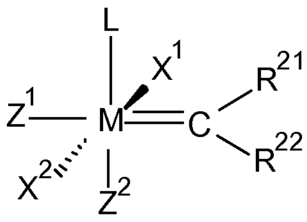

(K)

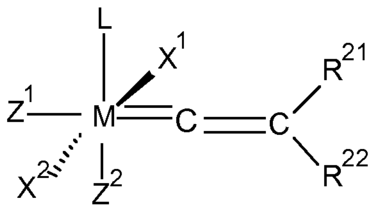

(N)

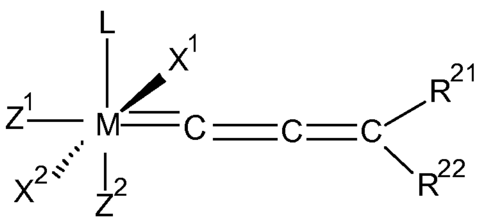

(Q)

wobei

M Osmium oder Ruthenium bedeutet,
$X^1$ und $X^2$ gleich oder verschieden und zwei Liganden, bevorzugt anionische Liganden, sind,
L einen Liganden, bevorzugt einen neutralen Elektronen-Donor darstellt,
$Z^1$ und $Z^2$ gleich oder verschieden sind und neutrale Elektronen-Donoren darstellen,
$R^{21}$ und $R^{22}$ unabhängig voneinander H, Alkyl, Cycloalkyl, Alkenyl, Alkinyl, Aryl, Carboxylat, Alkoxy, Alkenyloxy, Alkinyloxy, Aryloxy, Alkoxycarbonyl, Alkylamino, Alkylthio, Alkylsulfonyl oder Alkylsulfinyl bedeuten, die jeweils durch ein oder mehrere Reste ausgewählt aus Alkyl, Halogen, Alkoxy, Aryl oder Heteroaryl substituiert sind.

Die Katalysatoren der allgemeinen Formeln (K), (N) und (Q) sind prinzipiell bekannt, so z.B. aus WO 2003/011455 A1, WO 2003/087167 A2, Organometallics 2001, 20, 5314 und Angew. Chem. Int. Ed. 2002, 41, 4038. Die Katalysatoren sind kommerziell verfügbar oder aber nach den in den vorgenannten Literaturstellen angegebenen Herstellungsmethoden synthetisierbar.

In den Katalysatoren der allgemeinen Formeln (K), (N) und (Q) sind **$Z^1$ und $Z^2$** gleich oder verschieden und stellen neutrale Elektronen-Donoren dar. Diese Liganden sind üblicherweise schwach koordinierend. Typischerweise handelt es sich um optional substituierte heterocyclische Gruppen. Hierbei kann es sich um fünf oder sechsgliedrige

monocyclische Gruppen mit 1 bis 4, bevorzugterweise 1 bis 3 und besonders bevorzugt 1 oder 2 Heteroatomen handeln oder um zwei oder polycyclische Strukturen aus 2, 3, 4 oder 5 solcher fünf oder sechsgliedriger monocyclischer Gruppen, wobei alle jeweils vorgenannten Gruppen optional durch ein oder mehrere Alkyl, bevorzugt $C_1$-$C_{10}$-Alkyl, Cycloalkyl, bevorzugt $C_3$-$C_8$-Cycloalkyl, Alkoxy, bevorzugt $C_1$-$C_{10}$-Alkoxy, Halogen, bevorzugt Chlor oder Brom, Aryl, bevorzugt $C_6$-$C_{24}$-Aryl, oder Heteroaryl, bevorzugt $C_5$-$C_{23}$ Heteroaryl-Reste, die jeweils erneut durch ein oder mehrere Gruppen, bevorzugt ausgewählt aus der Gruppe bestehend aus Halogen, inbesondere Chlor oder Brom, $C_1$-$C_5$-Alkyl, $C_1$-$C_5$-Alkoxy und Phenyl substituiert sein können.

Beispiele für $Z^1$ und $Z^2$ umfassen Stickstoff enthaltende Heterocyclen wie Pyridine, Pyridazine, Bipyridine, Pyrimidine, Pyrazine, Pyrazolidine, Pyrrolidine, Piperazine, Indazole, Quinoline, Purine, Acridine, Bisimidazole, Picolylimine, Imidazolidine und Pyrrole.

$Z^1$ und $Z^2$ können auch miteinander verbrückt sein unter Ausbildung einer cyclischen Struktur. In diesem Fall handelt es sich bei $Z^1$ und $Z^2$ um einen einzigen zweizähnigen Liganden.

In den Katalysatoren der allgemeinen Formeln (K), (N) und (Q) kann L die gleichen allgemeinen, bevorzugten und besonders bevorzugten Bedeutungen annehmen wie L in den allgemeinen Formeln (C) und (D).

In den Katalysatoren der allgemeinen Formeln (K), (N) und (Q) sind **$R^{21}$ und $R^{22}$** gleich oder verschieden und bedeuten Alkyl, bevorzugt $C_1$-$C_{30}$-Alkyl, besonders bevorzugt $C_1$-$C_{20}$-Alkyl, Cycloalkyl, bevorzugt $C_3$-$C_{20}$-Cycloalkyl, besonders bevorzugt $C_3$-$C_8$-Cycloalkyl, Alkenyl, bevorzugt $C_2$-$C_{20}$-Alkenyl, besonders bevorzugt $C_2$-$C_{16}$-Alkenyl, Alkinyl, bevorzugt $C_2$-$C_{20}$-Alkinyl, besonders bevorzugt $C_2$-$C_{16}$-Alkinyl, Aryl, bevorzugt $C_6$-$C_{24}$-Aryl, Carboxylat, bevorzugt $C_1$-$C_{20}$-Carboxylat, Alkoxy, bevorzugt $C_1$-$C_{20}$-Alkoxy, Alkenyloxy, bevorzugt $C_2$-$C_{20}$-Alkenyloxy, Alkinyloxy, bevorzugt $C_2$-$C_{20}$-Alkynyloxy, Aryloxy, bevorzugt $C_6$-$C_{24}$-Aryloxy, Alkoxycarbonyl, bevorzugt $C_2$-$C_{20}$-Alkoxycarbonyl, Alkylamino, bevorzugt $C_1$-$C_{30}$-Alkylamino, Alkylthio, bevorzugt $C_1$-$C_{30}$-Alkylthio, Arylthio, bevorzugt $C_6$-$C_{24}$-Arylthio, Alkylsulfonyl, bevorzugt $C_1$-$C_{20}$-Alkylsulphonyl, oder Alkylsulfinyl, bevorzugt $C_1$-$C_{20}$-Alkylsulphinyl, wobei die vorgenannten Substituenten durch einen oder mehrere Alkyl, Halogen, Alkoxy, Aryl oder Heteroaryl Reste substituiert sein können.

In den Katalysatoren der allgemeinen Formeln (K), (N) und (Q) sind **$X^1$ und $X^2$** gleich oder verschieden und können die gleichen allgemeinen, bevorzugten und besonders bevorzugten Bedeutungen haben wie zuvor für $X^1$ und $X^2$ in der allgemeinen Formel (C) angegeben.

Besonders geeignet sind Katalysatoren der allgemeinen Formeln (K), (N) und (Q), worin

| | |
|---|---|
| M | Ruthenium ist, |
| $X^1$ und $X^2$ | beide Halogen, insbesondere Chlor darstellen, |
| $R^1$ und $R^2$ | gleich oder verschieden sind und fünf- oder sechsgliedrige monocyclische Gruppen mit 1 bis 4, bevorzugterweise 1 bis 3 und besonders bevorzugt 1 oder 2 Heteroatomen darstellen oder zwei- oder polycyclische Strukturen aus 2, 3, 4 oder 5 solcher fünf- oder sechsgliedriger monocyclischer Gruppen, wobei alle jeweils vorgenannten Gruppen durch ein oder mehrere Alkyl, bevorzugt $C_1$-$C_{10}$-Alkyl, Cycloalkyl, bevorzugt $C_3$-$C_8$-Cycloalkyl, Alkoxy, bevorzugt $C_1$-$C_{10}$-Alkoxy, Halogen, bevorzugt Chlor oder Brom, Aryl, bevorzugt $C_6$-$C_{24}$-Aryl, oder Heteroaryl, bevorzugt $C_5$-$C_{23}$ Heteroaryl-Reste substituiert sein können, |
| $R^{21}$ und $R^{22}$ | gleich oder verschieden sind und $C_1$-$C_{30}$-Alkyl $C_3$-$C_{20}$-Cycloalkyl, $C_2$-$C_{20}$-Alkenyl, $C_2$-$C_{20}$-Alkynyl, $C_6$-$C_{24}$-Aryl, $C_1$-$C_{20}$-Carboxylat, $C_1$-$C_{20}$-Alkoxy, $C_2$-$C_{20}$-Alkenyloxy, $C_2$-$C_{20}$-Alkynyloxy, $C_6$-$C_{24}$-Aryloxy, $C_2$-$C_{20}$-Alkoxycarbonyl, $C_1$-$C_{30}$-Alkylamino, $C_1$-$C_{30}$-Alkylthio, $C_6$-$C_{24}$-Arylthio, $C_1$-$C_{20}$-Alkylsulphonyl, $C_1$-$C_{20}$-Alkylsulphinyl darstellen, und |
| L | eine Struktur der bereits zuvor beschriebenen allgemeinen Formeln (4a) oder (4b), inbesondere der Formeln (5a) bis (5f) besitzt. |

Ganz besonders geeignet ist ein Katalysator, der unter die allgemeine Formel (K) fällt und die Struktur (21) besitzt,

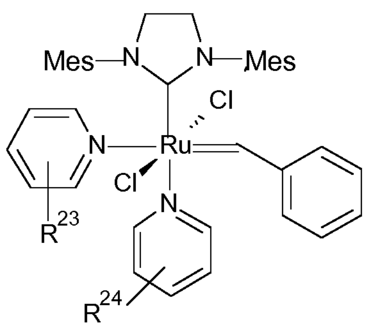

(21)

worin

$R^{23}$ und $R^{24}$ gleich oder verschieden sind und H, Halogen, geradkettiges oder verzweigtes $C_1$-$C_{20}$-Alkyl, $C_1$-$C_{20}$-Heteroalkyl, $C_1$-$C_{10}$-Haloalkyl, $C_1$-$C_{10}$-Alkoxy, $C_6$-$C_{24}$-Aryl, bevorzugt Phenyl, Formyl, Nitro, Stickstoff-Heterocyclen, bevorzugt Pyridin, Piperidin und Pyrazin, Carboxy, Alkylcarbonyl, Halocarbonyl, Carbamoyl, Thiocarbomoyl, Carbamido, Thioformyl, Amino, Dialkylamino, Trialkylsilyl und Trialkoxysilyl bedeuten.

Die vorgenannten Reste $C_1$-$C_{20}$-Alkyl, $C_1$-$C_{20}$-Heteroalkyl, $C_1$-$C_{10}$-Haloalkyl, $C_1$-$C_{10}$-Alkoxy, $C_6$-$C_{24}$-Aryl, bevorzugt Phenyl, Formyl, Nitro, Stickstoff-Heterocyclen, bevorzugt Pyridin, Piperidin und Pyrazin, Carboxy, Alkylcarbonyl, Halocarbonyl, Carbamoyl, Thiocarbomoyl, Carbamido, Thioformyl, Amino, Trialkylsilyl und Trialkoxysilyl können jeweils wieder durch ein oder mehrere Reste Halogen, bevorzugt Fluor, Chlor oder Brom, $C_1$-$C_5$-Alkyl, $C_1$-$C_5$-Alkoxy oder Phenyl substituiert sein.

Besonders geeignet ist ein Katalysator mit $R^{23}$ und $R^{24}$ gleich Wasserstoff ("Grubbs III-Katalysator").

Ganz besonders geeignet sind ferner Katalysatoren der Strukturen (22a) oder (22b), wobei $R^{23}$ und $R^{24}$ die gleichen Bedeutungen besitzen wie in der Formel (21) angegeben, außer Wasserstoff.

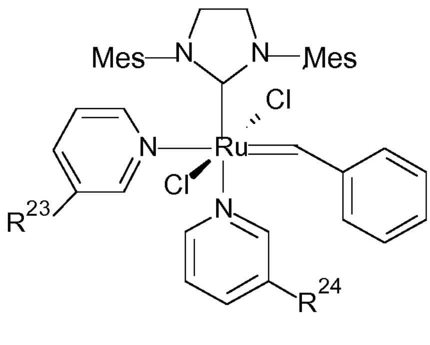

(22a)

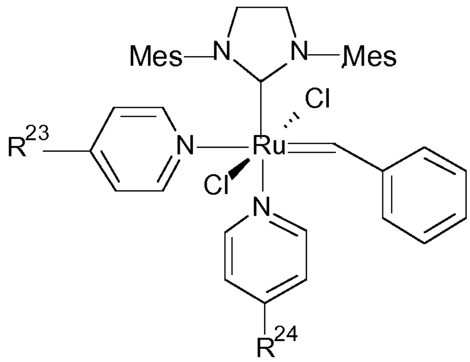

(22b)

Geeignete Katalysatoren, die unter die allgemeinen Formeln (K), (N) und (Q) fallen, besitzen die nachfolgenden Strukturformen (23) bis (34), wobei Mes für 2,4,6-Trimethylphenyl steht.

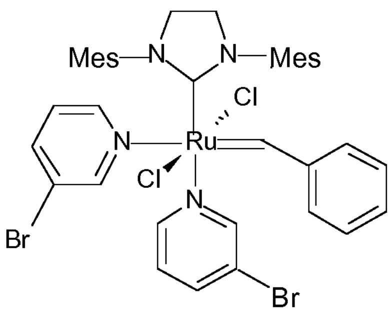

(23)

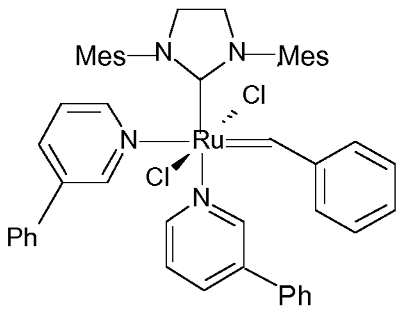

(24)

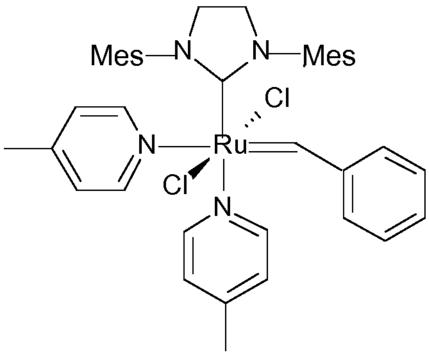

(25)

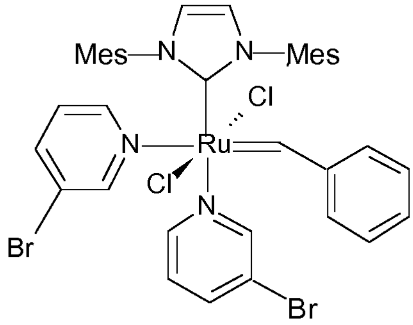

(26)

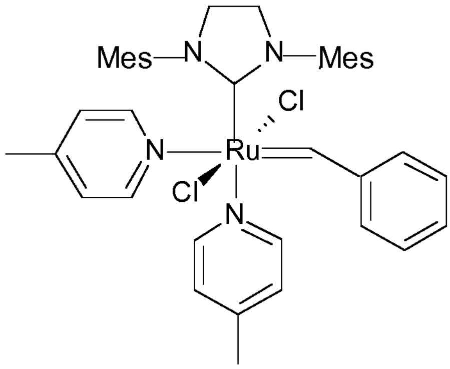

(27)

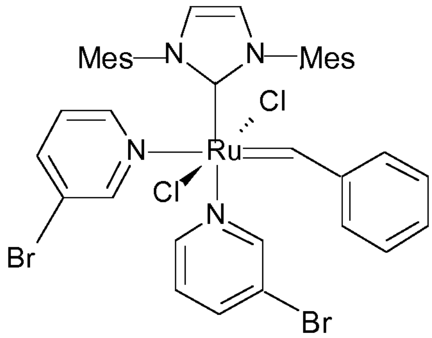

(28)

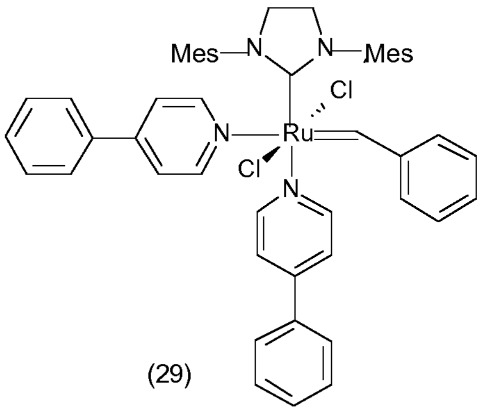

(29)

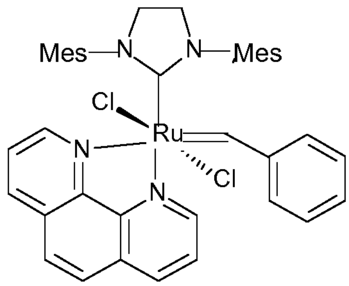

(30)

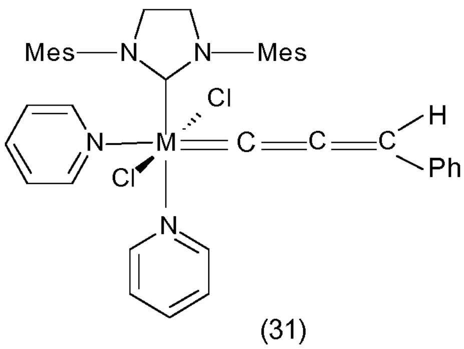

(31)

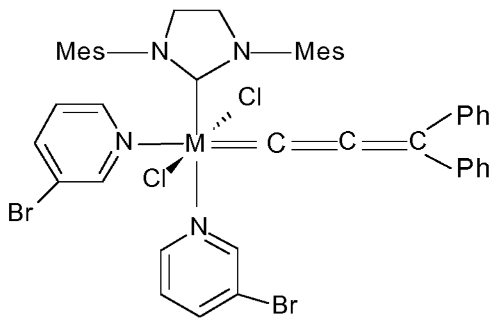

(32)

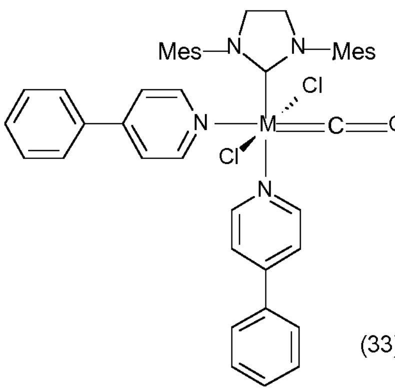

(33)

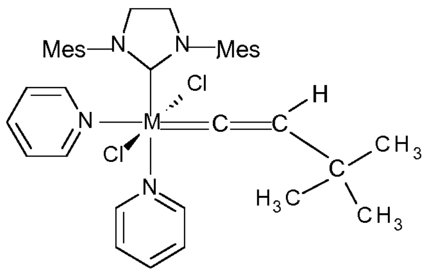

(34)

Geeignet sind ferner **Katalysatoren (R),** die das allgemeine Strukturelement (R1) aufweisen, wobei das mit einem "*" gekennzeichnete Kohlenstoff-Atom über eine oder mehrere Doppelbindungen an das Katalysator-Grundgerüst gebunden ist,

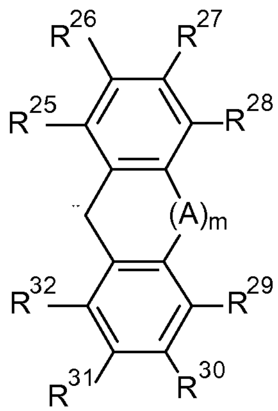

(R1)

und worin

- $R^{25}$-$R^{32}$ gleich oder verschieden sind und Wasserstoff, Halogen, Hydroxyl, Aldehyd, Keto, Thiol, $CF_3$, Nitro, Nitroso, Cyano, Thiocyano, Isocyanato, Carbodiimid, Carbamat, Thiocarbamat, Dithiocarbamat, Amino, Amido, Imino, Silyl, Sulfonat ($-SO_3^-$), $-OSO_3^-$, $-PO_3^-$ oder $OPO_3^-$ bedeuten oder für Alkyl-, Cycloalkyl-, Alkenyl-, Alkinyl-, Aryl-, Carboxylat-, Alkoxy-, Alkenyloxy-, Alkinyloxy-, Aryloxy-, Alkoxycarbonyl-, Alkylamino-, Alkylthio-, Arylthio-, Alkylsulfonyl-, Alkylsulfinyl, Dialkylamino-, Alkylsilyl oder Alkoxysilyl stehen, wobei diese Reste alle jeweils optional durch ein oder mehrere Alkyl-, Halogen-, Alkoxy-, Aryl- oder Heteroaryl-Reste substituiert sein können, oder alternativ jeweils zwei direkt benachbarte Reste aus der Gruppe von $R^{25}$-$R^{32}$ unter Einschluss der Ringkohlenstoff-Atome, an die sie gebunden sind, durch Verbrückung eine cyclische Gruppe, bevorzugt ein aromatisches System, ausbilden, oder alternativ $R^8$ gegebenenfalls mit einem anderen Liganden des Ruthenium- oder Osmium-Carben-Komplexkatalysators verbrückt ist,
- m 0 oder 1 ist und
- A Sauerstoff, Schwefel, $C(R^{33}R^{34})$, $N-R^{35}$, $-C(R^{36})=C(R^{37})-$, $-C(R^{36})(R^{38})-C(R^{37})(R^{39})-$bedeutet, worin $R^{33}$-$R^{39}$ gleich oder verschieden sind und jeweils die gleichen Bedeutungen besitzen können wie die Reste $R^{25}$-$R^{32}$.

Die erfindungsgemäßen Katalysatoren weisen das Strukturelement der allgemeinen Formel (R1) auf, wobei das mit einem "*" gekennzeichnete Kohlenstoff-Atom über eine oder mehrere Doppelbindungen an das Katalysator-Grundgerüst gebunden ist. Sofern das mit einem "*" gekennzeichnete Kohlenstoff-Atom über zwei oder mehr Doppelbindungen an das Katalysator-Grundgerüst gebunden ist, können diese Doppelbindungen kumuliert oder konjugiert sein.

Derartige Katalysatoren (R) sind in EP-A-2 027 920 beschrieben. Zu den Katalysatoren (R) mit einem Strukturelement der allgemeinen Formel (R1) zählen beispielsweise solche der nachfolgenden **allgemeinen Formeln (R2a) und (R2b),**

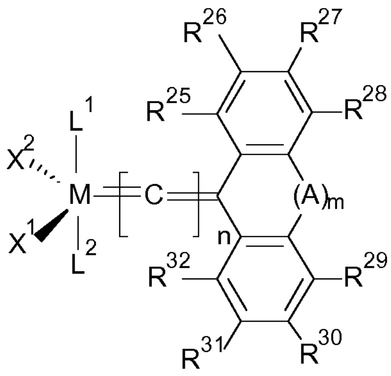

(R2a)

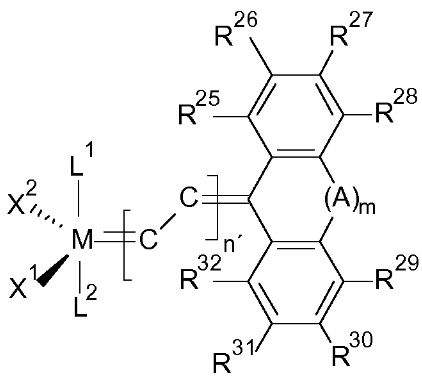

(R2b)

worin

| | |
|---|---|
| M | Ruthenium oder Osmium ist, |
| $X^1$ und $X^2$ | gleich oder verschieden sind und zwei Liganden, bevorzugt anionische Liganden, darstellen, |
| $L^1$ und $L^2$ | gleiche oder verschiedene Liganden, bevorzugt neutrale Elektronen-Donoren darstellen, wobei $L^2$ alternativ auch mit dem Rest $R^8$ verbrückt sein kann, |
| n | 0, 1, 2 oder 3, bevorzugt 0, 1 oder 2, ist, |
| n' | 1 oder 2, bevorzugt 1 ist, und |
| $R^{25}$-$R^{32}$, m und A | die gleichen Bedeutungen besitzen wie in der allgemeinen Formel (R1). |

Bei den Katalysatoren der allgemeinen Formel (R2a) ist das Strukturelement der allgemeinen Formel (R1) über eine Doppelbindung (n = 0) oder über 2, 3 oder 4 kumulierte Doppelbindungen (bei n = 1, 2 oder 3) an das Zentralmetall des Komplexkatalysators gebunden. Bei den erfindungs-gemäßen Katalysatoren der allgemeinen Formel (R2b) ist das Strukturelement der allgemeinen Formel (R1) über konjugierte Doppelbindungen an das Metall des Komplexkatalysators gebunden. In beiden Fällen befindet sich an dem mit einem "*" gekennzeichneten C-Atom eine Doppelbindung in Richtung Zentralmetall des Komplexkatalysators.

Die Katalysatoren der allgemeinen Formel (R2a) und (R2b) umfassen somit Katalysatoren, bei denen die folgenden **allgemeinen Strukturelemente (R3)-(R9)**

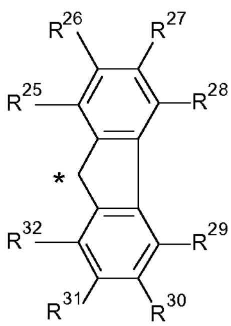

(R3)

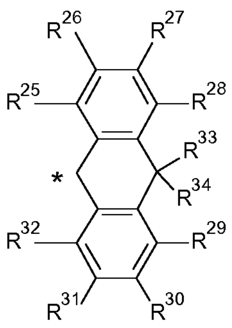

(R4)

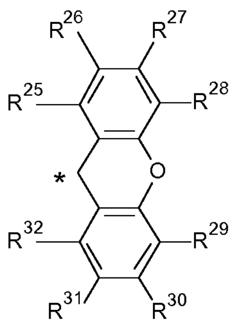

(R5)

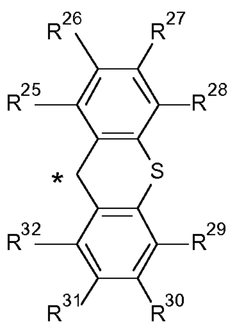

(R6)

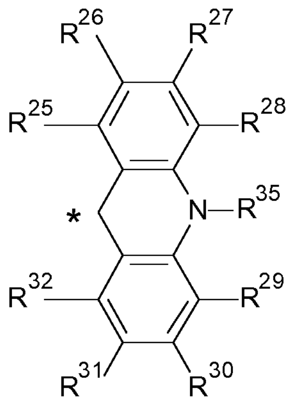

(R7)

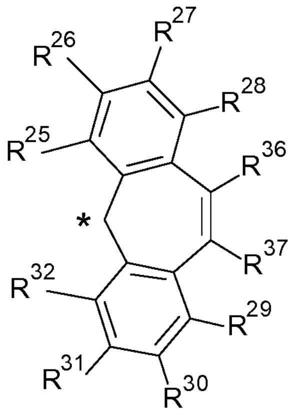

(R8)

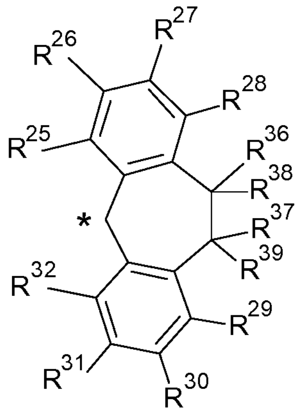

(R9)

über das mit einem "*" gekennzeichnete C-Atom über ein oder mehrere Doppelbindungen an das **Katalysator-Grundgerüst der allgemeinen Formel (R10a) bzw. (R10b)**

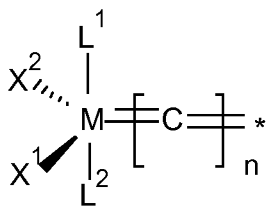

(R10a)

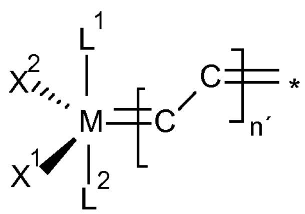

(R10b)

gebunden sind, wobei $X^1$ und $X^2$, $L^1$ und $L^2$, n, n' und $R^{25}$-$R^{39}$ die für die allgemeine Formeln (R2a) und (R2b) genannten Bedeutungen besitzen.

Typischerweise sind diese Ruthenium- oder Osmium Carben-Katalysatoren fünffach koordiniert. Im **Strukturelement der allgemeinen Formel (R1)** sind

$R^{15}$-$R^{32}$ gleich oder verschieden und bedeuten Wasserstoff, Halogen, Hydroxyl, Aldehyd, Keto, Thiol, $CF_3$, Nitro, Nitroso, Cyano, Thiocyano, Isocyanato, Carbodiimid, Carbamat, Thiocarbamat, Dithiocarbamat, Amino, Amido, Imino, Silyl, Sulfonat ($-SO_3^-$), $-OSO_3^-$,$-PO_3^-$ oder $OPO_3^-$ oder stehen für Alkyl, bevorzugt $C_1$-$C_{20}$-Alkyl, insbesondere $C_1$-$C_6$-Alkyl, Cycloalkyl, bevorzugt $C_3$-$C_{20}$-Cycloalkyl, insbesondere $C_3$-$C_8$-Cycloalkyl, Alkenyl, bevorzugt $C_2$-$C_{20}$-Alkenyl, Alkinyl, bevorzugt $C_2$-$C_{20}$-Alkinyl, Aryl, bevorzugt $C_6$-$C_{24}$-Aryl, inbesondere Phenyl, Carboxylat, bevorzugt $C_1$-$C_{20}$-Carboxylat, Alkoxy, bevorzugt $C_1$-$C_{20}$-Alkoxy, Alkenyloxy, bevorzugt $C_2$-$C_{20}$-Alkenyloxy, Alkinyloxy, bevorzugt $C_2$-$C_{20}$-Alkinyloxy, Aryloxy, bevorzugt $C_6$-$C_{24}$-Aryloxy, Alkoxycarbonyl, bevorzugt $C_2$-$C_{20}$-Alkoxycarbonyl, Alkylamino, bevorzugt $C_1$-$C_{30}$-Alkylamino, Alkylthio, bevorzugt $C_1$-$C_{30}$-Alkylthio, Arylthio, bevorzugt $C_6$-$C_{24}$-Arylthio, Alkylsulfonyl, bevorzugt $C_1$-$C_{20}$-Alkylsulfonyl, Alkylsulfinyl, bevorzugt $C_1$-$C_{20}$-Alkylsulfinyl, Dialkylamino-, bevorzugt Di($C_1$-$C_{20}$-alkyl)amino, Alkylsilyl, bevorzugt $C_1$-$C_{20}$-Alkylsilyl, oder Alkoxysilyl, bevorzugt $C_1$-$C_{20}$-Alkoxysilyl-Reste darstellen, wobei diese Reste alle jeweils optional durch ein oder mehrere Alkyl-, Halogen-, Alkoxy-, Aryl- oder Heteroaryl-Reste substituiert sein können, oder alternativ auch jeweils zwei direkt benachbarte Reste aus der Gruppe von $R^{25}$-$R^{32}$ unter Einschluss der Ringkohlenstoff-Atome, an die sie gebunden sind, durch Verbrückung eine cyclische Gruppe, bevorzugt ein aromatisches System, ausbilden können, oder alternativ $R^8$ gegebenenfalls mit einem anderen Liganden des Ruthenium- oder Osmium-Carben-Komplexkatalysators verbrückt ist,

m ist 0 oder 1 und

A bedeutet Sauerstoff, Schwefel, $C(R^{33})(R^{34})$, $N-R^{35}$, $-C(R^{36})=C(R^{37})-$ oder-$C(R^{36})(R^{38})-C(R^{37})(R^{39})-$, worin $R^{33}$-$R^{39}$ gleich oder verschieden sind und jeweils die gleichen bevorzugten Bedeutungen besitzen können wie die Reste $R^1$-$R^8$.

**$C_1$-$C_6$-Alkyl** steht im **Strukturelement der allgemeinen Formel (R1)** beispielsweise für Methyl, Ethyl, n-Propyl,

iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl und n-Hexyl.

**$C_3$-$C_8$-Cycloalkyl** steht im **Strukturelement der allgemeinen Formel (R1)** beispielsweise für Cyclopropyl, Cyclobutyl, Cylopentyl, Cyclohexyl, Cycloheptyl und Cyclooctyl.

**$C_6$-$C_{24}$-Aryl** umfasst im **Strukturelement der allgemeinen Formel (R1)** einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

Die Reste $X^1$ und $X^2$ im Strukturelement der allgemeinen Formel **(R1)** besitzen die gleichen allgemeinen, bevorzugten und besonders bevorzugten Bedeutungen, die für Katalysatoren der allgemeinen Formel (C) genannt werden.

In den allgemeinen Formeln (R2a) und (R2b) bzw. analog (R10a) und (R10b) stehen die Reste $L^1$ und L2 für gleiche oder verschiedene Liganden, bevorzugt neutrale Elektronen-Donoren und können die gleichen allgemeinen, bevorzugten und besonders bevorzugten Bedeutungen besitzen, die für die Katalysatoren der allgemeinen Formel (C) genannt werden.

Bevorzugt sind Katalysatoren der allgemeinen Formeln (R2a) oder (R2b) mit einer allgemeinen Struktureinheit (N1), wobei

| | |
|---|---|
| M | Ruthenium darstellt, |
| $X^1$ und $X^2$ | gleichzeitig Halogen bedeuten, |
| n | 0,1 oder 2 ist in der allgemeinen Formel (R2a) bzw. |
| n' | 1 ist in der allgemeinen Formel (R2b) |
| $L^1$ und $L^2$ | gleich oder verschieden sind und die für die allgemeinen Formeln (R2a) und (R2b) genannten allgemeinen oder bevorzugten Bedeutungen besitzen, |
| $R^{25}$-$R^{32}$ | gleich oder verschieden sind und die für die allgemeinen Formeln (R2a) und (R2b) genannten allgemeinen oder bevorzugten Bedeutungen besitzen, |
| m | entweder 0 oder 1 ist, |

und, wenn m = 1 ist

A für Sauerstoff, Schwefel, $C(C_1$-$C_{10}$-Alkyl$)_2$, -$C(C_1$-$C_{10}$-Alkyl$)_2$-$C(C_1$-$C_{10}$-Alkyl$)_2$-, -$C(C_1$-$C_{10}$-Alkyl$)$=$C(C_1$-$C_{10}$-Alkyl$)$- oder -$N(C_1$-$C_{10}$-Alkyl$)$ steht.

Ganz besonders bevorzugt sind Katalysatoren der Formeln (R2a) oder (R2b) mit einer allgemeinen Struktureinheit (R1), wobei

| | |
|---|---|
| M | Ruthenium darstellt, |
| $X^1$ und $X^2$ | beide Chlor bedeuten, |
| n | 0,1 oder 2 ist in der allgemeinen Formel (R2a) bzw. |
| n' | 1 ist in der allgemeinen Formel (R2b) |
| $L^1$ | einen Imidazolidin-Rest der Formeln (5a) bis (5f) darstellt, |
| $L^2$ | einen sulfonierten Phosphan-, Phosphat-, Phosphinit-, Phosphonit-, Arsan-, Stiban-, Ether-, Amin-, Amid-, Sulfoxid-, Carboxyl-, Nitrosyl-, Pyridin-Rest, einen Imidazolin- oder Imidazolidin-Rest der Formeln (5a) bis (5f) oder einen Phosphan-Liganden, insbesondere $PPh_3$, $P(p\text{-}Tol)_3$, $P(o\text{-}Tol)_3$, $PPh(CH_3)_2$, $P(CF_3)_3$, $P(p\text{-}FC_6H_4)_3$, $P(p\text{-}CF_3C_6H_4)_3$, $P(C_6H_4\text{-}SO_3Na)_3$, $P(CH_2C_6H_4\text{-}SO_3Na)_3$, P(iso-Propyl$)_3$, $P(CHCH_3(CH_2CH_3))_3$, P(Cyclopentyl$)_3$, P(Cyclohexyl$)_3$, P(Neopentyl$)_3$ und P(Neophenyl$)_3$ darstellt, |
| $R^{25}$-$R^{32}$ | die für die allgemeinen Formeln (R2a) und (R2b) genannten allgemeinen oder bevorzugten Bedeutungen besitzen, |
| m | entweder 0 oder 1 ist, |

und, wenn m = 1 ist

A für Sauerstoff, Schwefel, $C(C_1$-$C_{10}$-Alkyl$)_2$, -$C(C_1$-$C_{10}$-Alkyl$)_2$-$C(C_1$-$C_{10}$-Alkyl$)_2$-, -$C(C_1$-$C_{10}$-Alkyl$)$=$C(C_1$-$C_{10}$-Alkyl$)$- oder-$N(C_1$-$C_{10}$-Alkyl$)$ steht.

Für den Fall, dass der Rest $R^{25}$ mit einem anderen Liganden des Katalysators der Formel R verbrückt ist, ergeben sich beispielsweise für die Katalysatoren der allgemeinen Formeln (R2a) und (R2b) die folgenden Strukturen der allgemeinen Formeln (R13a) und (R13b)

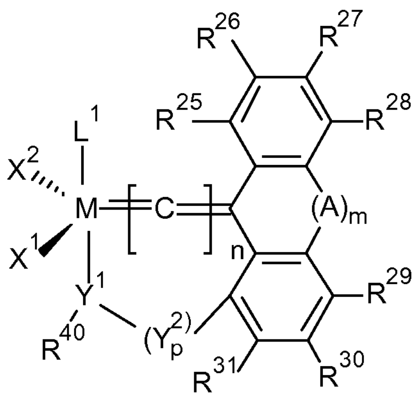

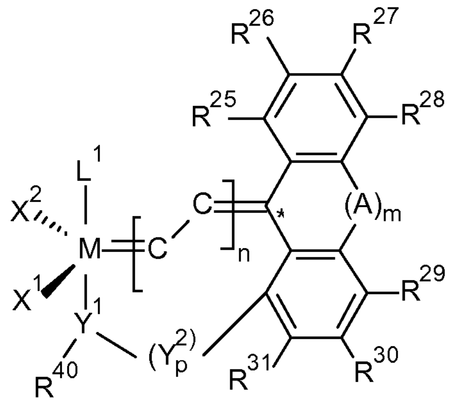

(R13a) (R13b)

worin

| | |
|---|---|
| $Y^1$ | Sauerstoff, Schwefel, einen Rest $N-R^{41}$ oder einen Rest $P-R^{41}$ bedeutet, wobei $R^{41}$ die nachfolgend genannten Bedeutungen besitzt, |
| $R^{40}$ und $R^{41}$ | gleich oder verschieden sind und einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest darstellen, die alle jeweils optional durch ein oder mehrere Alkyl-, Halogen-, Alkoxy-, Aryl- oder Heteroaryl-Reste substituiert sein können, |
| p | 0 oder 1 ist und |
| $Y^2$ | wenn p = 1 ist, für $-(CH_2)_r-$ mit r = 1, 2 oder 3, $-C(=O)-CH_2-$, $-C(=O)-$, $-N=CH-$,$-N(H)-C(=O)-$ oder aber alternativ die gesamte Struktureinheit "$-Y^1(R^{40})-(Y^2)_p-$" für ($-N(R^{40})=CH-CH_2-$), ($-N(R^{40},R^{41})=CH-CH_2-$), steht und |

wobei M, $X^1$, $X^2$, $L^1$, $R^{25}$-$R^{32}$, A, m und n die gleichen Bedeutungen besitzen wie in den allgemeinen Formeln (R10a) und (R10b).

Als **Beispiele für Katalysatoren der allgemeinen Formel (R)** seien die folgenden Strukturen (35) bis (45) genannt:

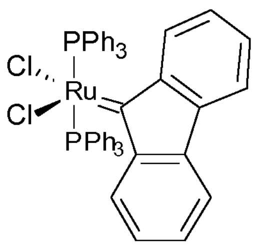

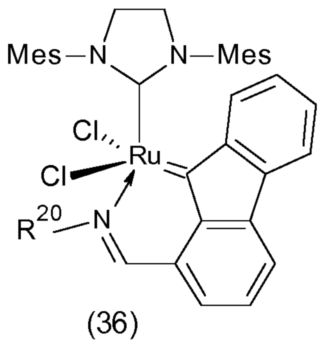

(35) (36)

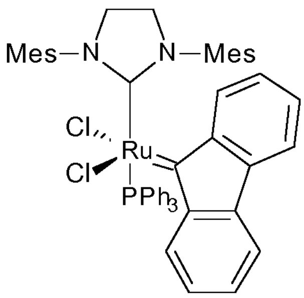

(37)

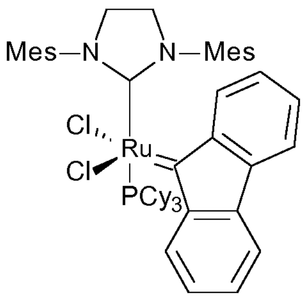

(38)

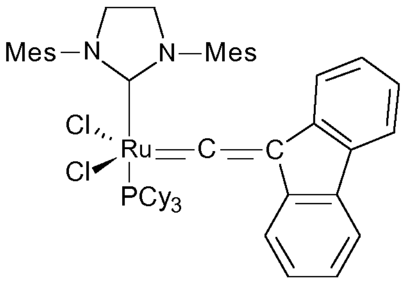

(39)

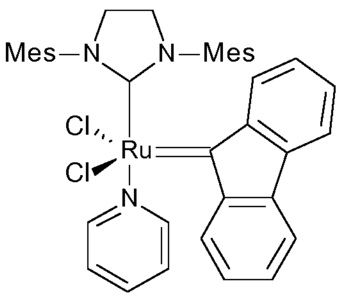

(40)

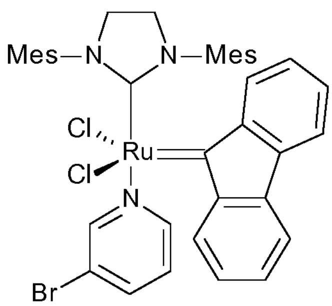

(41)

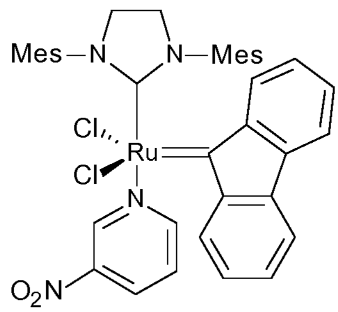

(42)

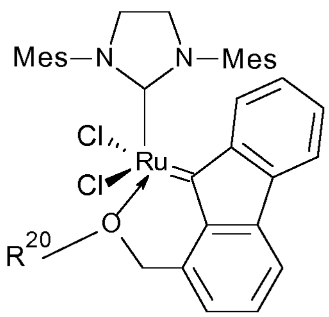

(43)

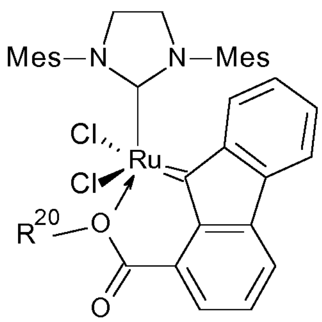

(44)

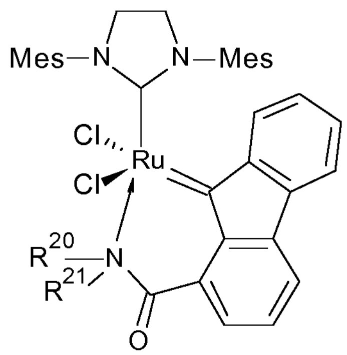

(45)

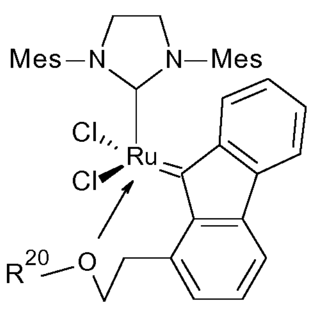

(46)

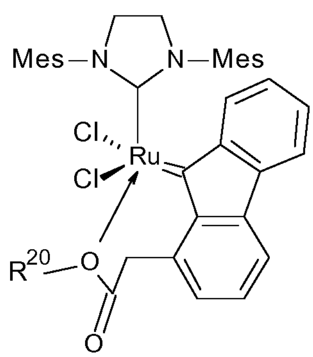

(47)

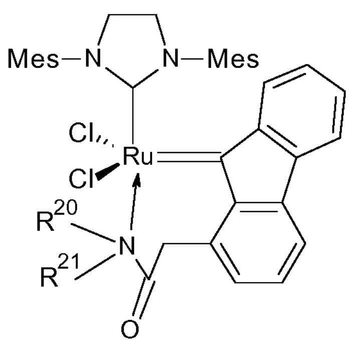

(48)

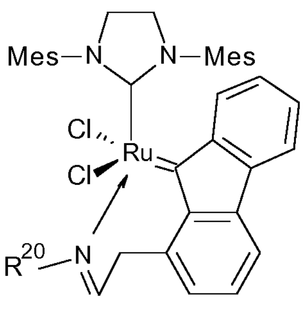
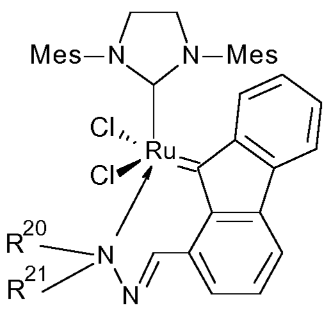
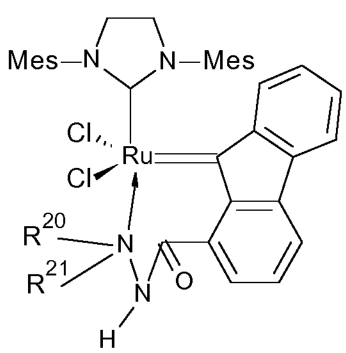

(49) (50) (51)

Die Herstellung von Katalysatoren der allgemeinen Formel (R) ist aus der EP-A-2 027 920 bekannt.

Geeignet sind ferner **Katalysatoren gemäß der allgemeinen Formel (T).**

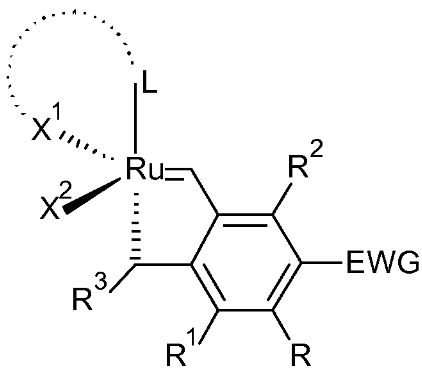

(T)

worin

| | |
|---|---|
| $X^1$ und $X^2$ | gleich oder verschieden sind und anionische Liganden darstellen, oder alternativ miteinander verknüpft sind über Kohlenstoff-Kohlenstoff und/oder Kohlenstoff-Heteroatom-Bindungen, |
| Y | ein neutraler zwei-Elektronen Donor ist ausgewählt aus O, S, N und P, |
| R | für H, Halogen, Alkyl, Alkoxy, Aryl, Aryloxy, Alkylcarbonyl, Arylcarbonyl, Alkoxycarbonyl, Aryloxycarbonyl, Heteroaryl, Carboxyl ($RCO_2^-$), Cyano, Nitro, Amido, Amino, Aminosulfonyl, N-heteroarylsulfonyl, Alkylsulfonyl, Arylsulfonyl, Alkylsulfinyl, Arylsulfinyl, Alkylthio, Arylthio oder Sulfonamid stehen, |
| $R^1$ und $R^2$ | für H, Br, I, Alkyl, Alkoxy, Aryl, Aryloxy, Alkylcarbonyl, Arylcarbonyl, Alkoxycarbonyl, Aryloxycarbonyl, Carboxyl, Amido, Amino, Heteroaryl, Alkylthio, Arylthio, oder Sulfonamido stehen, |
| $R^3$ | für Alkyl, Aryl, Heteroaryl, Alkylcarbonyl, Arylcarbonyl, Thiocarbonyl, oder Aminocarbonyl stehen, |
| EWG | eine elektronenziehende Gruppe ist die ausgewählt ist aus der Gruppe bestehend aus Aminosulfonyl, Amidosulfonyl, N-Heteroarylsulfonyl, Arylsulfonyl, Arylsulfinyl, Arylcarbonyl, Alkylcarbonyl, Aryloxycarbonyl, Aminocarbonyl, Amido, Sulfonamido, Chlor, Fluor, H, oder Haloalkyl und |
| L | ein elektronenlieferender Ligand ist, der an $X^1$ über Kohlenstoff-Kohlenstoff und/oder Kohlenstoff-Heteroatom-Bindungen geknüpft sein kann. |

Diese Katalysatoren der allgemeinen Formel (T) sind aus US 2007/0043180 bekannt.

Bevorzugt sind Katalysatoren der allgemeinen Formel (T), worin $X^1$ und $X^2$ ausgewählt sind aus einem ionischen Ligand in Form von Halogeniden, Carboxylaten und Aryloxiden. Besonders bevorzugt stehen $X^1$ und $X^2$ beide für Halogenide, insbesondere sind beide Chloride. In der allgemeinen Formel (T) steht Y bevorzugt für Sauerstoff. R steht bevorzugt für H, Halogen, Alkoxycarbonyl, Aryloxycarbonyl, Heteroaryl, Carboxyl, Amido, Alkylsulfonyl, Arylsulfonyl, Alkylthio, Arylthio oder Sulfonamido. Insbesondere steht R für H, Cl, F oder eine $C_{1-8}$ Alkoxycarbonyl Gruppe. $R^1$ und $R^2$ sind gleich oder verschieden und stehen bevorzugt für H, Alkoxy, Aryl, Aryloxy, Alkoxycarbonyl, Amido, Alkylthio, Arylthio oder eine Sulfonamido-Gruppe. Insbesondere steht $R^1$ für H oder eine Alkoxy-Gruppe und $R^2$ ist Wasserstoff. In der allgemeinen Formel (T) steht $R^3$ bevorzugt für eine Alkyl, Aryl, Heteroaryl, Alkylcarbonyl oder Arylcarbonyl-Gruppe. Besonders bevorzugt steht $R^3$ für Isopropyl, sec-Butyl und Methoxyethyl. In der allgemeinen Formel (T) steht EWG bevorzugt für eine Aminosulfonyl, Amidosulfonyl, N-Heteroarylsulfonyl, Arylsulfonyl, Aminocarbonyl, Arylsulfonyl, Alkylcarbonyl, Aryloxycarbonyl, Halogen oder Haloalkyl-Gruppe. Besonders bevorzugt steht EWG für eine $C_{1-12}$ N-alkylaminosulfonyl, $C_{2-12}$ N-Heteroarylsulfonyl, $C_{1-12}$ Aminocarbonyl, $C_{6-12}$ Arylsulfonyl, $C_{1-12}$ Alkylcarbonyl, $C_{6-12}$ Arylcarbonyl, $C_{6-12}$ Aryloxycarbonyl, Cl, F oder Trifluoromethyl-Gruppe. In der allgemeinen Formel (T) steht L für einen elektronliefernden Liganden ausgewählt aus Phosphinen, Amino, Aryloxiden, Carboxylaten oder heterocyclischen Carben-Resten, die an $X^1$ über Kohlenstoff-Kohlenstoff und/oder Kohlenstoff-Heteroatom-Bindungen gebunden sein können.

Besonders geeignet ist ein Katalysator der allgemeinen Formel (T), worin L ein heterocyclischer Carben-Ligand oder ein Phosphin ($P(R^8)_2(R^9)$ darstellt mit den folgenden Strukturen:

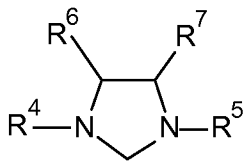
(6a)

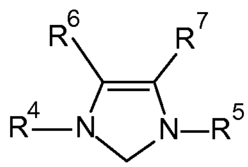
(6b)

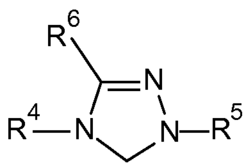
(6c)

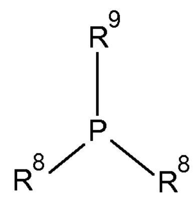
(6d)

worin

$R^4$ und $R^5$ gleich oder verschieden sind und $C_{6-12}$ Aryl darstellen und
$R^6$ und $R^7$ gleich oder verschieden sind und H, Halogen, Alkyl, Alkoxy, Aryl, Aryloxy, Alkylcarbonyl, Arylcarbonyl, Alkoxycarbonyl, Aryloxycarbonyl, Heteroaryl, Carboxyl, Cyano, Nitro, Amido, Amino, Alkylsulfonyl, Arylsulfonyl, Alkylsulfinyl, Arylsulfinyl, Alkylthio oder Sulfonamido bedeuten und
$R^8$ und $R^9$ gleich oder verschieden sind und $C_{1-8}$ Alkyl oder $C_{6-12}$ Aryl darstellen.

Geeignet sind ferner **bimetallische Komplexe der allgemeinen Formel (U),**

$$M^1_a M^2_b X_m (L^1)_n \qquad (U)$$

worin

$M^1$ Rhodium (Rh) oder Ruthenium (Ru) darstellt,
$M^2$ Ruthenium (Ru) oder ein Lanthanid darstellt,

wobei dann, wenn $M^1$ für Rhodium (Rh) steht, $M^2$ Ruthenium (Ru) oder ein Lanthanid darstellt und dann, wenn $M^1$ für Ruthenium (Ru) steht, $M^2$ ein Lanthanid darstellt,

X gleich oder verschieden sind und H, Cl oder Br bedeuten,
$L^1$ ein Organophosphan ($PR^1R^2R^3$), Diphosphan ($R^1R^2P(CH_2)_nPR^3R^4$), Organoarsan ($AsR^1R^2R^3$) oder andere organische Verbindungen enthaltend Stickstoff, Schwefel, Sauerstoff Atome oder Mischungen davon darstellt, wobei $R^1$, $R^2$, $R^3$ and $R^4$ gleich oder verschieden sind und $C_1$-$C_6$ Alkyl, $C_6$-$C_{12}$ Cycloalkyl, Aryl, $C_7$-$C_{12}$ Aralkyl oder Aryloxy Gruppen darstellen,

$$1 \leqq a \leqq 4,$$

$$1 \leqq b \leqq 2,$$

$$3 \leqq m \leqq 6$$

und

$$6 \leqq n \leqq 15$$

ist.

Diese Katalysatoren der allgemeinen Formel (U) sind aus US-A-6,084,033 prinzipiell bekannt.

Besonders geeignet sind Katalysatoren der allgemeinen Formel (U), worin $M^1$ Rhodium bedeutet und $M^2$ Ruthenium. Besonders geeignet sind ferner Katalysatoren der allgemeinen Formel (U), worin $M^2$ ein Lanthanid darstellt, insbesondere Ce oder La. In besonders geeigneten Katalysatoren der allgemeinen Formel (U) sind X gleich oder verschieden und H oder Cl. Besonders geeignet sind Katalysatoren der allgemeinen Formel (U), worin $L^1$ ausgewählt ist aus Trimethylphosphan, Triethylphosphan, Triphenylphosphan, Triphenoxyphosphan, Tri(p-methoxyphenyl)phosphan, Diphenylethylphosphan, 1,4-Di-(diphenylphosphano)butan, 1,2-Di-(diphenylphosphano)ethan, Triphenylarsan, Dibutylphenylarsan, Diphenylethylarsan, Triphenylamin, Triethylamin, N,N-Dimethylanilin, Diphenylthioether, Dipropylthioether, N,N'-Tetramethylethylendiamin, Acetylaceton, Diphenylketone und Mischungen davon.

**Weitere Katalysatoren, die eingesetzt werden können,** sind beschrieben in US-A-37 00 637, DE-A-25 39 132, EP-A 134 023, DE-A 35 41 689, DE 3540918, EP-A-0 298 386, DE-A 3529252, DE-A 3433 392, US-A 4,464,515, US 4,503,196 sowie EP-A-1 720 920.

**Menge Hydrierkatalysator:**

Für die Hydrierung des Nitrilkautschuks kann der Hydrierkatalysator in einem breiten Mengenbereich eingesetzt werden. Üblicherweise wird der Katalysator in einer Menge von 0,001 bis 1,0 Gew.%, bevorzugt von 0,01 bis 0,5 Gew.%, insbesondere 0,05 bis 0,3 Gew.%, bezogen auf den zu hydrierenden Nitrilkautschuk eingesetzt.

**Sonstige Hydrierbedingungen:**

Die praktische Durchführung der Hydrierung ist dem Fachmann bekannt, z.B. aus US 6,683,136A**.**

**Lösungsmittel:**

Die Hydrierung erfolgt üblicherweise in einem Lösungsmittel, bevorzugt einem organischen Lösungsmittel. Als organische Lösungsmittel sind z.B. Aceton, Methylethylketon, Essigsäureethylester, Tetrahydrofuran, 1,3-Dioxan, Benzol, Toluol, Methylenchlorid, Chloroform, Monochlorbenzol und Dichlorbenzol geeignet. Besonders bewährt hat sich Monochlorbenzol, da es sowohl für Nitrilkautschuke mit unterschiedlichen Nitrilgehalten als auch für die entsprechenden resultierenden hydrierten Nitrilkautschuke ein gutes Lösungsmittel ist.

**Konzentration Nitrilkautschuk:**

Für die Hydrierung löst man Nitrilkautschuk üblicherweise in mindestens einem Lösungsmittel. Die Konzentration des Nitrilkautschuks bei der Hydrierung liegt i.d.R. im Bereich 1 - 30 Gew.%, bevorzugt im Bereich 5 - 25 Gew.%, besonders bevorzugt im Bereich 7 - 20 Gew.%.

Der Druck liegt bei der Hydrierung üblicherweise im Bereich von 0,1 bar bis 250 bar, bevorzugt von 5 bar bis 200 bar, besonders bevorzugt von 50 bar bis 150 bar. Die Temperatur liegt typischerweise im Bereich von 0°C bis 180°C, bevorzugt von 20°C bis 160°C, besonders bevorzugt von 50°C bis 150°C. Die Reaktionszeit liegt in der Regel bei 2 bis 10 h.

Im Rahmen der Hydrierung werden die im eingesetzten Nitrilkautschuk vorhandenen Doppelbindungen soweit hydriert, bis die gewünschten und zuvor bereits beschriebenen Hydriergrade erreicht sind.

Dder Verlauf der Hydrierung wird on-line durch Bestimmung der Wasserstoffaufnahme oder durch Raman- (EP-A-0 897 933) oder IR-Spektroskopie (US-A-6,522,408) verfolgt. Eine geeignete IR-Methode zur off-line Bestimmung des Hydriergrades ist weiterhin beschreiben durch D. Brück in Kautschuke + Gummi, Kunststoffe, Vol. 42. (1989), No. 2, S. 107-110 (**part 1**) sowie in Kautschuke + Gummi, Kunststoffe, Vol. 42. (1989), No. 3, S. 194-197**.**

Nach Erreichen des gewünschten Hydriergrades wird der Reaktor entspannt. Restmengen an Wasserstoff werden üblicherweise durch eine Stickstoffspülung entfernt.

Vor der Isolierung des hydrierten Nitrilkautschuks aus der organischen Phase kann der Hydrierkatalysator entfernt werden. Ein bevorzugtes Verfahren zur Rhodium Rückgewinnung ist beispielsweise in US-A-4,985,540 beschrieben.

Sofern die Hydrierung im Rahmen des erfindungsgemäßen Verfahrens unter Zusatz eines Phosphan bzw. Diphosphans erfolgt, so werden diese typischerweise in Mengen von 0,1 bis 10 Gew.%, bevorzugt von 0,25 bis 5 Gew.%, besonders bevorzugt 0,5 bis 4 Gew.%, ganz besonders bevorzugt 0,75 bis 3,5 Gew.% und insbesondere 1 bis 3 Gew.%, bezogen auf den zu hydrierenden Nitrilkautschuk eingesetzt.

Bezogen auf 1 Äquivalent des Hydrierkatalysators wird das Phosphan bzw. Diphosphan bewährterweise in einer Menge im Bereich von 0,1 bis 10 Äquivalenten, bevorzugt im Bereich von 0,2 bis 5 Äquivalenten und besonders bevorzugt im Bereich von 0,3 bis 3 Äquivalenten eingesetzt.

Das Gewichtsverhältnis des zugesetzten Phosphans bzw. Diphosphans zum Hydrierkatalysator beträgt üblicherweise (1-100):1, besonders bevorzugt (3-30):1, insbesondere (5-15):1.

Nach Abschluss der Hydrierung erhält man einen hydrierten Nitrilkautschuk mit einer Mooney-Viskosität (ML 1+4 @ 100°C), gemessen gemäß ASTM Norm D 1646, im Bereich von 1 - 50. Dies entspricht ungefähr einem Gewichtsmittel des Molekulargewicht $M_w$ im Bereich von 2.000 - 400.000 g/mol. Bevorzugt liegt die Mooney-Viskosität (ML 1+4 @100°C) im Bereich von 5 bis 30. Dies entspricht ungefähr einem Gewichtsmittel des Molekulargewicht $M_w$ im Bereich von ca. 20.000 - 200.000. Die erhaltenen hydrierten Nitrilkautschuke besitzen ferner eine Polydispersität PDI= $M_w/M_n$, wobei $M_w$ das Gewichtsmittel und $M_n$ das Zahlenmittel des Molekulargewichts darstellt, im Bereich von 1- 5 und bevorzugt im Bereich von 1,5 - 3.

Es ist ferner möglich, den Nitrilkautschuk vor der Hydrierung einer Metathese Reaktion zu unterziehen, um das Molekulargewicht des Nitrilkautschuks abzubauen. Die Metathese von Nitrilkautschuken ist dem Fachmann hinlänglich bekannt. Sofern eine Metathese erfolgt, ist ferner möglich, die anschließende Hydrierung in-situ durchzuführen, d.h. in dem gleichen Reaktionsgemisch, in dem zuvor auch der Metathese-Abbau erfolgte und ohne Notwendigkeit, den abgebauten Nitrilkautschuk zu isolieren. Der Hydrierkatalysator wird einfach dem Reaktionsgefäß zugesetzt.

**Schritt 2:**

In Schritt 2 wird der bei der Hydrierung erhaltene phosphan- oder diphosphanhaltige hydrierte Nitrilkautschuk mit der Schwefelverbindung, die keine zwei miteinander direkt verbundene Schwefel-Atome aufweist, in Kontakt gebracht. Hierbei kommt es zur Bildung des Phosphan- oder Diphosphanoxids aus dem Phosphan bzw. Diphosphan und somit zur Reduktion bis hin zur kompletten Entfernung der Phosphan- bzw. Diphosphan-Menge.

Der phosphan- oder diphosphanhaltige hydrierte Nitrilkautschuk kann beim Kontakt mit der Schwefelverbindung entweder in gelöster Form oder als Feststoff vorliegen. Bewährt haben sich beispielsweise die beiden folgenden alternativen Ausführungsformen:

In einer **ersten Ausführungsform** kann die Schwefelverbindung nach Ende der Hydrierung und vor oder während der Isolierung des hydrierten Nitrilkautschuks aus dem Reaktionsgemisch der Hydrierung zugegeben werden. Für die Isolierung des hydrierten Nitrilkautschuks aus der organischen Lösung eignet sich die Verdampfung des organischen Lösungsmittels durch Einwirkung von Hitze oder von reduziertem Druck oder durch Wasserdampfdestillation. Bevorzugt erfolgt eine Wasserdampfdestillation. In diesem Fall erfolgt die anschließende Abtrennung der Kautschukkrümel aus der wässrigen Dispersion mit Sieben und abschließender mechanischer und/oder thermischer Trocknung. Bevorzugt ist die Wasserdampfdestillation. Diese wird in Abhängigkeit vom angewandten Druck bei einer Umsetzungstemperatur von üblicherweise 80 bis 120°C, vorzugsweise etwa 100°C durchgeführt.

Bewährt hat sich die Zugabe der Schwefelverbindung in organischer oder in wässriger Lösung vor oder während der Isolierung des hydrierten Nitrilkautschuks.

Ist die Schwefelverbindung öllöslich, so erfolgt die Zugabe der Schwefelverbindung in das Reaktionsgemisch der Hydrierung in gelöster Form, wobei das Lösungsmittel für die Lösung der Schwefelverbindung zweckmäßigerweise identisch mit dem Lösungsmittel ist, in dem der phosphan- oder diphosphanhaltige hydrierte Nitrilkautschuk vorliegt.

Ist die Schwefelverbindung wasserlöslich, so wird sie als wässrige Lösung zum Reaktionsgemisch der Hydrierung gegeben und mit dieser gut durchmischt.

Optional kann vor dem Zusatz der Schwefelverbindung eine Katalysatorrückgewinnung erfolgen.

In einer **zweiten Ausführungsform** kann der phosphan- bzw. diphosphanhaltige hydrierte Nitrilkautschuk im festem Zustand mit mindestens einer oben definierten Schwefelverbindung versetzt und umgesetzt werden. In dieser Form kann er durch Isolierung aus dem Reaktionsgemisch der Hydrierung erhalten werden. Der phosphan- bzw. diphosphanhaltige hydrierte Nitrilkautschuk liegt dann in einem weitgehend lösungsmittelfreien Zustand vor. Bewährt haben sich für diese Ausführungsform Walzenstühle, Innenmischer oder Extruder. Bevorzugt kommt ein Walzenstuhl oder ein Innenmischer zum Einsatz. Ein typischer, käuflich erhältlicher Walzenstuhl ist thermostatisierbar und verfügt über zwei gegenläufige Walzen. Die Einarbeitung des Schwefeldonors erfolgt unter Wahl einer geeigneten Walzentemperatur, z.B. im Bereich von 10-30°C, bevorzugt bei 20°C +/- 3°C, sowie einer geeigneten Umdrehungsgeschwindigkeit, bevorzugt im Bereich von 25 bis 30 $min^{-1}$, eines geeigneten Walzenspalts, z.B. im Bereich einiger Millimeter, und einer geeigneten Walzzeit, die in der Regel bei einigen Minuten liegt. Das erhaltene Kautschukfell wird anschließend üblicherweise geschnitten und gestürzt und optional nochmals auf die Walze aufgegeben.

Bei dieser Ausführungsform wird auch die Schwefelverbindung typischerweise in fester Form eingesetzt.

Die Umsetzung der Phosphane bzw. Diphosphane mit der Schwefelverbindung zu Phosphanoxiden bzw. Diphosphanoxiden erfolgt in Abhängigkeit von der Reaktivität der verwendeten Schwefelverbindung bei geeigneten Temperaturen. Vorzugsweise liegen die Umsetzungstemperaturen im Bereich von 10°C bis 150°C, bevorzugt im Bereich von 80°C bis 120°C und insbesondere im Bereich von 90°C bis 110°C. Die Reaktionsdauer für die Umsetzung liegt üblicherweise im Bereich von 1 min bis 5 h und kann vom Fachmann in Abhängigkeit von der gewählten Temperatur eingestellt werden.

Die Mengen an Schwefelverbindung (wie im Folgenden definiert) richten sich nach der Menge des Phosphans/Diphosphans, das bei der Hydrierung eingesetzt wurde. Für eine weitgehende Umsetzung des Phosphans/Diphosphans sollte das molare Verhältnis von Schwefelverbindung (wie im Folgenden definiert) zu Phosphan/Diphosphan bei mindestens 0,5:1, bevorzugt (0,5-2):1 liegen.

**Schwefelverbindug:**

Im erfindungsgemäßen Verfahren wird mindestens eine Schwefelverbindung eingesetzt, die keine zwei direkt miteinander verbundenen Schwefel-Atome aufweist.

Geeignet sind beispielsweise die Schwefelverbindungen der allgemeinen Strukturformeln (1) - (10)

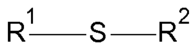
(1)

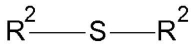
(2)

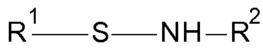
(3)

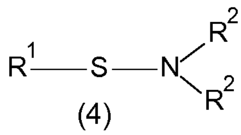
(4)

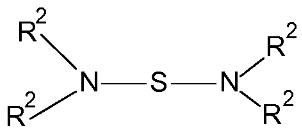
(5)

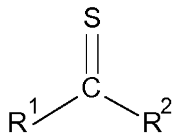
(6)

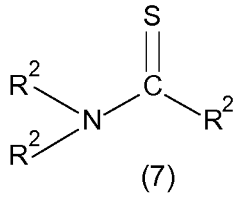
(7)

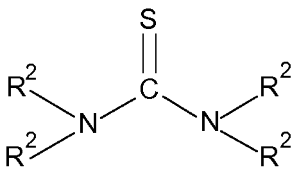
(8)

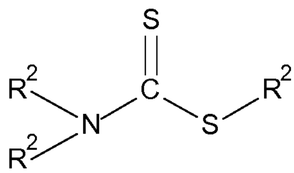
(9)

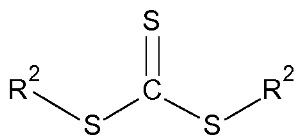
(10)

worin

| | |
|---|---|
| **$R^1$** | ein linearer oder verzweigter, aliphatischer, cycloaliphatischer oder aromatischer Rest sein kann, der bis zu 10 Heteroatome ausgewählt aus der Gruppe bestehend aus Stickstoff, Sauerstoff, Schwefel und Phosphor enthalten kann, unter der Maßgabe, dass dann, wenn Schwefel als Heteroatom enthalten ist, dieser in der Verbindung nicht unmittelbar an ein weiteres Schwefelatom angrenzt, |
| **$R^2$** | gleich oder verschieden sind und für Wasserstoff, ein Alkalimetall, Erdalkalimetall, Ammonium oder substituiertes Ammonium, Phosphonium oder substituiertes Phosphonium, oder einen linearen, verzweigten, aliphatischen, cycloaliphatischen oder aromatischen Rest, der bis zu 10 Heteroatome ausgewählt aus der Gruppe bestehend aus Stickstoff, Sauerstoff, Schwefel und Phosphor enthalten kann, ebenfalls unter der Maßgabe, dass dann, wenn Schwefel als Heteroatom enthalten ist, dieser in der Verbindung nicht unmittelbar an ein weiteres Schwefelatom angrenzt, steht, oder alternativ |
| **$R^1$ und $R^2$ oder aber zwei $R^2$** | unter Einbindung der Atome, an die sie gebunden sind, einen Cyclus bilden können. |

Soweit $R^2$ Bedeutungen annimmt wie Alkalimetall oder Erdalkalimetall, wo keine kovalente Bindung zum nächsten Atom in der Schwefelverbindung erfolgt, sondern vielmehr eine ionische Bindung vorliegt, sollen die oben mit den kovalenten Bindungen dargestellten Formeln auch derartige ionische Bindungsverhältnisse mit abdecken.

Bevorzugt sind Schwefelverbindungen der allgemeinen Strukturformeln (1) bis (10), worin

**$R^1$** Alkyl, besonders bevorzugt $C_1$-$C_{18}$-Alkyl, Alkenyl, besonders bevorzugt Vinyl oder Allyl, Alkadienyl, besonders bevorzugt Butadienyl oder Pentadienyl, Alkoxy, besonders bevorzugt Methoxy, Ethoxy, n-Propoxy, iso-Propoxy,

n-Butoxy, sec.-Butoxy, tert.-Butoxy, n-Pentoxy und n-Hexoxy, Aryl, besonders bevorzugt $C_6$-$C_{12}$-Aryl, Heteroaryl, besonders bevorzugt Pyridinyl, Oxazolyl, Benzofuranyl, Dibenzofuranyl und Chinolinyl, Cycloalkyl, besonders bevorzugt $C_3$-$C_8$-Cycloalkyl, Cycloalkenyl, besonders bevorzugt $C_5$-$C_8$ Cycloalkenyl, oder Cycloalkadienyl, besonders bevorzugt Cyclopentadienyl oder Cyclohexadienyl bedeutet, und

**$R^2$** Wasserstoff, Alkyl, besonders bevorzugt $C_1$-$C_{18}$-Alkyl, Alkenyl, besonders bevorzugt Vinyl oder Allyl, Alkadienyl, besonders bevorzugt Butadienyl oder Pentadienyl, Alkoxy, besonders bevorzugt Methoxy, Ethoxy, n-Propoxy, iso-Propoxy, n-Butoxy, sec.-Butoxy, tert.-Butoxy, n-Pentoxy und n-Hexoxy, Aryl, besonders bevorzugt $C_6$-$C_{12}$-Aryl, Heteroaryl, besonders bevorzugt Pyridinyl, Oxazolyl, Benzofuranyl, Dibenzofuranyl und Chinolinyl, Cycloalkyl, besonders bevorzugt $C_3$-$C_8$-Cycloalkyl, Cycloalkenyl, besonders bevorzugt $C_5$-$C_8$ Cycloalkenyl, oder Cycloalkadienyl, besonders bevorzugt Cyclopentadienyl oder Cyclohexadienyl bedeutet.

Alle vorgenannten Reste **$R^1$ und $R^2$** können dabei ein- oder mehrfach substituiert sein.

Bezüglich der Reste **$R^1$ und $R^2$** sind typischerweise und bevorzugt folgende Bedeutungen möglich: **Alkyl** steht typischerweise für einen geradkettigen oder verzweigten $C_1$-$C_{30}$-Alkylrest, bevorzugt $C_1$-$C_{24}$-Alkylrest, besonders bevorzugt $C_1$-$C_{18}$-Alkylrest. $C_1$-$C_{18}$-Alkyl umfasst beispielsweise Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, 1,1-Dimethylpropyl, 1,2-Dimethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, n-Heptyl, n-Octyl, n-Nonyl, n-Decyl, n-Undexyl, n-Dodecyl, n-Tridecyl, n-Tetradecyl, n-Hexadecyl und n-Octadecyl.

Alle vorgenannten Alkyl-Reste können ein- oder mehrfach substituiert sein, beispielsweise durch $C_5$-$C_{24}$-Aryl-Reste, bevorzugt Phenyl, Halogen, besonders bevorzugt Fluor, Chlor oder Brom, CN, OH, $NH_2$ oder $NR'_2$-Reste, wobei R' wiederum $C_1$-$C_{30}$-Alkyl oder $C_5$-$C_{24}$-Aryl bedeuten kann.

**Alkenyl** als Bedeutung von **$R^1$ und $R^2$** in den allgemeinen Formeln (1) - (10) steht typischerweise für $C_2$-$C_{30}$-Alkenyl, bevorzugt für $C_2$-$C_{20}$-Alkenyl. Insbesondere bevorzugt handelt es sich bei dem Alkenylrest um einen Vinylrest oder einen Allylrest.

**Alkadienyl** als Bedeutung von **$R^1$ und $R^2$** in den allgemeinen Formeln (1) - (10)steht typischerweise für $C_4$-$C_{30}$-Alkadienyl, bevorzugt für $C_4$-$C_{20}$-Alkadienyl. Insbesondere bevorzugt handelt es sich bei dem Alkadienylrest um Butadienyl oder Pentadienyl.

**Alkoxy** als Bedeutung von **$R^1$ und $R^2$** in den allgemeinen Formeln (1) - (10) steht typischerweise für $C_1$-$C_{20}$-Alkoxy-, bevorzugt für $C_1$-$C_{10}$-Alkoxy, besonders bevorzugt für Methoxy, Ethoxy, n-Propoxy, iso-Propoxy, n-Butoxy, sec.-Butoxy, tert.-Butoxy, n-Pentoxy und n-Hexoxy.

**Aryl** als Bedeutung von **$R^1$ und $R^2$** in den allgemeinen Formeln (1) - (10)steht typischerweise für einen $C_5$-$C_{24}$-Arylrest, bevorzugt für einen $C_6$-$C_{14}$-Arylrest, insbesondere bevorzugt für einen $C_6$-$C_{12}$-Arylrest. Beispiele für $C_5$-$C_{24}$-Aryl sind Phenyl, o-, p-, m-Tolyl, Naphthyl, Phenanthrenyl, Anthracenyl und Fluorenyl.

Alle vorgenannten Reste können, soweit dies chemisch zu stabilen Verbindungen führt, auch ein- oder mehrfach substituiert sein, beispielsweise durch geradkettiges oder verzweigtes $C_1$-$C_{30}$-Alkyl (bei einem Arylrest resultieren dann sogenannte Alkaryl-Reste), Halogen, bevorzugt Fluor, Chlor oder Brom, Sulfonat ($SO_3Na$), geradkettiges oder verzweigtes $C_1$-$C_{30}$-Alkoxy, bevorzugt Methoxy oder Ethoxy, Hydroxy, $NH_2$ oder $NR'_2$-Reste, wobei R' wiederum geradkettiges oder verzweigtes $C_1$-$C_{30}$-Alkyl oder $C_5$-$C_{24}$-Aryl bedeuten kann, oder durch weitere $C_5$-$C_{24}$-Arylreste, so dass ein oder mehrere der R" Reste dann einen Biphenyl oder Binaphthyl-Rest darstellen können, der optional wiederum durch alle vorgenannten Substituenten ein- oder mehrfach substituiert sein kann.

**Heteroaryl** als Bedeutung von **$R^1$ und $R^2$** in den allgemeinen Formeln (1) - (10)hat die gleiche Bedeutungen wie Aryl, wobei jedoch ein- oder mehrere der Gerüstkohlenstoff-Atome durch ein Heteroatom, ausgewählt aus der Gruppe Stickstoff, Schwefel und Sauerstoff, ersetzt sind. Beispiele für solche Heteroaryl-Reste sind Pyridinyl, Oxazolyl, Benzofuranyl, Dibenzofuranyl und Chinolinyl. **Cycloalkyl** als Bedeutung von **$R^1$ und $R^2$** in den allgemeinen Formeln (1) - (10) steht vorzugsweise für einen $C_3$-$C_{20}$-Cycloalkylrest, besonders bevorzugt für einen $C_3$-$C_8$-Cycloalkylrest und insbesondere bevorzugt für Cyclopentyl und Cyclohexyl.

**Cycloalkenyl** als Bedeutung von **$R^1$ und $R^2$** in den allgemeinen Formeln (1) - (10) steht für ein Ringgerüst mit einer C=C Doppelbindung, vorzugsweise für $C_5$-$C_8$ Cycloalkenyl, besonders bevorzugt für Cyclopentenyl oder Cyclohexenyl.

**Cycloalkadienyl** als Bedeutung von **$R^1$ und $R^2$** in den allgemeinen Formeln (1) - (10)steht für ein Ringgerüst mit zwei C=C Doppelbindungen auf, vorzugsweise für $C_5$-$C_8$ Cycloalkadienyl, besonders bevorzugt für Cyclopentadienyl oder Cyclohexadienyl.

**Beispiele für derartige erfindungsgemäß einzusetzende Schwefelverbindungen** sind n-Butylmercaptan, tert-Butylmercaptan, n-Hexylmercaptan, n-Dodecylmercaptan, tert.-Dodecylmercaptan, Benzylmercaptan, Dibenzylsulfid, 2-Mercaptobenzthiazol, 2- Morpholinobenzthiazol, N-Cyclohexyl-2-benzthiazylsulfenamid, N, N-Dicyclohexylbenzthiazylsulfenamid, N-tert.Butyl-2-benzthiazylsulfenamid und N-Cyclohexylthiophthalimid

Bevorzugt sind die in folgenden Abbildungen dargestellten Schwefelverbindungen:

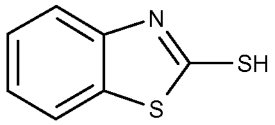

2-Mercaptobenzthiazol

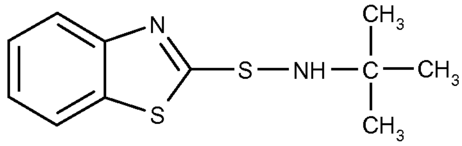

N-tert.Butyl-2-benzthiazylsulfenamid

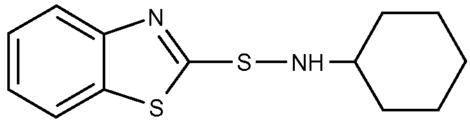

N-Cyclohexyl-2-benzthiazylsulfenamid

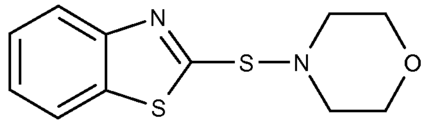

2-Morpholinothiobenzthiazol

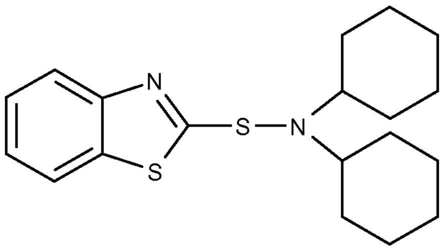

N,N-Dicyclohexyl-benzthiazylsulfenamid

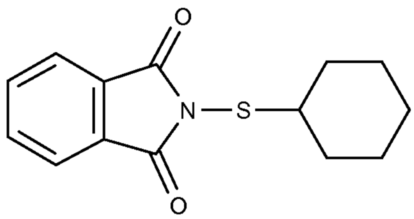

Cyclohexylthiophthalimid

**Menge der Schwefelverbindung:**

Die eingesetzte Menge der Schwefelverbindung berechnet sich auf Basis der Phosphan- bzw. Diphosphanmenge, die bei der Hydrierung des Nitrilkautschuks zugegen ist. Die **molare Menge an Schwefelverbindung** (berechnet als S) beträgt bevorzugt 5 bis 300 %, vorzugsweise 50 bis 150%, besonders bevorzugt 75 bis 125 % der molaren Menge des Phosphans oder Diphosphans, das zuvor in der Hydrierung zugegen ist.

In **Gew.% wird die Schwefelverbindung,** wiederum berechnet als Schwefel, bevorzugt in einer Menge von 5 bis 25 Gew.%, vorzugsweise 7 bis 20 Gew.%, insbesondere 10 bis 15 Gew.%, bezogen auf 100 Gew.% des Phosphans oder Diphosphans, das zuvor in der Hydrierung zugegen ist, nach der Hydrierung zugesetzt.

Durch das erfindungsgemäße Verfahren werden die Phosphane bzw. Diphosphane vorzugsweise zu mindestens 50%, besonders bevorzugt zu mindestens 80%, insbesondere zu mindestens 95% in Phosphan- bzw. Diphosphanoxide umgewandelt. Es ist möglich, die Umsetzung des Phosphans/Diphosphans nahezu quantitativ bzw. sogar quantitativ durchzuführen.

Entsprechend beträgt der Gehalt an Phosphanen bzw. Diphosphanen, bezogen auf die Summe aus (i) Phosphan- oder Diphosphanoxiden und (ii) Phosphan oder Diphosphan im hydrierten Nitrilkautschuk, vorzugsweise weniger als 50 mol%, besonders bevorzugt weniger als 20 mol%, insbesondere weniger als 5 mol%. Es ist auch eine vollständige Entfernung möglich.

Die Bestimmung des Triphenylphosphan- (TPP) und Triphenylphosphanoxid- (TPP=O) Gehalts im hydrierten Nitrilkautschuk erfolgt gemäß der in den Beispielen angegebenen Methodik.

Auch ohne Zusatz von Schwefelverbindungen nach der Hydrierung kann es in Einzelfällen zur Bildung geringer Spuren von Phosphanoxiden kommen, die jedoch deutlich unter 0,25 Gew.%, bezogen auf den hydrierten Nitrilkautschuk, liegen. Wie auch aus den Beispielen erkennbar, führt erst der gezielte Zusatz von Schwefelverbindungen zum hydrierten Nitrilkautschuk zu den erfindungsgemäßen Vorteilen durch die Umsetzung von Phosphanen bzw. Diphosphanen zu Phosphanoxiden bzw. Diphosphanoxiden.

**Gegenstand der Erfindung sind** ferner vulkanisierbaren Mischungen enthaltend mindestens einen erfindungsgemäßen hydrierten Nitrilkautschuk und mindestens einen Vernetzungssystem. Zusätzlich können die vulkanisierbaren Mischungen noch ein oder mehrere weitere typische Kautschukadditive enthalten.

Die Herstellung dieser vulkanisierbaren Mischungen erfolgt durch Mischen mindestens eines erfindungsgemäßen hydrierten Nitrilkautschuk (i) mit mindestens einem Vernetzungssystem (ii) und gegebenenfalls ein oder mehreren

weiteren Additiven.

Das Vernetzungssystem enthält mindestens einen Vernetzer und optional ein oder mehrere Vernetzungsbeschleuniger.

Üblicherweise wird der erfindungsgemäße hydrierte Nitrilkautschuk zunächst mit allen gewählten Additiven gemischt und erst als letztes das Vernetzungssystem aus mindestens einem Vernetzer sowie optional einem Vernetzungsbeschleuniger zugemischt.

Als **Vernetzer** kommen beispielsweise peroxidische Vernetzer in Frage wie Bis(2,4-dichlorbenzyl)peroxid, Dibenzoylperoxid, Bis(4-chlorbenzoyl)peroxid, 1,1-Bis-(t-butylperoxy)-3,3,5-trimethylcylohexan, tert-Butylperbenzoat, 2,2 Bis(t-butylperoxy) buten, 4,4-di-tert.Butyl peroxynonylvalerat, Dicumylperoxid, 2,5-Dimethyl-2,5-di(t-butylperoxy)-hexan, tert-Butylcumylperoxid, 1,3-Bis(t-butylperoxy isopropyl)-benzol, Di-t-butylperoxid und 2,5-Dimethyl-2,5-di(t-butylperoxy)-hexyn-3.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropantri(meth)acrylat, Triallyl-trimellithat, Ethylenglycoldimethacrylat, Butandioldimethacrylat, Trimethylolpropantrimethacrylat, Zn-diacrylat, Zn-dimethacrylat, 1,2-Polybutadien oder N,N-'m-Phenylendimaleinimid geeignet.

Die **Gesamtmenge des oder der Vernetzer** liegt üblicherweise im Bereich von 1 bis 20 phr, bevorzugt im Bereich von 1,5 bis 15 phr und besonders bevorzugt im Bereich von 2 bis 10 phr, bezogen auf den ganz oder teilweise hydrierten Nitrilkautschuk.

Als Vernetzer können auch Schwefel in elementarer löslicher oder unlöslicher Form oder Schwefelspender eingesetzt werden. Als Schwefelspender kommen beispielsweise Dimorpholyldisulfid (DTDM), 2-Morpholinodithiobenzothiazol (MBSS), Caprolactamdisulfid, Dipentamethylenthiuramtetrasulfid (DPTT), und Tetramethylthiuramdisulfid (TMTD) in Frage.

Auch bei der Schwefelvulkanisation der hydrierten Nitrilkautschuke ist es möglich, noch weitere Zusätze zu verwenden, mit deren Hilfe die Vernetzungsausbeute erhöht werden kann. Grundsätzlich kann die Vernetzung aber auch mit Schwefel oder Schwefelspendern allein erfolgen.

Als Zusätze, mit deren Hilfe die Vernetzungsausbeute erhöht werden kann, eignen sich z.B. Dithiocarbamate, Thiurame, Thiazole, Sulfenamide, Xanthogenate, Guanidinderivate, Caprolactame und Thioharnstoffderivate.

Als Dithiocarbamate können beispielsweise eingesetzt werden: Ammoniumdimethyl-dithiocarbamat, Natriumdiethyldithiocarbamat (SDEC), Natriumdibutyl-dithiocarbamat (SDBC), Zinkdimethyldithiocarbamat (ZDMC), Zinkdiethyldithiocarbamat (ZDEC), Zinkdibutyl-dithiocarbamat (ZDBC), Zinkethylphenyldithiocarbamat (ZEPC), Zinkdibenzyldithiocarbamat (ZBEC), Zinkpentamethylendithiocarbamat (Z5MC), Tellurdiethyldithiocarbamat, Nickeldibutyldithiocarbamat, Nickeldimethyldithiocarbamat und Zinkdiisononyldithiocarbamat.

Als Thiurame können z.B. Tetramethylthiuramdisulfid (TMTD), Tetramethylthiurammonosulfid (TMTM), Dimethyldiphenylthiuramdisulfid, Tetrabenzylthiuramdisulfid, Dipentamethylenthiuramtetrasulfid oder Tetraethylthiuramdisulfid (TETD) eingesetzt werden.

Als Thiazole können z.B. 2-Mercaptobenzothiazol (MBT), Dibenzthiazyldisulfid (MBTS), Zinkmercaptobenzothiazol (ZMBT) oder Kupfer-2-mercaptobenzothiazol eingesetzt werden.

Als Sulfenamidderivate können z.B. N-Cyclohexyl-2-benzothiazylsulfenamid (CBS), N-tert.-Butyl-2-benzthiazylsulfenamid (TBBS), N,N'-Dicyclohexyl-2-benzthiazylsulfenamid (DCBS), 2-Morpholinothiobenzthiazol (MBS), N-Oxydiethylenthiocarbamyl-N-tert.butylsulfenamid oder Oxydiethylenthiocarbamyl-N-oxyethylensulfenamid eingesetzt werden.

Als Xanthogenate können z.B. Natriumdibutylxanthogenat, Zinkisopropyldibutylxanthogenat oder Zinkdibutylxanthogenat eingesetzt werden.

Als Guanidinderivate können z.B. Diphenylguanidin (DPG), Di-o-tolylguanidin (DOTG) oder o-Tolylbiguanid (OTBG) eingesetzt werden.

Als Dithiophosphate können beispielsweise eingesetzt werden: Zinkdi($C_2$-$C_{16}$)alkyldithiophosphate Kupferdi($C_2$-$C_{16}$)alkyldithiophosphate und Dithiophoshorylpolysulfid.

Als Caprolactam kann beispielsweise Dithio-bis-caprolactam eingesetzt werden.

Als Thioharnstoffderivate können beispielsweise N,N'-Diphenylthioharnstoff (DPTU), Diethylthioharnstoff (DETU) und Ethylenthioharnstoff (ETU) eingesetzt werden.

Eine Vernetzung ist auch mit Vernetzern möglich, die mindestens zwei Isocyanatgruppen aufweisen - entweder in Form mindestens zwei freier Isocyanatgruppen (-NCO) oder aber in Form geschützter Isocyanatgruppen, aus denen unter den Vernetzungsbedingungen in-situ die -NCO Gruppen freigesetzt werden.

Ebenso als Zusätze geeignet sind beispielsweise Zinkdiamindiisocyanat, Hexamethylentetramin, 1,3-Bis(citraconimidomethyl)benzol sowie zyklische Disulfane.

Die genannten Zusätze und Vernetzungsmittel können sowohl einzeln als auch in Mischungen eingesetzt werden. Bevorzugt werden folgende Substanzen für die Vernetzung der erfindungsgemäßen hydrierten Nitrilkautschuke

eingesetzt: Schwefel, 2-Mercaptobenzthiazol, Tetramethylthiuramdisulfid, Tetramethylthiuram-monosulfid, Zinkdibenzyldithiocarbamat, Dipentamethylenthiuramtetrasulfid, Zinkdialkyl-dithiophosphat, Dimorpholyldisulfid, Tellurdiethyldithiocarbamat, Nickeldibutyldithiocarbamat, Zinkdibutyldithiocarbamat, Zinkdimethyldithiocarbamat und Dithio-bis-caprolactam.

Die Vernetzungsmittel und zuvor genannten Zusätze können jeweils in Mengen von ca. 0,05 bis 10 phr, vorzugsweise 0,1 bis 8 phr, insbesondere 0,5 bis 5 phr (Einzeldosierung, jeweils bezogen auf die Wirksubstanz) eingesetzt werden.

Bei einer Schwefelvernetzung ist es möglich, zusätzlich zu den Vernetzungsmitteln und oben genannten Zusätzen auch weitere anorganische bzw. organische Substanzen mit zu verwenden, wie Zinkoxid, Zinkcarbonat, Bleioxid, Magnesiumoxid, gesättigte oder ungesättigte organische Fettsäuren und deren Zinksalze, Polyalkohole, Aminoalkohole, wie zum Beispiel Triethanolamin sowie Amine wie zum Beispiel Dibutylamin, Dicyclohexylamin, Cyclohexylethylamin und Polyetheramine.

Sofern es sich bei den erfindungsgemäßen hydrierten Nitrilkautschuken um solche handeln, die Wiederholungseinheiten eines oder mehrerer carboxygruppenhaltiger Termonomere beinhalten, so kann ein Vernetzung auch über den Einsatz eines Polyamin-Vernetzers erfolgen, bevorzugt in Gegenwart eines Vernetzungsbeschleunigers. Der Polyamin-Vernetzer ist nicht eingeschränkt, solange es sich (1) um eine Verbindung handelt, die entweder zwei oder mehr Amino-Gruppen enthält (ggf. auch in Salz-Form) oder (2) um eine Spezies, die während der Vernetzungsreaktion in-situ eine Verbindung ausbildet, die zwei oder mehr Amino-Gruppen aufweist. Bevorzugt wird eine aliphatische oder aromatische Kohlenwasserstoffverbindung eingesetzt bei der mindestens zwei Wasserstoffatome entweder durch Aminogruppen ersetzt sind oder aber durch Hydrazid-Strukturen (letzteres eine Struktur "$-C(=O)NHNH_2$")

Beispiele für derartige Polyamin-Vernetzer (ii) sind:

- Aliphatische Polyamine, bevorzugt Hexamethylendiamin, Hexamethylendiamincarbamat, Tetramethylenpentamin, Hexamethylendiaminzimtaldehyd-Addukt oder Hexamethylendiamindibenzoat;
- Aromatische Polyamine, bevorzugt 2,2-Bis(4-(4-aminophenoxy)phenyl) propan, 4,4'-Methylendianilin, m-Phenylendiamin, p-Phenylendiamin oder 4,4'-Methylen-bis(o-chloroanilin);
- Verbindungen mit mindestens zwei Hydrazid-Strukturen, bevorzugt Isophthalsäure dihydrazid, Adipinsäuredihydrazid oder Sebacinsäuredihydrazid.

Besonders bevorzugt sind Hexamethylendiamin und Hexamethylendiamincarbamat.

Die Menge des Polyamin-Vernetzers in der vulkanisierbaren Mischung liegt üblicher Weise im Bereich von 0,2 bis 20 Gew.-Teile, bevorzugt im Bereich von 1 bis 15 Gew.-Teile und besonders bevorzugt im Bereich von 1,5 bis 10 Gew.-Teile bezogen auf 100 Gew.-Teile des hydrierten Nitrilkautschuks.

Als Vernetzungsbeschleuniger kann in Kombination mit dem Polyamin-Vernetzer jeder dem Fachmann bekannte eingesetzt werden, bevorzugt ein basischer Vernetzungsbeschleuniger. Einsetzbar sind z.B. Tetramethylguanidin, Tetraethylguanidin, Diphenylguanidin, Di-o-tolylguanidin (DOTG), o-Tolylbiguanidin und Di-o-tolylguanidin-Salz der Dicathecolborsäure. Einsetzbar sind ferner Aldehydamin-Vernetzungsbeschleuniger wie z.B. n-Butylaldehydanilin. Besonders bevorzugt wird als Vernetzungsbeschleuniger mindestens eine bi- oder polycyclische aminische Base eingesetzt. Diese sind dem Fachmann bekannt. Insbesondere geeignet sind 1,8-diazabicyclo[5.4.0]undec-7-en (DBU), 1,5-diazabicyclo[4.3.0]-5-nonen (DBN), 1,4-diazabicyclo[2.2.2]octan (DABCO), 1,5,7-triazabicyclo[4.4.0]dec-5-en (TBD), 7-methyl-1,5,7-triazabicyclo[4.4.0]dec-5-en (MTBD).

Die Menge des Vernetzungsbeschleunigers liegt in diesem Fall üblicher Weise in einem Bereich von 0,5 bis 10 Gew.-Teile, bevorzugt 1 bis 7,5 Gew.-Teile, insbesondere 2 bis 5 Gew.-Teile, bezogen auf 100 Gew.-Teile des hydrierten Nitrilkautschuks.

Die vulkanisierbare Mischung basierend auf dem erfindungsgemäßen hydrierten Nitrilkautschuk kann prinzipiell auch Anvulkanisationsverzögerer enthalten, die sich bei einer Vulkanisation mit Schwefel oder mit Peroxiden unterscheiden:

Bei einer Vulkanisation mit Schwefel werden eingesetzt: Cyclohexylthiophthalimid (CTP), N,N' Dinitrosopentamethlyentetramin (DNPT), Phthal-säureanhydrid (PTA) und Diphenylnitrosamin. Bevorzugt ist Cyclohexylthiophthalimid (CTP).

Bei einer Vulkanisation mit Peroxiden werden zur Verzögerung der Anvulkanisation Verbindungen wie sie in WO-A-97/01597 und US-A-4,857,571 genannt sind, eingesetzt. Bevorzugt sind sterisch gehinderte p-Dialkylaminophenole, insbesondere Ethanox 703 (Sartomer)

Die weiteren üblichen Kautschukadditiven schließen beispielsweise die typischen und dem Fachmann bekannten Substanzen wie Füllstoffe, Füllstoffaktivatoren, Ozonschutzmittel, Alterungsschutzmittel, Antioxidationsmittel, Verarbeitungshilfsmittel, Extenderöle, Weichmacher, Verstärkungsmaterialien und Formtrennmittel ein.

Als **Füllstoffe** können beispielsweise Ruß, Kieselsäure, Bariumsulfat, Titandioxid, Zinkoxid, Calciumoxid, Calciumcarbonat, Magnesiumoxid, Aluminiumoxid, Eisenoxid, Aluminiumhydroxid, Magnesiumhydroxid, Aluminiumsilikate, Diatomeenerde, Talkum, Kaoline, Bentonite, Kohlenstoff Nanotubes ,Teflon (letzteres bevorzugt in Pulverform), oder Silikate

eingesetzt werden. Die Füllstoffe werden üblicherweise in Mengen im Bereich von 5 bis 350 Gew.Teilen, bevorzugt von 5 bis 300 Gew.Teilen, bezogen auf 100 Gew.Teile des hydrierten Nitrilkautschuks eingesetzt.

Als **Füllstoffaktivatoren** kommen insbesondere organische Silane, wie beispielsweise Vinyltrimethyloxysilan, Vinyldimethoxymethylsilan, Vinyltriethoxysilan, Vinyltris(2-methoxy-ethoxy)silan, N-Cyclohexyl-3-aminopropyltrimethoxysilan, 3-Aminopropyl-trimethoxysilan, Methyltrimethoxysilan, Methyltlriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan in Betracht. Weitere Füllstoffaktivatoren stellen zum Beispiel grenzflächenaktive Substanzen wie Triethanolamin und Ethylenglycole mit Molekulargewichten von 74 bis 10 000 g/mol dar. Die Menge an Füllstoffaktivatoren beträgt üblicherweise 0 bis 10 phr, bezogen auf 100 phr des erfindungsgemäßen hydrierten Nitrilkautschuks.

Als **Alterungsschutzmittel** können den vulkanisierbaren Mischungen beispielsweise die folgenden zugesetzt werden: Polymerisiertes 2,2,4-Trimethyl-1,2-dihydrochinolin (TMQ), 2-Mercaptobenzimidazol (MBI), Methyl-2-Mercaptobenzimidazol (MMBI) oder Zinkmethylmercaptobenzimidazol (ZMMBI).

Alternativ können auch die folgenden, allerdings weniger bevorzugten Alterungsschutzmittel eingesetzt werden: aminische Alterungsschutzmittel z. B. in Form von Mischungen aus Diaryl-p-phenylendiaminen (DTPD), octyliertem Diphenylamin (ODPA), Phenyl-$\alpha$-Naphthylamin (PAN) und/oder Phenyl-$\beta$-Naphthylamin (PBN). Vorzugsweise werden solche auf Phenylendiaminbasis eingesetzt. Beispiele für Phenylendiamine sind N-Isopropyl-N'-phenyl-p-Phenylendiamin, N-1,3-Dimethylbutyl-N'-Phenyl-p-Phenylendiamin (6PPD), N-1,4-Dimethylpentyl-N'-phenyl-p-Phenylendiamin (7PPD) und N,N'-bis-1,4-(1,4-Dimethylpentyl)-p-Phenylendiamin (7PPD).

Die Alterungsschutzmittel werden üblicherweise in Mengen von bis zu 10 Gew.Teilen, bevorzugt bis zu 5 Gew.Teilen, besonders bevorzugt 0,25 bis 3 Gew.Teilen, inbesondere 0,4 bis 1,5 Gew.Teile, bezogen auf 100 Gew.Teile des hydrierten Nitrilkautschuk eingesetzt.

Als **Formtrennmittel** kommen z.B. gesättigte oder teilweise ungesättigte Fett- und Ölsäuren und deren Derivate (Fettsäureester, Fettsäuresalze, Fettalkohole, Fettsäureamide), die vorzugsweise als Mischungsbestandteil Verwendung finden, weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen in Betracht.

Die Formtrennmittel werden als Mischungsbestandteil in Mengen von ca. 0 bis 10 phr, bevorzugt 0,5 bis 5 phr, bezogen auf 100 phr des erfindungsgemäßen hydrierten Nitrilkautschuks eingesetzt.

Auch die Verstärkung mit Festigkeitsträgern (Fasern) aus Glas nach der Lehre von US-A-4,826,721 ist möglich sowie die Verstärkung durch Corde, Gewebe, Fasern aus aliphatischen und aromatischen Polyamiden (Nylon®, Aramid®), Polyestern und Naturfaserprodukten.

Das Mischen der Komponenten zwecks Herstellung der vulkanisierbaren Mischungen erfolgt typischerweise entweder im Innenmischer oder auf einer Walze. Als Innenmischer werden üblicherweise solche mit sogenannter "ineinandergreifender" Rotorgeometrie verwendet. Zum Startzeitpunkt erfolgt die Beschickung des Innenmischers mit dem erfindungsgemäßen hydrierten Nitrilkautschuk. Dieser liegt üblicherweise in Ballenform vor und wird dabei zunächst zerkleinert. Nach einem geeigneten Zeitraum, den der Fachmann problemlos festlegen kann, erfolgt die Zugabe der Additive und typischerweise am Schluss des Vernetzungssystems. Das Mischen erfolgt unter Kontrolle der Temperatur mit der Maßgabe, dass das Mischgut für eine geeignete Zeit bei einer Temperatur im Bereich von 100 bis 150°C verbleibt. Nach einem geeigneten Mischzeitraum wird der Innenmischer gelüftet und der Schacht gereinigt. Nach einem weiteren Zeitraum wird der Innenmischer unter Erhalt der vulkanisierbaren Mischung entleert. Alle vorgenannten Zeiträume bewegen sich üblicherweise im Bereich einiger Minuten und können vom Fachmann problemlos in Abhängigkeit von der herzustellenden Mischung festgelegt werden. Werden Walzen als Mischaggregat verwendet, kann in analoger Weise und Reihenfolge bei der Zudosierung vorgegangen werden.

**Gegenstand der Erfindung** ist ferner ein **Verfahren zur Herstellung von Vulkanisaten** auf Basis der erfindungsgemäßen hydrierten Nitrilkautschuke, dadurch gekennzeichnet, dass die vulkanisierbare Mischung enthaltend den erfindungsgemäßen hydrierten Nitrilkautschuk der Vulkanisation unterworfen wird. Üblicherweise erfolgt die Vulkanisation bei Temperaturen im Bereich von 100°C bis 200°C, bevorzugt bei Temperaturen von 120°C bis 190°C und ganz besonders bevorzugt von 130°C bis 180°C.

Bevorzugt erfolgt die Vulkanisation in einem Formgebungsverfahren.

Die vulkanisierbare Mischung wird dafür mittels Extrudern, Spritzgussanlagen, Walzen oder Kalandern weiterverarbeitet. Die so erhältliche vorgeformte Masse wird anschließend typischerweise in Pressen, Autoklaven, Heißluftanlagen oder in sogenannten automatischen Mattenvulkanisationsanlagen ausvulkanisiert, wobei sich Temperaturen im Bereich von 100°C bis 200°C, bevorzugt 140°C bis 190°C bewährt haben. Die Vulkanisationszeit beträgt typischerweise 1 Minute bis 24 Stunden und bevorzugt 2 Minuten bis 1 Stunde. Abhängig von der Form und der Größe der Vulkanisate kann eine zweite Vulkanisation durch erneutes Erhitzen notwendig sein, um eine vollständige Vulkanisation zu erreichen.

**Gegenstand der Erfindung** sind entsprechend die so erhältlichen **Vulkanisate auf Basis der erfindungsgemäßen hydrierten Nitrilkautschuke.**

Diese Vulkanisate können die Form eines Riemen, von Walzenbelägen, einer Dichtung, einer Kappe, eines Stopfen, eines Schlauchs, von Bodenbelag, von Dichtungsmatten oder -platten, Profilen oder Membranen aufweisen. Speziell kann es sich um eine O-Ringdichtung, eine Flachdichtung, einen Wellendichtring, eine Dichtmanschette, eine Dichtkappe, eine Staubschutzkappe, eine Steckerdichtung, einen Thermoisolierschlauch (mit und ohne PVC-Zusatz), einen Ölkühlerschlauch, einen Luftansaugschlauch, einen Servolenkschlauch, eine Schuhsohle oder - teile davon oder eine Pumpenmembran handeln.

Überraschenderweise stört das im erfindungsgemäßen Verfahren durch die Umsetzung von Phosphanen bzw. Diphosphanen mit den speziellen Schwefelverbindungen gebildete Phosphan- bzw. Diphosphanoxide im hydrierten Nitrilkautschuk weder dessen Vulkanisationsverhalten noch die Vulkanisateigenschaften des hydrierten Nitrilkautschuks. Insofern wird es durch die vorliegende Erfindung möglich, die katalytische Hydrierung von Nitrilkautschuk mit hoher Reaktionsgeschwindigkeit und gleichzeitig geringen Katalysatormengen und bei geringerem Druck mit Hydrierkatalysatoren, die mindestens einen Phosphan oder Diphosphan-Liganden aufweisen, und/oder mit Phosphanen/Diphosphanen als Co-Katalysatoren durchzuführen, und trotzdem hydrierte Nitrilkautschuke und damit Vulkanisate mit dem erwünschten Eigenschaftsprofil zu erhalten.

**Beispiele:**

**Bestimmung des Triphenylphosphan- ("TPP") und Triphenylphosphanoxid- ("TPP=O") Gehalts**

Die Bestimmung des Gehaltes an Triphenylphosphan und Triphenylphosphanoxid im hydrierten Nitrilkautschuk erfolgte mittels Gaschromatographie unter Verwendung eines internen Standards. Für die Bestimmung wurden jeweils 2 bis 3 g ±0,01 g HNBR in ein Probengläschen eingewogen, mit 25 ml Aceton gelöst, mit einer bekannten Menge internen Standards (Docosan von Sigma-Aldrich; CA: 629-97-0) versetzt und nach gründlicher Durchmischung durch Zusatz von 50 ml Methanol ausgefällt. Das Fällserum wurde gaschromatographisch mittels einer Kapillarsäule aufgetrennt (z.B.: HP-5, 0,25 μm Film, 30 m x 0,32 mm ID)

| | |
|---|---|
| Injektionsmenge: | 1 μL |
| Injektionstemperatur: | 300 °C |
| | Ofen-Temperaturprogramm: Einstellung von 150°C; danach Aufheizen innerhalb von 10min auf 300 °C und Halten dieser Temperatur für 5 min |
| Detektortemperatur: | 300 °C |

Zur Detektion wurde ein Flammenionisations-Detektor (FID) eingesetzt.

Unter den angegebenen Bedingungen weisen TPP, TPP=O sowie der interne Standard die folgenden Retentionszeiten auf:

| | |
|---|---|
| TPP: | 8,47 min. |
| Docosan: | 8,65 min. |
| TPP=O: | 11,40 min. |

Zur quantitativen Bestimmung der in HNBR enthaltenen Mengen an TPP und TPP=O wurden Responsefaktoren von TPP/n-Docosan sowie von TPP=O/Docosan verwendet, die vorher in unabhängigen Messungen unter Beachtung des linearen Kalibrierbereichs bestimmt wurden.

Soweit in den folgenden Tabellen bei TPP Gehalten "< 0,01 Gew.%" angegeben ist, bedeutet dies, dass der (etwaige) TPP Gehalt unterhalb der analytischen Nachweisgrenze lag.

**Bestimmung des Gesamthalogengehalts nach DIN 51408, Teil 2**

Der hydrierte Nitrilkautschuk (Menge zwischen 2 mg und 10 mg, je nach Halogengehalt) wird in einen Quarztiegel eingewogen, der über einen Feststoffmodul in ein heißes Quarzrohr geschoben und dort unter einem Sauerstoffstrom (Sauerstoff reinst) verbrannt (Verbrennungsrohrtemperatur etwa 1000°C). Die Verbrennungsgase werden zur Trocknung zuerst über eine Falle, die mit konzentrierter Schwefelsäure (reinst) gefüllt ist, und dann über einen Blasenbrecher und anschließend zum Abfangen von Stickoxiden über eine mit konzentrierter Schwefelsäure gefüllte Waschflasche in eine

Titrationszelle eingeleitet, in der 75 Vol. %ige Essigsäure vorgelegt ist. In der Titrationszelle werden die Halogenid-Ionen mit Ag+ Ionen, die von einer Silberanode erzeugt werden, bis zum ursprünglichen Zellengleichgewicht titriert. Das Ergebnis in Äquivalenten Ag+ wird in Äquivalente Halogenid umgerechnet und dieses Ergebnis im Folgenden als "Gesamthalogengehalt" (bezogen auf Chlorid) angegeben.

**Bestimmung des Hydriergrads:**

Der exakte Hydriergrad wurde nach Beendigung der Hydrierung des Nitrilkautschuks nach den in Kautschuk + Gummi. Kunststoffe, Vol 42 (1989), No. 2, 107-110 **und** Kautschuk + Gummi. Kunststoffe, Vol 42 (1989), No. 3, 194-197 beschriebenen Methoden bestimmt.

**I Herstellung der Nitrilkautschuke A und B**

Im ersten Schritt wurden zwei **Nitrilkautschuklatices A** und **B** auf der Basis der in den **Tabellen Ia und Ib** angegebenen Polymerisationsrezepturen hergestellt.

**Tabelle Ia: Herstellung des Nitrilkautschuklatex A**

| **Latex A** | **Gew.-Teile** |
|---|---|
| Butadien | 65,5 |
| Acrylnitril | 33,5/1* |
| Gesamt-Wassermenge | 200 |
| Erkantol® BXG[1)] | 3,67 |
| Baykanol® PQ[2)] | 1,10 |
| K-Salz der Kokosfettsäure | 0,73 |
| KOH | 0,05 |
| t-DDM[6)] | 0,25 / 0,24* |
| Kaliumperoxodisulfat[3)] | 0,39/0,20* |
| Tris-(a-hydroxy-ethyl)-amin [4)] | 0,57 |
| **Polymerisationstemperatur [°C]** | 18 |
| **Polymerisationsumsatz [%]** | 79 |
| **Polymerisationszeit [h]** | 10 |
| **Abstoppmittel:** | |
| Na-Dithionit [5)] | 1,0 |
| Diethylhydroxylamin | 0,5 |
| Kaliumhydroxid | 1,28 |

*Zugabe bei 15% Polymerisationsumsatz
1) Natriumsalz einer Mischung von mono- und disulfonierten Naphthalinsulfonsäuren mit Isobutylenoligomersubstituenten (Erkantol® BXG)
2) Natriumsalz von Methylen-bis-Naphthalinssulfonat (Baykanol® PQ, Lanxess Deutschland GmbH)
3) Aldrich-Bestellnummer : 21,622-4
4) Aldrich-Bestellnummer : T5,830-0
5) Aldrich-Bestellnummer : 15,795-3
6) t-DDM (Tertiäres Dodecylmercaptan): $C_{12}$-Mercaptangemisch der Lanxess Deutschland GmbH

**Tabelle Ib: Herstellung des Nitrilkautschuklatex B**

| **NBR-Latex B** | | **B** |
|---|---|---|
| Butadien | Gew.-Teile | 66 |

(fortgesetzt)

| **NBR-Latex B** | | **B** |
|---|---|---|
| Acrylnitril | Gew.-Teile | 30/4* |
| Gesamt-Wassermenge | Gew.-Teile | 220 |
| Teilhydrierte Fettsäure 1) | Gew.-Teile | 2,0 |
| Kaliumhydroxid | Gew.-Teile | 0,394 |
| Kaliumchlorid | Gew.-Teile | 0,139 |
| Trinatriumphosphat 2) | Gew.-Teile | 0,0088/0,0077* |
| Ethylendiamintetraessigsäure 3) | Gew.-Teile | 0,0058/0,0056* |
| Eisen-II-sulfat-Heptahydrat | Gew.-Teile | 0,0024/0,0024* |
| N atriumformaldehydsulfoxylat - 2- hydrat 4) | Gew.-Teile | 0,0069/0,0067* |
| p-Menthanhydroperoxid 5) | Gew.-Teile | 0,035 |
| tert. Dodecylmercaptan 6) | Gew.-Teile | 0,348/0,183* |
| **Polymerisationstemperatur** | °C | 13 |
| **Polymerisationsumsatz** | % | 77 |
| **Polymerisationszeit** | h | 8 |
| **Abstoppmittel:** | | |
| Diethylhydroxylamin | Gew.-Teile | 0,125 |

*Zugabe bei 36% Umsatz
1) Edenor® HTiCT N (Oleo Chemicals)
2) Trinatriumphosphat* 12 $H_2O$ (Acros, Artikelnummer 206520010) - Berechnung ohne Kristallwasser
3) Ethylendiamintetraessigsäure (Fluka, Artikelnummer 03620)
4) Natriumformaldehydsulfoxylat-2-hydrat (Merck-Schuchardt, Artikelnummer 8.06455) Berechnung ohne Kristallwasser
5) Trigonox® NT 50 (Akzo-Degussa) berechnet auf 100%
6) Isomerengemisch von tert. Dodecylmercaptanen (Lanxess Deutschland GmbH)

Nach der Entfernung der nicht umgesetzten Monomere mittels Wasserdampfdestillation hatten die **Nitrilkautschuklatices A und B** die in **Tabelle Ic** aufgeführten Eigenschaften

**Tabelle Ic: Eigenschaften der Nitrilkautschuklatices A und B**

| **NBR-Latex** | **A** | **B** |
|---|---|---|
| Feststoffgehalt | 23,9 | 27,5 |
| pH-Wert | 11,7 | 11,5 |

## II Stabilisierung, Koagulation und Aufarbeitung der Nitrilkautschuklatices

Den **Nitrilkautschuklatices A und B** wurden vor (Latex A) bzw. während (Latex B) der Koagulation 0,35 Gew.% Vulkanox® BKF (2,2-Methylen-bis-(4-methyl-6-tert.butylphenol) der Lanxess Deutschland GmbH) in der Form einer wässrigen Dispersion zugesetzt.

Die wässrige **Vulkanox® BKF-Dispersion** basierte auf folgender Rezeptur, wobei die Herstellung bei 95 bis 98 °C durch Mischung mit Hilfe eines Ultraturrax erfolgte:

| | |
|---|---|
| 3,6 kg | Entionisiertes Wasser (DW-Wasser) |
| 0,4 kg | Alkylphenolpolyglykolether (Emulgator NP® 10 der Lanxess Deutschland GmbH) |
| 4 kg | Vulkanox® BKF der Lanxess Deutschland GmbH |

Der Zusatz der Vulkanox® BKF-Dispersion erfolgte bei **Latex A** vor der Koagulation. Die Koagulation des **Nitrilkautschuklatex A** erfolgte mit Magnesiumchlorid/ Gelatine gemäß Beispiel 10 aus EP-A-2 238 177. Die Wäsche und Trocknung der Kautschukkrümel erfolgte ebenfalls wie in EP-A-2 238 177 beschrieben.

Die Koagulation des **Nitrilkautschuklatex B** erfolgte gemäß Beispiel 2 aus EP-A-1 369 436**.** Hierfür wurde der Latex vor der Koagulation mit entionisiertem Wasser auf eine Feststoffkonzentration von 16,5 Gew.% verdünnt. Der Zusatz der wässrigen Dispersion von Vulkanox® BKF erfolgte in der Fälldüse. Die Wäsche und Trocknung erfolgte wie Beispiel 2 der EP 1369436 beschrieben.

Die Eigenschaften der auf diese Weise erhaltenen **Nitrilkautschuke A und B** sind in **Tabelle II** zusammengefasst.

**Tabelle II: Eigenschaften der Nitrilkautschuke A und B**

| NBR-Typ | | A | B |
|---|---|---|---|
| Acrylnitrilgehalt | Gew.% | 34,4 | 34,8 |
| ML 1+4 (100°C) | ME | 36 | 34 |
| Natrium | ppm | 136 | 162 |
| Kalium | ppm | 22 | 68 |
| Calcium | ppm | 94 | 2 |
| Magnesium | ppm | 163 | <1 |

## III Metathese

Vor der Durchführung der Hydrierung wurde ausschließlich der in **Versuchsserie 4** eingesetzte **Nitrilkautschuk B** einer Metathese unterzogen. Die Metathese wurde in Analogie zu den Beispielen der WO-A-02/100905 unter Verwendung von 0,05 phr Grubbs-II-Katalysator (Materia/Pasadena) und 2,0 phr 1-Hexen in chlorbenzolischer Lösung bei einer Feststoffkonzentration von 12 Gew.% bei 80°C durchgeführt. Durch den Metatheseabbau wurde die Mooneyviskosität (ML 1+4 bei 100°C) von 34 ME auf 19 ME reduziert.

## IV Hydrierungen

### IV.1 Überblick über Versuchsreihen 1 bis 6

Durchgeführt wurden 6 Versuchsreihen, einen Überblick darüber gibt **Tabelle 1.**

**Tabelle 1: Übersicht über Versuchsreihen 1 bis 6**

| Versuchsserie | NBR-Kautschuke | | | | HNBR-Herstellung und Eigenschaften | | | | |
|---|---|---|---|---|---|---|---|---|---|
| | basierend auf Latex-Typ | ACN-Gehalt | ML 1+4 (100°C) | | TPP | Hydriergrad | Edelmetallabtrennung | ML 1+4 bei 100°C | Art der Monosulfidzugabe |
| | | | Vor Metathese | Nach Metathese | | | | | |
| | | Gew.% | ME | ME | Gew.% | % | | ME | |
| 1a, 1b | A | 34,4 | 36 | - | 0-2,0 | 99,5±0,2 | - | 65-74 | - |
| 2 | A | 34,4 | 36 | - | 1 | 97 | - | 70 | MCB* |
| 3 | A | 34,4 | 36 | - | 1 | 97 | + | 68 | MCB* |
| 4 | B | 34,8 | 34 | 19 | 2 | 94,5 | + | 39 | Walze |
| 5a, 5b | B | 34,8 | 34 | - | 3 | 95,0 | + | 65 | Walze |
| 6a, 6b | A | 34,4 | 36 | - | 0 | 99,5 | - | | - |

* MCB = Monochlorbenzol

In den **Versuchsserien 1a, 1b, 6a und 6b** wurden hydrierte Nitrilkautschuke eingesetzt, die durch Hydrierung des **Nitrilkautschuks A** in 16,67%iger chlorbenzolischer Lösung bei einem Wasserstoffdruck von 190 bar und einer Temperatur von 120°C bis 130°C erhalten wurden. Bei den Hydrierungen wurden jeweils 5 kg des obengenannten Nitrilkautschuks in einem 40 1-Autoklaven in 24,5 kg Chlorbenzol gelöst. Vor der Hydrierung wurde die Polymerlösung jeweils unter Rühren (170 U/min) sukzessive 1mal mit Stickstoff (20 bar) und 2mal mit Wasserstoff (20 bar) beaufschlagt und anschließend entspannt. Nach Beaufschlagung mit 190 bar Wasserstoff wurden die in den Tabellen angegebenen Mengen an Triphenylphosphan (Merck Schuchardt OHG; Bestell-Nr. 8.08270) als Lösung in 250 g Chlorbenzol zudosiert. Die Hydrierung wurde gestartet, indem als Katalysator 0,075 Gew.% (bezogen auf Nitrilkautschuk) Tris-(triphenylphosphan)rhodium(I)-chlorid (Evonik-Degussa) als Lösung in 250 g Chlorbenzol zugegeben wurde. Der Verlauf der Hydrierung wurde online durch Bestimmung der Wasserstoffaufnahme verfolgt. Die Hydrierungen wurden bei Hydriergraden von 99,5 + 0, % durch Abkühlen der Reaktionsmischung abgebrochen. Anschließend wurden die Ansätze entspannt. Restmengen an Wasserstoff wurden durch Durchleitung von Stickstoff entfernt.

Für die **Versuchsserien 2 und 3** wurden hydrierte Nitrilkautschuke eingesetzt, die auf der Basis von **Nitrilkautschuk A** hergestellt wurden. Die Hydrierungen wurden unter folgenden Rahmenbedingungen durchgeführt:

| | |
|---|---|
| NBR-Konzentration in Chlorbenzol: | 12 Gew.% |
| Wasserstoffdruck: | 80 bar |
| Rührgeschwindigkeit: | 600 $min^{-1}$ |
| Reaktionstemperatur: | 138°C |
| Tris(triphenylphosphan)rhodium(I)chlorid: | 0.08 phr |
| Triphenylphosphan: | 1 Gew.% |
| Abbruch der Hydrierung bei: | Hydriergrad von 97% |

Für die Herstellung des in den **Versuchsserien 4 sowie 5a und 5b** eingesetzten hydrierten Nitrilkautschuks wurde der **Nitrilkautschuk B** unter folgenden Rahmenbedingungen hydriert:

| | |
|---|---|
| NBR-Konzentration in Chlorbenzol: | 12 Gew.% |
| Wasserstoffdruck: | 80 bar |
| Rührgeschwindigkeit: | 600 $min^{-1}$ |
| Reaktionstemperatur: | 138°C |
| Tris(triphenylphosphan)rhodium(I)chlorid: | 0.065 phr |
| Triphenylphosphan: | 2 Gew.% bei Versuchsserie 4) |
| Triphenylphosphan: | 3 Gew.% bei Versuchsserien 5a) und 5b) |
| Abbruch der Hydrierung bei: | Hydriergrad=94,5% (Versuchsserie 4) bzw. Hydriergrad=95% (Versuchsserien 5a und 5b) |

## V Katalysatorrückgewinnung

In den **Versuchsserien 1a und 1b, 2 sowie 6a und 6b** erfolgte keine Entfernung des bei der Hydrierung eingesetzten Rhodium-Katalysators. In den **Versuchsserien 3, 4 sowie 5a und 5b** wurde das Edelmetall nach der Hydrierung wie in Beispiel 5 der US-A-4,985,540 beschrieben, abgetrennt, wobei das thioharnstoffhaltige Ionenaustauscherharz aus diesem Beispiel 5 eingesetzt wurde. Für die Rhodiumabtrennung wurde die Polymerlösung auf eine Feststoffkonzentration von 5 Gew.% verdünnt.

## VI Umsetzung mit einer Schwefelverbindung

In den erfindungsgemäßen Beispielen wurden die in **Tabelle VI** aufgeführten Schwefelverbindungen eingesetzt.

**Tabelle VI: Eingesetzte Schwefelverbindungen**

| Schwefelverbindung | Hersteller | Molmasse [g/mol] |
|---|---|---|
| tert-Dodecylmercaptan (nachfolgend abgekürzt als "TDDM") | Sulfole® 120 Mercaptan (Chevron Phillips Chemical Co.) | 202 |

(fortgesetzt)

| Schwefelverbindung | Hersteller | Molmasse [g/mol] |
|---|---|---|
| 2-Merkaptobenzthiazol (nachfolgend abgekürzt als "MBT") | Vulkacit® Merkapto (Lanxess Deutschland GmbH) | 167 |
| N-Cyclohexyl-2-benzthiazylsulfenamid (nachfolgend abgekürzt als "CBS") | Vulkacit® CZ (Lanxess Deutschland GmbH) | 264,4 |
| N-tert.Butyl-2-benzthiazylsulfenamid (nachfolgend abgekürzt als "TBBS") | Vulkacit® NZ (Lanxess Deutschland GmbH) | 238,4 |
| N-N-Dicyclohexylbenzthiazylsulfenamid (nachfolgend abgekürzt als "DCBS") | Vulkacit® DZ (Lanxess Deutschland GmbH) | 346 |
| 2-Morpholinobenzthiazol (nachfolgend abgekürzt als "MBS") | Vulkacit® MOZ (Lanxess Deutschland GmbH) | 252 |

## Zugabe der Schwefelverbindung

In den **Versuchsserien 2 und 3** erfolgte der Zusatz der Schwefelverbindung nach der Hydrierung bzw. nach Hydrierung und Katalysatorrückgewinnung zur chlorbenzolischen Lösung vor der Isolierung des hydrierten Nitrilkautschuks durch Wasserdampfdestillation, wobei die Schwefelverbindung als Lösung in Chlorbenzol (MCB) zu der chlorbenzolischen Lösung des hydrierten Nitrilkautschuks gegeben und mit destilliertem Wasser im Strippgefäß vorgelegt wurden.

In den **Versuchsserien 4, 5a und 5b** erfolgte die Zugabe der Schwefelverbindung in festem Zustand auf einem Walzenstuhl (detaillierte Beschreibung in Versuchsserie 4).

## VII Isolierung des hydrierten Nitrilkautschuks aus chlorbenzolischer Lösung

Die Wasserdampfdestillation erfolgte batchweise. Das Gemisch wurde ohne Einspeisung von Wasserdampf unter Rühren auf 90°C erwärmt. Bei Erreichen dieser Temperatur wurde mit der Einleitung von Wasserdampf über eine am Boden des Strippgefäßes angebrachte Ringdüse (bei Normaldruck) begonnen. Hierbei destillierten die aus Chlorbenzol und Wasserdampf bestehenden Brüden bei einer Kopftemperatur von 102°C ab. Die Brüden wurden kondensiert und in eine Chlorbenzolphase und eine wässrige Phase getrennt. Sobald sich kein Chlorbenzol mehr aus den Brüden abschied (nach ca. 3 h), wurde die Wasserdampfdestillation abgebrochen. Der in der Form gröberer Klumpen vorliegende hydrierte Nitrilkautschuk wurde isoliert, kleingeschnitten und im Vakuumtrockenschrank bei 70 °C unter leichtem Luftstrom bis zur Gewichtskonstanz getrocknet.

## VIII Herstellung von Kautschukmischungen und Vulkanisaten

Zur Beurteilung der technologischen Eigenschaften der in den Versuchsserien erhaltenen hydrierten Nitrilkautschuke wurden Kautschukmischungen und Vulkanisate hergestellt. Die Kautschukmischungen wiesen die in **Tabelle VIII** angegebene Zusammensetzung auf.

**Tabelle VIII: Zusammensetzung der Kautschukmischungen**

| Mischungsbestandteil | Handelsprodukt (Hersteller) | Menge [Gew.-Teile] |
|---|---|---|
| Hydrierter Nitrilkautschuk | | 100 |
| Zinkoxid | Zinkoxid aktiv (Lanxess Deutschland GmbH) | 2,0 |
| Magnesiumoxid | Maglite® DE (Merck & Co. Inc. USA) | 2,0 |
| Octyliertes Diphenylamin | Rhenofit® DDA-70 (RheinChemie Deutschland GmbH) | 1,43 |

(fortgesetzt)

| Mischungsbestandteil | Handelsprodukt (Hersteller) | Menge [Gew.-Teile] |
|---|---|---|
| Zinksalz des 2-Mercaptobenzimidazols | Vulkanox® ZMB-2 (Lanxess Deutschland GmbH) | 0,4 |
| Ruß | Corax® N 550 (Evonik Industries AG) | 45 |
| Triallylisocyanurat | Kettlitz® TAIC 50 (Kettlitz Chemie GmbH) | 3,0 |
| Bis(tert-butylperoxyisopropyl)benzol (40%ig) | Perkadox® 14-40 K-PD (Akzo-Nobel Chemicals GmbH) | 7 |

Die Mischungsherstellung erfolgte in einem Laborkneter mit 1,5 1 Innenvolumen (GK 1,5 der Firma Werner & Pfleiderer, Stuttgart mit ineinandergreifenden Knetelementen (PS 5A -Schaufelgeometrie), der auf 50°C vorgewärmt war. Die Zugabe der Mischungsbestandteile erfolgte in der in **Tabelle 5** angegebenen Reihenfolge.

## Eigenschaften der unvulkanisierten Kautschukmischungen

Zur Beurteilung des Verarbeitungsverhaltens der unvulkanisierten Kautschukmischungen wurden Mooney-Viskositäten bei 100°C (ML1+4 @ 100°C) sowie bei 120°C (ML1+4 @ 120°C) nach **ASTM D1646** bestimmt.

## Vulkanisationsverhalten der Kautschukmischungen

Das **Vulkanisationsverhalten** der Mischungen wurde nach **ASTM D 5289-95** bei **180°C** bestimmt, wobei sowohl ein Bayer-Frank-Vulkameter (Fa. Agfa) als auch ein Moving Die Rheometer (MDR 2000 der Firma Alpha Technology) eingesetzt wurden (siehe Versuchsserien). Charakteristische Vulkameterwerte wie $F_{min}$., $F_{max}$, $F_{max}$.-$F_{min}$. werden beim Bayer-Frank-Vulkameter in der Dimension cN und beim Moving Die Rheometers in der Dimension dNm erhalten. Charakteristische Zeiten wie $t_{10}$, $t_{50}$, $t_{90}$ und $t_{95}$ werden unabhängig von der Messmethode in min bzw. sec. bestimmt.

Nach **DIN 53 529, Teil 3** bedeuten folgende Kennwerte:

| | |
|---|---|
| $F_{min..}$: | Vulkameterwert im Minimum der Vernetzungsisotherme |
| $F_{max.}$: | Vulkameterwert im Maximum der Vernetzungsisotherme |
| $F_{max}$ -$F_{min.}$: | Differenz der Vulkameterwerte zwischen Maximum und Minimum |
| $t_{10}$: | Zeitpunkt, bei dem 10% des Endumsatzes erreicht sind |
| $t_{50}$: | Zeitpunkt, bei dem 50% des Endumsatzes erreicht sind |
| $t_{90}$: | Zeitpunkt, bei dem 90% des Endumsatzes erreicht sind |
| $t_{95}$: | Zeitpunkt, bei dem 95% des Endumsatzes erreicht sind |
| $t_{90}$-$t_{10}$: | gibt einen Anhaltspunkt für die Vulkanisationsgeschwindigkeit |

Für ein gutes Verarbeitungsverhalten sind lange $t_{10}$-Zeiten (hohe Verarbeitungssicherheit) erforderlich. Hohe Vulkanisationsgeschwindigkeiten sind an niedrigen Differenzen von $t_{90}$-$t_{10}$ erkennbar.

Die für die Vulkanisatcharakterisierung eingesetzten **Prüfkörper** wurden in einer Presse bei 180°C bei einem Hydraulikdruck von 120 bar hergestellt (Zeiten gemäß nachfolgenden Tabellen). In den **Versuchsserien 1 und 6** wurden die Prüfkörper vor der Charakterisierung einer Wärmelagerung (6 h bei 150°C) unterzogen.

An den **Vulkanisaten** wurden nach den nachfolgend genannten Normen folgende **Eigenschaften** bestimmt:

| | |
|---|---|
| DIN 53505: | Shore A-Härte bei 23°C und 70°C |
| DIN 53512: | Rückprallelastizität bei 23°C und 70°C |
| DIN 53504: | Spannungswerte bei 10%, 25%, 50%, 100%, 200% [1] und 300 % Dehnung ($\sigma_{50}$, $\sigma_{100}$, $\sigma_{200}$ und $\sigma_{300}$) , Zugfestigkeit sowie Bruchdehnung ($\varepsilon_b$) |

Der Druckverformungsrest (bzw. auf Englisch "Compression Set (CS)") wurde nach DIN 53517 bestimmt,

indem ein zylindrischer Probenkörper um 25% komprimiert und im komprimierten Zustand bei den in den Tabellen angegebenen Zeiten und Temperaturen (z. B. 70 h/23°C bzw. 70h/150°C) gelagert wurde. Nach Relaxation der Proben wurde die bleibende Verformung (Druckverformungsrest bzw. Compression Set) der Probe bestimmt. Für die Bestimmung wurden zylindrische Probenkörper mit folgenden Abmessungen eingesetzt:

| | |
|---|---|
| Probekörper 1: | Höhe: 6,3; Durchmesser: 13 mm |
| Probekörper 2: | Höhe: 12,7; Durchmesser: 28,7 mm. |

Unabhängig von der Probengeometrie ist eine bleibende Verformung (bzw. Compression Set) von 0% sehr gut und von 100% sehr schlecht.

Zur Demonstration der erfindungsgemäßen Effekte wurden die folgenden Versuchsserien durchgeführt:

**Versuchsserien 1a und 1b (nicht erfindungsgemäß):**

Gezeigt wird, dass durch Erhöhung der eingesetzten TPP Menge (Cokatalysator) die Hydrierzeiten reduziert werden (**Versuchsserie 1a**). Mit steigender TPP Menge wird das Modulniveau und der Compression Set der auf der Basis der hydrierten Nitrilkautschuke hergestellten Vulkanisate schlechter (**Versuchsserie 1b**). Die mit dieser Versuchsserie erhaltenen nicht erfindungsgemäßen hydrierten Nitrilkautschuke hatten TPP Gehalte bis 1,72 Gew.% und TPP=O Gehalte bis 0,13 Gew.%.

**Versuchsserie 2 (erfindungsgemäß):**

In **Versuchsserie 2** wurden verschiedene Monosulfide zu aliquoten Teilen der chlorbenzolischen Lösung des hydrierten Nitrilkautschuks (1 Gew.% Triphenylphosphan = 3,81 mmol bezogen auf 100g NBR) vor der Abtrennung des Chlorbenzols mittels Wasserdampfdestillation zugesetzt. Der rhodiumhaltige Hydrierkatalysator wurde dabei in der Lösung belassen.

In Versuchsserie 2 wird gezeigt, dass durch die Zugabe der jeweiligen Schwefelverbindung zur chlorbenzolischen Lösung des hydrierten Nitrilkautschuks vor der Isolierung des hydrierten Nitrilkautschuks mittels Wasserdampfdestillation eine Reduktion des TPP Gehalts erreicht wird. Gleichzeitig mit der Reduktion des TPP Gehalts erfolgt eine Erhöhung des TPP=O Gehalts. Die erfindungsgemäßen hydrierten Nitrilkautschuke wiesen TPP Gehalte bis 0,57 Gew.%, TPP=O Gehalte von 0,41 bis 1,07 Gew.% und Gesamthalogengehalte von 570 bis 820 ppm auf.

**Versuchsserie 3 (erfindungsgemäß):**

In **Versuchsserie 3** wurden wie in Versuchsserie 2 verschiedene Schwefelverbindungen zu aliquoten Teilen der chlorbenzolischen Lösung des hydriertem Nitrilkautschuk (1 Gew.% Triphenylphosphan = 3,81 mmol bezogen auf 100g NBR) vor der Abtrennung des Chlorbenzols mittels Wasserdampfdestillation zugesetzt. In dieser Versuchsserie erfolgte im Gegensatz zu **Versuchsserie 2** vor der Zugabe der Schwefelverbindung eine Abtrennung des rhodiumhaltigen Hydrierkatalysators.

In Versuchsserie 3 wird gezeigt, dass durch den Zusatz der jeweiligen speziellen Schwefelverbindung zur chlorbenzolischen Lösung des hydrierten Nitrilkautschuks vor der Isolierung des hydrierten Nitrilkautschuks mittels Wasserdampfdestillation eine Reduktion des TPP Gehalts erreicht wird. Gleichzeitig mit der Reduktion des TPP Gehalts erfolgt eine Erhöhung des TPP=O Gehalts. Die erfindungsgemäßen hydrierten Nitrilkautschuke wiesen TPP Gehalte bis 0,74 Gew.%, TPP=O Gehalte von 0,37 bis 0,99 Gew.% und Gesamthalogengehalte von 570 bis 710 ppm auf.

Ein Vergleich der Versuchsserien 2 und 3 zeigt, dass die erzielten Ergebnisse nicht davon abhängen, ob der bei der Hydrierung verwendete Katalysator in der Lösung belassen oder entfernt wurde.

**Versuchsserie 4 (erfindungsgemäß):**

In **Versuchsserie 4** erfolgte vor der Hydrierung ein Metatheseabbau des Nitrilkautschuks. Außerdem wurde der Hydrierkatalysator vor der Isolierung des hydrierten Nitrilkautschuks aus der chlorbenzolischen Lösung abgetrennt. Die Umsetzung von TPP mit der jeweiligen Schwefelverbindung erfolgte nach der Isolierung des hydrierten Nitrilkautschuks aus der chlorbenzolischen Lösung auf einer Walze. Die Zugabe der jeweiligen Schwefelverbindung zum hydrierten Nitrilkautschuk, der 2,0 Gew.-Teile TPP (7,63 mmol/100g HNBR) enthielt, erfolgte in fester Form. Hierfür wurde ein thermostatisierbarer Walzenstuhl mit zwei gegenläufigen Walzen (Firma Schwabenthan; Typ Polymix 110; Walzendurchmesser 110 mm) eingesetzt. Für die Einarbeitung der Schwefelverbindung wurde die Walze aufgeheizt und bei 80-85°C konstant gehalten. Bei Erreichen der Temperatur wurden jeweils 200 g hydrierter Nitrilkautschuk auf die Walze

gegeben und bei einem Walzenspalt von 3 mm bis zur Bildung eines geschlossenen Walzfells ausgewalzt. Danach wurde die Schwefelverbindung in fester Form zugegeben und 8 min bei einem Friktionsverhältnis von 25 bis 30 $min^{-1}$ unter Einschneiden und Stürzen des Fells eingearbeitet. Danach wurde das Fell auf Raumtemperatur abgekühlt und die in **Versuchsserie 4** aufgeführten analytischen Untersuchungen durchgeführt.

Durch den Zusatz der jeweiligen Schwefelverbindung wurde eine Reduktion des Gehaltes an TPP unter Bildung von TPP=O erreicht. Die erfindungsgemäßen hydrierten Nitrilkautschuke wiesen TPP Gehalte im Bereich 0,05 bis 0,55 Gew.%, TPP=O Gehalte von 1,57 bis 2,17 Gew.% und Gesamthalogengehalte von 44 bis 48 ppm auf.

**Versuchsserie 5a und 5b (erfindungsgemäß):**

In **Versuchsserie 5** wurde teilhydrierter Nitrilkautschuk, der 3 phr Triphenylphosphan enthielt (11,44 mmol/100 g HNBR), eingesetzt. Die Einarbeitung der Schwefelverbindung erfolgte bei den Versuchen 5.2*-5.7* wie in **Versuchsserie 4** beschrieben auf einem Walzenstuhl. In Versuch 5.8* erfolgte der Zusatz der Schwefelverbindung vor der Durchführung der Wasserdampfdestillation.

Gezeigt wurde, dass durch Reduktion der TPP Gehalte eine Verbesserung des Modulniveaus und des Compression Sets von Vulkanisaten des hydrierten Nitrilkautschuks erreicht wird. Die erzielten Verbesserungen sind unabhängig davon, ob die Schwefelverbindung auf der Walze **(Versuche 5.2*-5.6*)** oder vor der Wasserdampfdestillation **(Versuch 5.8*)** zugegeben wird. Die erfindungsgemäßen hydrierten Nitrilkautschuke wiesen Gehalte an TPP bis 0,76 Gew.%, an TPP=O von 2,35 bis 3,2 Gew. % und an Gesamthalogen von 51 bis 110 ppm auf.

**Versuchsserie 6a und 6b (erfindungsgemäß):**

In den **Versuchsserien 6a und 6b** wurde der Einfluss von TPP=O auf die Eigenschaften der Kautschukmischungen und der Vulkanisate untersucht. Hierfür wurden dem hydrierten Nitrilkautschuk aus **Versuchsserie 1.1=6.1** unterschiedliche Mengen an TPP=O (**siehe Versuchsserie 6a**) auf einem temperierbaren Walzenstuhl mit zwei gegenläufigen Walzen (Firma Schwabenthan; Typ Polymix 110; Walzendurchmesser 110 mm) zugesetzt. Jede Versuchseinstellung wurde 2mal mit jeweils 450 g Kautschuk durchgeführt. Die Einarbeitung von TPP=O erfolgte bei einem Walzenspalt von 3 mm (Umdrehungsgeschwindigkeiten 25 und 30 $min^{-1}$) bei einer Walzentemperatur von 20°C, und einer Temperatur des Walzfells von 40°C unter mehrfachem Stürzen und Einschneiden des Walzfells in einem Zeitraum von 5 min. Nach der Einarbeitung des TPP=O wurden die zwei Walzfelle mit jeweils identischer Versuchseinstellung auf der Walze gemischt, so dass von jeder Versuchseinstellung eine Gesamtmenge von 900 g erhalten wurde. An diesen Proben wurden die Gehalte an TPP und TPP=O (**Versuchsserie 6a**) sowie die in **Versuchsserie 6b** zusammengefassten Eigenschaften der Kautschukmischungen und Vulkanisate bestimmt.

Gezeigt wurde, dass das Modulniveau und der Compression Set von HNBR-Vulkanisaten durch TPP=O Zusätze verbessert werden. Die TPP=O Gehalte der erfindungsgemäßen hydrierten Nitrilkautschuke lagen im Bereich bis 2,01 Gew.%.

Alle Ergebnisse der oben beschriebenen Versuchsserien sind in den nachfolgenden Tabellen zusammengefasst. Die erfindungsgemäße Beispiele sind dabei jeweils mit "*" gekennzeichnet.

**Tabelle 1a: Versuchsserie Ia (nicht erfindungsgemäß)**

| Variation der TPP-Menge bei der Hydrierung und Gehalte an TPP und TPP=O im hydrierten Nitrilkautschuk | | | | | | |
|---|---|---|---|---|---|---|
| **Versuchs-Nr.** | | **1.1** | **1.2** | **1.3** | **1.4** | **1.5** |
| TPP-Zusatz bei Hydrierung | [Gew.%] | 0 | 0,3 | 0,50 | 1,0 | 2,0 |
| Hydrierzeit | [h] | 5,0 | 4,5 | 4,3 | 4,0 | 3,8 |
| Hydriergrad | [%] | 99,3 | 99,3 | 99,5 | 99,6 | 99,7 |
| TPP-Gehalt im hydrierten NBR nach Aufarbeitung | [Gew.%] | <0,01 | 0,25 | 0,41 | 0,83 | 1,72 |
| TPP=O-Gehalt im hydrierten NBR nach Aufarbeitung | [Gew.%] | <0,01 | 0,04 | 0,08 | 0,11 | 0,13 |
| ML1+4 @ 100°C | [ME] | 74 | 72 | 70 | 66 | 65 |

Mit den in **Versuchsserie 1a** erhaltenen hydrierten Nitrilkautschuke wurden Kautschukmischungen mit der in **Tabelle VIII** angegebenen Zusammensetzung hergestellt und vulkanisiert. An den Vulkanisaten wurden folgende Werte ermittelt (**Versuchsserie 1b**).

**Tabelle 1b: Versuchsserie 1b (nicht erfindungsgemäß)**

| Einfluss von TPP auf die Mischungs- und Vulkanisateigenschaften peroxidisch vulkanisierter hydrierter Nitrilkautschuke aus Versuchsserie 1a | | | | | | |
|---|---|---|---|---|---|---|
| **Versuchs-Nr.** | | **1.1** | **1.2** | **1.3** | **1.4** | **1.5** |
| **Mischungs-Eigenschaften** | | | | | | |
| ML1+4 @ 100°C | ME | 125 | 125 | 124 | 124 | 119 |
| ML1+4 @ 120°C | ME | 84 | 86 | 84 | 84 | 82 |
| **Vulkameter bei 180°C (Bayer-Frank-Vulkameter)** | | | | | | |
| $t_{10}$ | min | 1,4 | 1,5 | 1,5 | 1,4 | 1,4 |
| $t_{90}$ | min | 7,1 | 7,2 | 7,3 | 7,2 | 7,5 |
| $t_{90}-t_{10}$ | min | 5,7 | 5,7 | 5,8 | 5,8 | 6,1 |
| $F_{min}$ | cN | 236 | 253 | 244 | 253 | 236 |
| $F_{max}$ | cN | 5107 | 5065 | 4930 | 4618 | 3792 |
| $F_{max}-F_{min}$ | cN | 4871 | 4812 | 4686 | 4365 | 3556 |
| **Vulkanisateigenschaften (Vulkanisation 15 min bei 180°C; Temperung 6 h bei 150°C)** | | | | | | |
| Shore A Härte (23°C) | | 73 | 73 | 73 | 72 | 71 |
| Shore A Härte (70°C) | | 71 | 72 | 71 | 70 | 68 |
| Rückprallelastizität bei 23°C | % | 35 | 34 | 35 | 35 | 35 |
| Rückprallelastizität bei 70°C | % | 56 | 56 | 56 | 56 | 52 |
| $\sigma_{50}$ | MPa | 2,5 | 2,4 | 2,3 | 2,3 | 2,1 |
| $\sigma_{100}$ | MPa | 6,1 | 6,3 | 5,7 | 5,7 | 4,3 |
| $\sigma_{200}$ | MPa | 18,7 | 17,8 | 17,4 | 16,1 | 12,7 |
| $\sigma_{300}$ | MPa | 26,9 | 25,7 | 25,7 | 23,8 | 20,2 |
| Zugfestigkeit | MPa | 27,3 | 26,5 | 26,4 | 26,2 | 25,7 |
| $\varepsilon_b$ | % | 310 | 310 | 315 | 360 | 425 |
| CS (70 h/23°C) Probekörper 1 | % | 30,3 | 30,5 | 32,2 | 32,8 | 35,7 |
| CS (70 h/150°C) Probekörper 2 | % | 19,3 | 20,3 | 20,4 | 22,6 | 24,8 |

**Tabelle 2: Versuchsserie 2 (erfindungsgemäße Beispiele bis auf Beispiel 2.1)**

| Einfluss des Zusatzes einer Schwefelverbindung auf die TPP- und TPP=O-Gehalte von hydriertem NBR bei Zusatz zur chlorbenzolischen HNBR-Lösung vor Wasserdampfdestillation; ohne vorhergehende Rhodiumabtrennung) | | | | | | | |
|---|---|---|---|---|---|---|---|
| **Nr.** | **Zusatz der Schwefelverbindung** | | | | **Gehalte im HNBR nach Aufarbeitung** | | |
| | **Art** | **Menge pro 100 g HNBR 100** | | **Molverhältnis TPP/ Schwefelverbindung** | **TPP** | **TPP=O** | **Gesamt-Halosen** |
| | | **mg** | **mg** | | **Gew.%** | **Gew.%** | **ppm** |
| 2.1 | - | - | - | - | 0,83 | 0,16 | |

(fortgesetzt)

| Einfluss des Zusatzes einer Schwefelverbindung auf die TPP- und TPP=O-Gehalte von hydriertem NBR bei Zusatz zur chlorbenzolischen HNBR-Lösung vor Wasserdampfdestillation; ohne vorhergehende Rhodiumabtrennung) | | | | | | | |
|---|---|---|---|---|---|---|---|
| **Nr.** | **Zusatz der Schwefelverbindung** | | | | **Gehalte im HNBR nach Aufarbeitung** | | |
| | **Art** | **Menge pro 100 g HNBR 100** | | **Molverhältnis TPP/ Schwefelverbindung** | **TPP** | **TPP=O** | **Gesamt-Halosen** |
| | | **mg** | **mg** | | **Gew.%** | **Gew.%** | **ppm** |
| 2.2* | CBS | 124 | 0,47 | 8/1 | 0,57 | 0,41 | 750 |
| 2.3* | CBS | 254 | 0,96 | 4/1 | 0,44 | 0,56 | 710 |
| 2.4* | CBS | 502 | 1,9 | 2/1 | 0,2 | 0,73 | 820 |
| 2.5* | CBS | 1005 | 3,8 | 1/1 | <0,01 | 1,1 | 570 |
| 2.6* | TBBS | 908 | 3,8 | 1/1 | <0,01 | 1,07 | 700 |

**Tabelle 3: Versuchsserie 3 (erfindungsgemäß bis auf Beispiel 3.1)**

| Einfluss des Zusatzes einer Schwefelverbindung auf die TPP- und TPP=O-Gehalte von hydriertem Nitrilkautschuk bei Zusatz zur chlorbenzolischen HNBR-Lösung vor Wasserdampfdestillation; mit vorhergehender Rhodiumabtrennung) | | | | | | | |
|---|---|---|---|---|---|---|---|
| ***Nr.*** | **Zusatz der Schwefelverbindung** | | | | **Gehalte im HNBR nach Aufarbeitung** | | |
| | **Art** | **Menge pro 100 g HNBR** | | **Molverhältnis TPP/ Schwefelverbindung** | **TPP** | **TPP=O** | **GesamtHalogen** |
| | | **[mg]** | **[mg]** | | **Gew.%** | **Gew.%** | **ppm** |
| 3.1 | - | - | - | - | 0,82 | 0,18 | 710 |
| 3.2* | TDDM | 770 | 3,8 | 1/1 | 0,74 | 0,37 | 580 |
| 3.3* | MBT | 635 | 3,8 | 1/1 | 0,59 | 0,50 | 570 |
| 3.4* | CBS | 1005 | 3,8 | 1/1 | <0,01 | 0,99 | 600 |
| 3.5* | TBBS | 908 | 3,8 | 1/1 | <0,01 | 0,95 | 580 |

**Tabelle 4: Versuchsserie 4 (erfindungsgemäß bis auf Beispiel 4.1)**

| Einfluss des Zusatzes einer Schwefelverbindung auf die Gehalte an TPP und TPP=O von hydriertem Nitrilkautschuk bei vorhergehender Rhodiumabtrennung (Einarbeitung der Schwefelverbindung auf der Walze) | | | | | | | |
|---|---|---|---|---|---|---|---|
| **Nr.:** | **Zusatz der Schwefelverbindung** | | | | **Gehalte im HNBR nach Aufarbeitung** | | |
| | **Art** | **Menge pro 100 g HNBR** | | **Molverhältnis TPP/ Schwefelverbindung** | **TPP** | **TPP=O** | **GesamtHalogen** |
| | | **mg** | **mg** | | **Gew.%** | **Gew.%** | **ppm** |
| 4.1 | - | - | - | - | 1,73 | 0,16 | 46 |
| 4.2* | CBS | 2016 | 7,63 | 1/1 | 0,05 | 1,77 | 48 |
| 4.3* | CBS | 1008 | 3,81 | 2/1 | 0,48 | 1,57 | 45 |
| 4.4* | TBBS | 1815 | 7,61 | 1/1 | 0,08 | 2,17 | 48 |
| 4.5* | TBBS | 907 | 3,80 | 2/1 | 0,55 | 1,67 | 45 |
| 4.6* | MOZ | 1922 | 7,63 | 1/1 | 0,20 | 1,90 | 44 |

(fortgesetzt)

| Einfluss des Zusatzes einer Schwefelverbindung auf die Gehalte an TPP und TPP=O von hydriertem Nitrilkautschuk bei vorhergehender Rhodiumabtrennung (Einarbeitung der Schwefelverbindung auf der Walze) | | | | | | | |
|---|---|---|---|---|---|---|---|
| Nr.: | Zusatz der Schwefelverbindung | | | | Gehalte im HNBR nach Aufarbeitung | | |
| | Art | Menge pro 100 g HNBR | | Molverhältnis TPP/ Schwefelverbindung | TPP | TPP=O | GesamtHalogen |
| | | mg | mg | | Gew.% | Gew.% | ppm |
| 4.7* | MOZ | 961 | 3,81 | 2/1 | 0,45 | 1,70 | 45 |

**Tabelle 5a: Versuchsserie 5a (erfindungsgemäß bis auf Beispiel 5.1)**

| Gehalte an TPP und TPP=O von hydriertem Nitrilkautschuk (hydrierter Nitrilkautschuk mit 3 Gew.% TPP (11,44 mmol/100g HNBR) mit Rhodiumabtrennung | | | | | | | | |
|---|---|---|---|---|---|---|---|---|
| Nr. | Schwefelverbindung | | | | | Gehalte im HNBR | | |
| | Art | Menge pro 100 g HNBR | | Molverhältnis TPP/ Sehwefelverbindung | Art der Zugabe | TPP | TPP=O | GesamtHalogen |
| | | mg | mmol | | | Gew. % | Gew.% | ppm |
| 5.1 | - | - | - | - | - | 2,45 | 0,19 | 49 |
| 5.2* | CBS | 3,327 | 12,60 | 0,9/1 | Walze | <0,01 | 2,35 | 59 |
| 5.3* | CBS | 3,024 | 11,45 | 1/1 | Walze | <0,01 | 2,42 | 52 |
| 5.4* | CBS | 2,722 | 10,31 | 1,1/1 | Walze | <0,01 | 2,48 | 55 |
| 5.5* | TBBS | 2,727 | 11,46 | 1/1 | Walze | <0,01 | 3,20 | 53 |
| 5.6* | TBBS | 1,364 | 5,73 | 2/1 | Walze | 0,76 | 2,37 | 51 |
| 5.7* | MOZ | 2,822 | 10,29 | 1/1 | Strippen | <0,01 | 3,16 | 110 |

Von den hydrierten Nitrilkautschuken der **Versuchsserie 5a** wurden Kautschukmischungen hergestellt, die anschließend vulkanisiert wurden. Die Eigenschaften der Kautschukmischungen und der Vulkanisate sind in **Versuchsserie 5b** zusammengefasst.

**Tabelle 5b: Versuchsserie 5b (erfindungsgemäß bis auf Beispiel 5.1)**

| Mischungs-und Vulkanisateigenschaften der hydrierten Nitrilkautschuke aus Versuchsserie 5a | | | | | | | | |
|---|---|---|---|---|---|---|---|---|
| **Produkt von Beispiel** | | **5.1** | **5.2*** | **5.3*** | **5.4*** | **5.5*** | **5.6*** | **5.7*** |
| **TPP-Zusatz bei Hydrierung** | **phr** | **3,0** | **3,0** | **3,0** | **3,0** | **3,0** | **3,0** | **3,0** |
| **Mischungs-Eigenschaften** | | | | | | | | |
| ML1+4 @100°C | ME | 106 | 107 | 111 | 116 | 112 | 107 | 104 |
| **Vulkameter bei 180°C (Moving Die Rheometer)** | | | | | | | | |
| $t_{10}$ | sec. | 36 | 35 | 34 | 33 | 36 | 35 | 37 |
| $t_{50}$ | sec. | 116 | 93 | 94 | 96 | 99 | 106 | 102 |
| $t_{90}$ | sec. | 369 | 280 | 287 | 292 | 300 | 308 | 301 |
| $t_{95}$ | sec. | 493 | 370 | 380 | 385 | 402 | 398 | 395 |
| $t_{90}$-$t_{10}$ | sec. | 333 | 245 | 253 | 259 | 264 | 273 | 264 |
| $F_{min}$ | dNm | 2,06 | 2,03 | 2,18 | 2,34 | 2,22 | 2,16 | 2,04 |

(fortgesetzt)

| Vulkameter bei 180°C (Moving Die Rheometer) | | | | | | | | |
|---|---|---|---|---|---|---|---|---|
| $F_{max}$ | dNm | 24,3 | 26,3 | 26,5 | 26,6 | 28,6 | 27,1 | 26,6 |
| $F_{max}$ - $F_{min}$ | dNm | 22,24 | 24,27 | 24,32 | 24,26 | 26,38 | 24,94 | 24,56 |
| **Vulkanisation bei 14 min/180°C (ohne Wärmelagerung vor Vulkanisatcharakterisierung)** | | | | | | | | |
| Shore A Härte (23°C) | | 68,5 | 69,6 | 69,9 | 70,2 | 70,7 | 70,7 | 69,6 |
| Shore A Härte (70°C) | | 64 | 65,5 | 66 | 65,8 | 67 | 67,7 | 66 |
| Rückprallelastizität bei 23°C | % | 45,5 | 42,8 | 42,7 | 42,8 | 43,0 | 43,2 | 43,2 |
| Rückprallelastizität bei 70°C | % | 56,6 | 57,8 | 58,2 | 57,9 | 59,5 | 57,7 | 57,7 |
| $\sigma_{50}$ | MPa | 1,9 | 2,0 | 2,0 | 2,0 | 2,1 | 2,0 | 1,9 |
| $\sigma_{100}$ | MPa | 4,4 | 5,0 | 5,0 | 5,1 | 5,6 | 5,3 | 5,0 |
| $\sigma_{200}$ | MPa | 15,1 | 15,9 | 16,0 | 16,4 | 17,5 | 17,5 | 16,7 |
| $\sigma_{300}$ | MPa | 23,5 | 25,0 | 25,1 | 25,4 | 26,2 | 26,9 | 25,3 |
| Zugfestigkeit | MPa | 25,5 | 27,5 | 27,7 | 27,8 | 26,1 | 27,8 | 27,8 |
| $\varepsilon_b$ | % | 334 | 342 | 340 | 335 | 295 | 319 | 345 |
| CS (70 h/23°C) DIN 53517; Probekörper 1 | % | 13,5 | 12,0 | 11,2 | 11,1 | 10,5 | 10,1 | 11,4 |

**Tabelle 6a: Versuchsserie 6a (erfindungsgemäß bis auf Beispiel 6.1)**

| Zusatz von TPP=O zu hydriertem Nitrilkautschuk (Zusatz auf der Walze) | | | | | | |
|---|---|---|---|---|---|---|
| **Versuchs-Nr.** | | **6.1=1.1** | **6.2*** | **6.3*** | **6.4*** | **6.5*** |
| TPP-Zusatz bei Hydrierung | phr | 0 | 0 | 0 | 0 | 0 |
| TPP=O-Zusatz bei Mischungsherstellung | [phr | 0 | 0,3 | 0,5 | 1,0 | 2,0 |
| Analytisch bestimmter TPP-Gehalt | Gew.% | <0,01 | <0,01 | <0,01 | <0,01 | <0,01 |
| Analytisch bestimmter TPP=O-Gehalt | Gew.% | <0,01 | 0,29 | 0,48 | 0,99 | 2,01 |

**Tabelle 6b: Versuchsserie 6b (erfindungsgemäße Beispiele bis auf Beispiel 6.1)**

| Vulkanisateigenschaften der in Versuchsserie 6a hergestellten hydrierten Nitrilkautschuke | | | | | | |
|---|---|---|---|---|---|---|
| **Versuchs-Nr.** | | **6.1=1.1** | **6.2*** | **6.3*** | **6.4*** | **6.5*** |
| **Mischungs-Eigenschaften** | | | | | | |
| ML1+4 @ 100°C | ME | 125 | 118 | 121 | 121 | 119 |
| ML1+4 @ 120°C | ME | 84 | 84 | 87 | 86 | 84 |
| **Vulkameter bei 180°C (Bayer-Frank-Vulkameter)** | | | | | | |
| $t_{10}$ | min | 1,4 | 1,4 | 1,4 | 1,4 | 1,4 |
| $t_{90}$ | min | 7,1 | 7,2 | 7,1 | 6,9 | 7,4 |
| $t_{90}$ - $t_{10}$ | min | 5,7 | 5,8 | 5,7 | 5,5 | 6,0 |
| $F_{min}$ | cN | 236 | 230 | 209 | 209 | 197 |
| $F_{max}$ | cN | 5107 | 5015 | 4898 | 4866 | 4939 |
| $F_{max}$-$F_{min}$ | cN | 4871 | 4785 | 4689 | 4657 | 4742 |

(fortgesetzt)

| **Vulkanisateigenschaften (Vulkanisation bei 15 min/180°C; Temperung bei 6 h/150°C)** | | | | | | |
|---|---|---|---|---|---|---|
| Shore A Härte (23°C) | | 73 | 72 | 72 | 73 | 72 |
| Shore A Härte (70°C) | | 71 | 71 | 70 | 71 | 70 |
| Rückprallelastizität bei 23°C | % | 35 | 35 | 34 | 34 | 34 |
| Rückprallelastizität bei 70°C | % | 56 | 53 | 52 | 54 | 54 |
| $\sigma_{50}$ | MPa | 2,5 | 2,3 | 2,4 | 2,4 | 2,3 |
| $\sigma_{100}$ | MPa | 6,1 | 6,2 | 6,6 | 6,8 | 6,4 |
| $\sigma_{200}$ | MPa | 18,7 | 19,4 | 20 | 19,9 | 19,5 |
| Zugfestigkeit | MPa | 27,3 | 28,8 | 29,1 | 29,1 | 28,5 |
| $\varepsilon_b$ | % | 310 | 305 | 300 | 300 | 295 |
| CS (70 h/150°C) Probekörper 1 | % | 30,5 | 28,5 | 27,0 | 27,2 | 26,9 |
| CS (70 h/150°C) Probekörper 2 | % | 19,3 | 19,1 | 18,3 | 18,9 | 18,5 |

## Patentansprüche

1. **Verfahren zur Herstellung hydrierter Nitrilkautschuke** mit

   i) einem Gehalt an Phosphanen, Diphosphanen oder Mischungen davon im Bereich von 0 bis 1,0 Gew.%, bezogen auf den hydrierten Nitrilkautschuk,
   ii) einem Gehalt an Phosphanoxiden, Diphosphanoxidenoder Mischungen davon im Bereich von 0,25 bis 6 Gew.%, bezogen auf den hydrierten Nitrilkautschuk, sowie
   iii) einem Gesamthalogengehalt im Bereich von 25 bis 10.000 ppm,

   **dadurch gekennzeichnet, dass** man hydrierten Nitrilkautschuk, der einen Gehalt an Phosphanen, Diphosphanen oder Mischungen davon in einem Bereich von 0,15-5 Gew.%, bezogen auf den hydrierten Nitrilkautschuk besitzt, mit mindestens einer Schwefelverbindung, die keine zwei direkt kovalent miteinander verbundene Schwefelatome aufweist, umsetzt.

2. **Verfahren** nach Anspruch 1, **dadurch gekennzeichnet, dass** mindestens eine der Schwefelverbindungen der allgemeinen Strukturformeln (1) - (10) eingesetzt wird

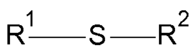
(1)
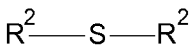
(2)
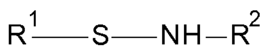
(3)
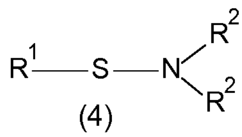
(4)

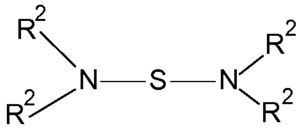
(5)
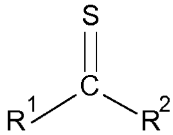
(6)
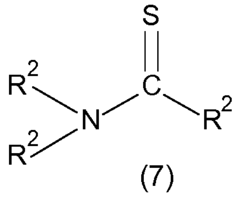
(7)

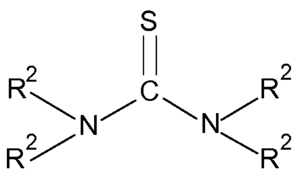
(8)

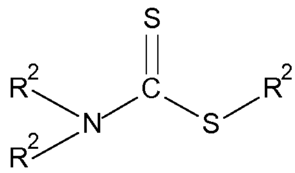
(9)

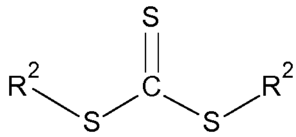
(10)

worin

**$R^1$** ein linearer oder verzweigter, aliphatischer, cycloaliphatischer oder aromatischer Rest sein kann, der bis zu 10 Heteroatome ausgewählt aus der Gruppe bestehend aus Stickstoff, Sauerstoff, Schwefel und Phosphor enthalten kann, unter der Maßgabe, dass dann, wenn Schwefel als Heteroatom enthalten ist, dieser in der Verbindung nicht unmittelbar an ein weiteres Schwefelatom angrenzt,

**$R^2$** gleich oder verschieden sind und für Wasserstoff, ein Alkalimetall, Erdalkalimetall, Ammonium oder substituiertes Ammonium, Phosphonium oder substituiertes Phosphonium, oder einen linearen, verzweigten, aliphatischen, cycloaliphatischen oder aromatischen Rest, der bis zu 10 Heteroatome ausgewählt aus der Gruppe bestehend aus Stickstoff, Sauerstoff, Schwefel und Phosphor enthalten kann, ebenfalls unter der Maßgabe, dass dann, wenn Schwefel als Heteroatom enthalten ist, dieser in der Verbindung nicht unmittelbar an ein weiteres Schwefelatom angrenzt, steht, oder alternativ

**$R^1$ und $R^2$ oder aber zwei $R^2$** unter Einbindung der Atome, an die sie gebunden sind, einen Cyclus bilden können.

3. **Verfahren** nach Anspruch 1 oder 2, **dadurch gekennzeichnet, dass** mindestens eine Schwefelverbindung, die keine zwei direkt miteinander verbundenen Schwefel-Atome aufweist, ausgewählt aus der Gruppe bestehend n-Butylmercaptan, tert-Butylmercaptan, n-Hexylmercaptan, n-Dodecylmercaptan, tert.-Dodecylmercaptan, Benzylmercaptan, Dibenzylsulfid, 2-Mercaptobenzthiazol, 2- Morpholinobenzthiazol, N-Cyclohexyl-2-benzthiazylsulfenamid, N, N-Dicyclohexylbenzthiazylsulfenamid, N-tert.Butyl-2-benzthiazylsulfenamid und N-Cyclohexylthiophthalimid eingesetzt wird.

4. **Verfahren** nach einem der Ansprüche 1 bis 3, **dadurch gekennzeichnet, dass** die molare Menge an Schwefelverbindung (berechnet als S) 5 bis 300%, bevorzugt 50 bis 150% und besonders bevorzugt 75 bis 125% der molaren Menge des Phosphans oder Diphosphans beträgt.

5. **Verfahren** nach einem der Ansprüche 1 bis 4, **dadurch gekennzeichnet, dass** die Phosphane bzw. Diphosphane vorzugsweise zu mindestens 50 mol%, besonders bevorzugt zu mindestens 80 mol%, insbesondere zu mindestens 95 mol% bis 100 mol% in Phosphan- bzw. Diphosphanoxide umgewandelt werden.

6. **Verfahren** nach einem der Ansprüche 1 bis 5, **dadurch gekennzeichnet, dass**

(1) zunächst ein Nitrilkautschuk einer katalytischen Hydrierung in organischer Lösung und in Gegenwart eines Phosphans oder Diphosphans unterzogen wird, wobei das Phosphan oder Diphosphan entweder (a) als Ligand im Hydrierkatalysator vorliegt ohne weiteren Zusatz von Phosphan oder Diphosphan als Co-Katalysator, oder (b) als Ligand im Hydrierkatalysator vorliegt und zusätzlich noch als Co-Katalysator zugesetzt wird, oder (c) als Cokatalysator zugesetzt wird, der Hydrierkatalysator jedoch kein Phosphan oder Diphosphan als Ligand(en) aufweist, und

(2) anschließend der erhaltene hydrierte Nitrilkautschuk entweder vor, während oder nach der Isolierung in einem separaten Mischvorgang mit mindestens einer Schwefelverbindung, die keine zwei direkt kovalent miteinander verbundenen Schwefelatome aufweist, in Kontakt gebracht und umgesetzt wird.

7. **Verfahren** nach Anspruch 6, **dadurch gekennzeichnet, dass** der Hydrierkatalysator ausgewählt ist aus der Gruppe bestehend aus Tris(triphenylphosphan)rhodium-(I)-chlorid, Tris(tripenylphosphan) rhodium-(III)-chlorid, Tris(dimethylsulfoxid)rhodium-(III)-chlorid, Hydridorhodiumtetrakis(triphenylphosphan) und den entsprechenden Verbindungen, in denen Triphenylphosphin ganz oder teilweise durch Tricyclohexylphosphin ersetzt ist.

## Claims

1. Process for producing hydrogenated nitrile rubbers having

   i) a content of phosphines, diphosphines or mixtures thereof within the range from 0 to 1.0% by weight, based on the hydrogenated nitrile rubber,
   ii) a content of phosphine oxides, diphosphine oxides or mixtures thereof in the range from 0.25 to 6% by weight, based on the hydrogenated nitrile rubber, and
   iii) a total halogen content in the range from 25 to 10 000 ppm,

   **characterized in that** hydrogenated nitrile rubber having a content of phosphines, diphosphines or mixtures thereof within a range of 0.15-5% by weight, based on the hydrogenated nitrile rubber, is reacted with at least one sulphur compound which does not have two sulphur atoms covalently bonded directly to one another

2. Process according to Claim 1, **characterized in that** at least one of the sulphur compounds of the general formulae (1)-(10) is used

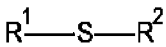
(1)

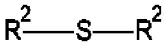
(2)

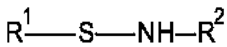
(3)

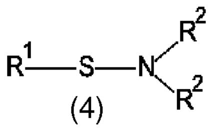
(4)

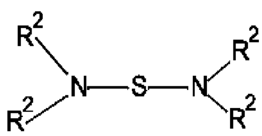
(5)

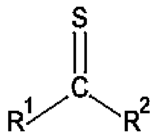
(6)

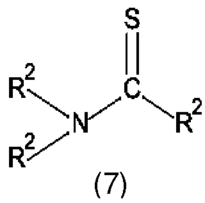
(7)

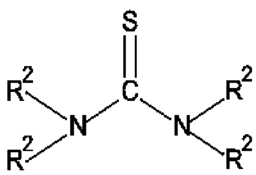
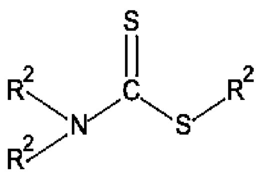
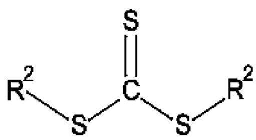

(8) (9) (10)

   in which

   R1 may be a linear or branched, aliphatic, cycloaliphatic or aromatic radical which may contain up to 10 heteroatoms selected from the group consisting of nitrogen, oxygen, sulphur and phosphorus, with the proviso that, when sulphur is present as heteroatom, it does not directly adjoin any further sulphur atom in the compound,
   R2 is the same or different and is hydrogen, an alkali metal, alkaline earth metal, ammonium or substituted ammonium, phosphonium or substituted phosphonium, or a linear, branched, aliphatic, cycloaliphatic or aromatic radical which may contain up to10 heteroatoms selected from the group consisting of nitrogen, oxygen, sulphur and phosphorus, likewise with the proviso that, when sulphur is present as heteroatom, it does not directly adjoin any further sulphur atom in the compound, or alternatively
   R1 and $R^2$ or else two $R^2$ may form a cyclic system incorporating the atoms to which they are bonded.

3. Process according to Claim 1 or 2, **characterized in that** at least one sulphur compound which does not have two sulphur atoms bonded directly to one another and is selected from the group consisting of n-butyl mercaptan, tert-butyl mercaptan, n-hexyl mercaptan, n-dodecyl mercaptan, tert-dodecyl mercaptan, benzyl mercaptan, dibenzyl sulphide, 2-mercaptobenzothiazole,
2-morpholinobenzothiazole, N-cyclohexyl-2-benzothiazylsulphenamide, N,N-dicyclohexylbenzothiazylsulphenamide, N-tert-butyl-2-benzothiazylsulphenamide and N-cyclohexylthiophthalimide is used.

4. Process according to any of Claims 1 to 3, **characterized in that** the molar amount of sulphur compound (calculated as S) is 5 to 300%, preferably 50 to 150% and more preferably 75 to 125% of the molar amount of the phosphine or diphosphine.

5. Process according to any of Claims 1 to 4, **characterized in that** the phosphines or diphosphines are converted to phosphine oxides or diphosphine oxides preferably to an extent of at least 50 mol%, more preferably to an extent of at least 80 mol%, especially to an extent of at least 95 mol% to 100 mol%.

6. Process according to any of Claims 1 to 5, **characterized in that**

   (1) a nitrile rubber is first subjected to a catalytic hydrogenation in organic solution and in the presence of a phosphine or diphosphine, the phosphine or diphosphine (a) being present as a ligand in the hydrogenation catalyst without further addition of phosphine or diphosphine as a cocatalyst or (b) being present as a ligand in the hydrogenation catalyst and additionally being added as a cocatalyst, or (c) being added as a cocatalyst, but with no phosphine or diphosphine present as ligand(s) in the
   hydrogenation catalyst, and
   (2) then the hydrogenated nitrile rubber obtained, before, during or after the isolation, is contacted with and reacted with the at least one sulphur compound which does not have two sulphur atoms covalently bonded directly to one another in a separate mixing operation.

7. Process according to Claim 6, **characterized in that** the hydrogenation catalyst is selected from the group consisting of tris(triphenylphosphine)rhodium(I) chloride, tris(triphenylphosphine)rhodium(III) chloride, tris(dimethyl sulphoxide)rhodium(III) chloride, hydridorhodiumtetrakis(triphenylphosphine) and the corresponding compounds in which triphenylphosphine has been replaced wholly or partly by tricyclohexylphosphine.

**Revendications**

1. Procédé de fabrication de caoutchoucs de nitrile hydrogénés, présentant :

   i) une teneur en phosphanes, en diphosphanes ou en mélanges de ceux-ci dans la plage allant de 0 à 1,0 % en poids, par rapport au caoutchouc de nitrile hydrogéné,
   ii) une teneur en oxydes de phosphane, en oxydes de diphosphane ou en mélanges de ceux-ci dans la plage allant de 0,25 à 6 % en poids, par rapport au caoutchouc de nitrile hydrogéné, et
   iii) une teneur totale en halogène dans la plage allant de 25 à 10 000 ppm,

   **caractérisé en ce qu'**un caoutchouc de nitrile hydrogéné, qui présente une teneur en phosphanes, en diphosphanes ou en mélanges de ceux-ci dans une plage allant de 0,15 à 5 % en poids, par rapport au caoutchouc de nitrile hydrogéné, est mis en réaction avec au moins un composé de soufre, qui ne comprend pas deux atomes de soufre reliés directement l'un avec l'autre par une liaison covalente.

2. Procédé selon la revendication 1, **caractérisé en ce qu'**au moins un des composés de soufre des formules structurales générales (1) à (10) est utilisé :

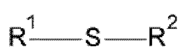 (1) 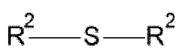 (2) 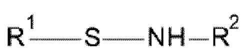 (3) 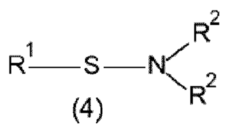 (4)

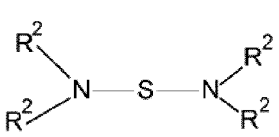
(5)

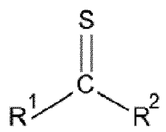
(6)

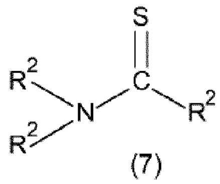
(7)

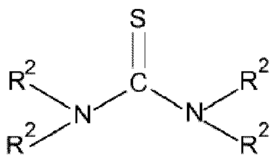
(8)

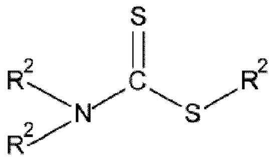
(9)

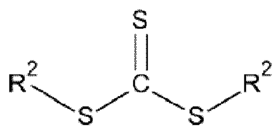
(10)

dans lesquelles

$R^1$ peut être un radical aliphatique, cycloaliphatique ou aromatique linéaire ou ramifié, qui peut contenir jusqu'à 10 hétéroatomes choisis dans le groupe constitué par l'azote, l'oxygène, le soufre et le phosphore, à condition que lorsque du soufre est contenu en tant qu'hétéroatome, celui-ci ne soit pas directement adjacent à un autre atome de soufre dans le composé,
les $R^2$ sont identiques ou différents, et représentent l'hydrogène, un métal alcalin, un métal alcalino-terreux, l'ammonium ou un ammonium substitué, le phosphonium ou un phosphonium substitué, ou un radical aliphatique, cycloaliphatique ou aromatique, linéaire, ramifié, qui peut contenir jusqu'à 10 hétéroatomes choisis dans le groupe constitué par l'azote, l'oxygène, le soufre et le phosphore, également à condition que lorsque du soufre est contenu en tant qu'hétéroatome, celui-ci ne soit pas directement adjacent à un autre atome de soufre dans le composé, ou en variante,
$R^1$ et $R^2$ ou deux $R^2$ peuvent former un cycle en incluant les atomes auxquels ils sont reliés.

3. Procédé selon la revendication 1 ou 2, **caractérisé en ce qu'**au moins un composé de soufre, qui ne comprend pas deux atomes de soufre reliés directement l'un avec l'autre, choisi dans le groupe constitué par le n-butylmercaptan, le tert-butylmercaptan, le n-hexylmercaptan, le n-dodécylmercaptan, le tert.-dodécylmercaptan, le benzylmercaptan, le sulfure de dibenzyle, le 2-mercaptobenzothiazole, le 2-morpholinobenzothiazole, le N-cyclohexyl-2-benzothiazylsulfénamide, le N,N-dicyclohexylbenzothiazylsulfénamide, le N-tert.-butyl-2-benzothiazylsulfénamide et le N-cyclohexylthiophthalimide est utilisé.

4. Procédé selon l'une quelconque des revendications 1 à 3, **caractérisé en ce que** la quantité molaire de composé de soufre (calculée en tant que S) est de 5 à 300 %, de préférence de 50 à 150 % et de manière particulièrement préférée de 75 à 125 % de la quantité molaire de phosphane ou de diphosphane.

5. Procédé selon l'une quelconque des revendications 1 à 4, **caractérisé en ce que** les phosphanes ou diphosphanes sont transformés de préférence à hauteur d'au moins 50 % en moles, de manière particulièrement préférée à hauteur d'au moins 80 % en moles, notamment à hauteur d'au moins 95 % en moles à 100 % en moles, en oxydes de phosphane ou diphosphane.

6. Procédé selon l'une quelconque des revendications 1 à 5, **caractérisé en ce que**

(1) un caoutchouc de nitrile est tout d'abord soumis à une hydrogénation catalytique dans une solution organique et en présence d'un phosphane ou diphosphane, le phosphane ou diphosphane soit (a) se présentant sous la forme d'un ligand dans le catalyseur d'hydrogénation sans ajout supplémentaire de phosphane ou de diphosphane en tant que co-catalyseur, soit (b) se présentant sous la forme d'un ligand dans le catalyseur d'hydrogénation et étant en outre ajouté en tant que co-catalyseur, soit (c) étant ajouté en tant que co-catalyseur, le catalyseur d'hydrogénation ne comprenant toutefois par de phosphane ou diphosphane en tant que ligand(s), et
(2) le caoutchouc de nitrile hydrogéné obtenu est ensuite mis en contact et mis en réaction avant, pendant ou après l'isolement dans un processus de mélange séparé avec au moins un composé de soufre, qui ne comprend pas deux atomes de soufre directement reliés l'un avec l'autre par une liaison covalente.

7. Procédé selon la revendication 6, **caractérisé en ce que** le catalyseur d'hydrogénation est choisi dans le groupe

constitué par le chlorure de tris(triphénylphosphane)-rhodium (I), le chlorure de tris(triphénylphosphane)-rhodium (III), le chlorure de tris(diméthylsulfoxyde)-rhodium (III), l'hydrido-rhodium-tétrakis(triphénylphosphane) et les composés correspondants, dans lesquels la triphénylphosphine est remplacée en totalité ou en partie par de la tricyclohexylphosphine.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 2539132 A
- US 4965323 A
- US 4503196 A
- DE 3921264 A
- WO 2004101671 A
- EP 1894946 A
- EP 1083197 A
- EP 1524277 A
- EP 0134023 A
- EP 134023 A
- US 5244965 A
- US 5344965 A
- CN 1763107 A
- CN 1483744 A
- EP 0298386 A
- WO 03011455 A
- WO 9604289 A
- WO 9706185 A
- US 20020107138 A1
- WO 2004035596 A
- US 2007043180 A
- WO 2003011455 A1
- WO 2003087167 A2
- EP 2027920 A
- US 20070043180 A
- US 6084033 A
- US 3700637 A
- DE 3541689 A
- DE 3540918
- DE 3529252 A
- DE 3433392 A
- US 4464515 A
- EP 1720920 A
- US 6683136 A
- EP 0897933 A
- US 6522408 A
- US 4985540 A
- WO 9701597 A
- US 4857571 A
- US 4826721 A
- EP 2238177 A
- EP 1369436 A
- WO 02100905 A

### In der Beschreibung aufgeführte Nicht-Patentliteratur

- Ullmann's Encyclopedia of Industrial Chemistry. VCH Verlagsgesellschaft, 1993, 255-261, 320-324
- *Chem. Eur. J.,* 2008, vol. 14, 9491-9494
- *Angew. Chem. Int. Ed.,* 2003, vol. 42, 4592
- *Eur. J. Org. Chem,* 2003, 963-966
- *Angew. Chem. Int. Ed.,* 2002, vol. 41, 4038
- *J. Org. Chem.,* 2004, vol. 69, 6894-96
- *Chem. Eur. J,* 2004, vol. 10, 777-784
- *Angew. Chem. Int. Ed.,* 2004, vol. 43, 6161-6165
- *Organometallics,* 2001, vol. 20, 5314
- **D. BRÜCK.** *Kautschuke + Gummi, Kunststoffe,* 1989, vol. 42 (2), 107-110
- *Kautschuke + Gummi, Kunststoffe,* 1989, vol. 42 (3), 194-197
- *Kautschuk + Gummi. Kunststoffe,* 1989, vol. 42 (2), 107-110
- *Kautschuk + Gummi. Kunststoffe,* 1989, vol. 42 (3), 194-197